# EUROPÄISCHE PATENTSCHRIFT

(11) **EP 3 352 894 B1**
(45) Veröffentlichungstag und Bekanntmachung des Hinweises auf die Patenterteilung: **25.03.2020**
(21) Anmeldenummer: 16794500.5
(22) Anmeldetag: 21.09.2016
(51) Int. Cl.: B01J 8/00

(54) **UMWELTFREUNDLICHE SELBSTSTANDIG REGELBARE ANLAGE KONTINUIERLICHEN ERZEUGUNG VON PFLANZENKOHLE MIT GROSSER AUSBEUTE, GLEICHBLEIBEND HOHER GÜTE AUS BIOMASSE UND VERFAHREN ZUR ERZEUGUNG DERSELBEN**
ENVIRONMENTALLY-FRIENDLY, SELF-REGULATING SYSTEM FOR CONTINUOUSLY PRODUCING BIOCHAR WITH A HIGH YIELD AND CONSISTENTLY HIGH QUALITY FROM BIOMASS AND METHOD FOR PRODUCING SAID BIOCHAR
SYSTEME ECOLOGIQUE RÉGLABLE INDÉPENDAMMENT POUR LA PRODUCTION EN CONTINU DE CHARBON VÉGÉTAL AVEC UN RENDEMENT ÉLEVÉ ET UNE GRANDE QUALITÉ CONSTANTE À PARTIR DE BIOMASSE ET PROCÉDÉ DE PRODUCTION DE CELUI-CI

(30) Priorität: 24.09.2015 DE 102015012593; 18.05.2016 DE 102016006231
(43) Veröffentlichungstag der Anmeldung: 01.08.2018
(73) Patentinhaber: Nienhaus, Hugo, 46414 Rhede (DE)
(72) Erfinder: Nienhaus, Hugo, 46414 Rhede (DE)
(74) Vertreter: Gehrke, Peter P.
(86) Internationale Anmeldenummer: PCT/DE2016/000351
(87) Internationale Veröffentlichungsnummer: WO 2017/050310

(56) Entgegenhaltungen:
- EP-A1- 0 343 407
- DE-A1- 3 323 675
- DE-A1-102009 030 013
- DE-T2- 69 916 328
- FR-A- 1 061 250
- US-A- 4 437 613
- US-A- 5 971 690

## Beschreibung

Die Erfindung betrifft eine umweltfreundliche selbstständig regelbare Anlage zur kontinuierlichen Erzeugung von Pflanzenkohle aus einer Biomasseteilchen in einer Schüttung als Wanderbett mit einem Schachtreaktor mit einem ein Kopfende und ein Fußende umfassenden Schachtreaktormantel zur Aufnahme der Pflanzenkohle, mindestens einer Teilchenfördereinrichtung zur Beförderung der Biomasseteilchen in den Schachtreaktor, mindestens einer Belüftungsdosiereinrichtung zur Zuführung der Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ein Gitter in einem Inneren des Schachtreaktors in einem Übergangsbereich zwischen dem mittigen Abschnitt des Schachtreaktors und dem Fußende zur Abstützung der Schüttung angeordnet ist, das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr, über welches Luft von außen zuführbar ist, verbunden ist, die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist, und ein kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor der umweltfreundlichen selbstständig regelbaren Anlage.

Unter Biomasse werden im Sinne der Erfindung auch verstanden organische Stoffe und deren Teilchen, wie Abfälle aus Küche und Landwirtschaft, wie Gülle oder tierischer Mist, Klärkuchen, Gärreste oder Klärschlämme aus Kläranlagen, die getrocknet und zu Stücklingen, z.B. Gülle- oder Miststücklingen, gepresst und/ oder Pflanzen, pflanzliche Stoffe, wie Holz, usw., die zu Teilchen, wie Holzteilchen, zerkleinert sind.

Auch kann die Biomasse kunststoffartige Materialien enthalten, deren Anteil auch von gesetzlichen Regelungen und/ oder verfahrenstechnischen Gründen bestimmt sein kann. Des Weiteren kann die Biomasse auch Kohlebestandteile enthalten oder solche gar sein.

Im Stand der Technik sind verschiedene Verfahren zur Herstellung von Holzkohle aus Holz bekannt. So wird Holz bei einer beschränkten Luftzufuhr, wie in einem unterstöchiometrischen Verhältnis, oder bei einem vollkommenen Luftabschluss einer hohen Temperatur ausgesetzt. In dem ersteren Fall wird nach OTTO LUEGERS LEXIKON DER GESAMTEN TECHNIK, 2. Band, Deutsche Verlags-Anstalt, Stuttgart, Leipzig 1894, Seiten 669 bis 671 der Vorgang als Verkohlung, in dem zweiten Fall als trockene Destillation oder Pyrolyse bezeichnet nach RÖMPP LEXIKON Chemie, Georg Thieme Verlag, Stuttgart, New York, 1999 Seiten 3647 bis 3648. Beide Verfahren sind einander insofern ähnlich, als Holz einer hohen Temperatur ausgesetzt wird, gleichwohl wird bei der Verkohlung das Hauptgewicht auf die Bereitstellung nichtflüchtiger Produkte, wie Holzkohle, gelegt, während bei der trockenen Destillation in erster Linie die Herstellung flüchtiger Produkte, wie gas- oder dampfförmiger bzw. flüssiger Stoffe wesentlich ist.

Im Fall der Erhitzung stückigen Holzes entweicht zuerst Dampf, mit ansteigender Temperatur verflüchtigen sich kohlenstoffhaltige gasförmige Stoffe, wie Methanol, H₂, Methan und Kohlenmonoxid, Ethylen, sowie die dampfförmigen Stoffe, die nach Abkühlung z.B. zu Essigsäure, Holzteer, sich verflüssigen können, deren Bildung auf eine tiefgreifende Zerstörung der Holzsubstanz zurückzuführen ist. Nach Beendigung der Zersetzung durch Hitze hinterbleibt Holzkohle.

Das Verfahren der Holzverkohlung wird auch als Meilerverkohlung bezeichnet, bei welcher bereits in der Vergangenheit in Meilern und Retorten die Verkohlung, nach Meiler-und Retorten-Verkohlung, U. Hartlebens's Verlag, Leipzig, 1885, Seiten 106 bis 108 die bei der Meilerverkohlung durchgeführten Verfahrensschritte, wie Erhitzung des aufgeschichteten stückigen Holzes bei beschränkter Luftzufuhr mittels während des Betriebes des Meilers in denselben angestochener Luftzufuhrlöcher und Ableitung gas- und dampfförmiger Stoffe durch die Abdeckungen desselben nachgeahmt werden. Mit einem Behälter, der in seinem oberen Bereich einen Kamin für den Gasabzug, eine Öffnung zur Beschickung der in dem Behälter befindlichen Schüttung mit stückigem Holz, einer weiteren Öffnung zum Abzug heißer Gase und Dämpfe und einem Ablauf zum Entzug schwerflüssiger Bestandteile, wie Holzteer, wurde Holzkohle bereitgestellt.

Der bisherige Stand der Technik offenbart nichts Neues, denn die herkömmliche Lehre beschreibt lediglich einen Schacht mit einer oberen und unteren Öffnung, der mit einer Zuführeinrichtung zur Beladung der Schüttung mit stückigem Holz, einem Gitter, auf welchem die Schüttung lastet und durch welches infolge der Schwerkraft die Holzkohle durch den Schacht von oben nach unten in Richtung zu der unteren Öffnung des Schachtes sich bewegt, einer Luftzuführeinrichtung zum Beschicken der Schüttung mit Luft in einem unterstöchiometrischen Verhältnis in einem Gegenstrom zu der Holzkohle, die über die untere Öffnung aus dem Schacht abgezogen und in einem Wasserbecken unterhalb der unteren Öffnung zum Auffangen und Ablöschen der Holzhohle gesammelt wird.

Der herkömmliche Schacht wiederholt in umfassender Weise die sonach seit Langem und lediglich in dem o.g. Stand der Technik beispielhaft aufgeführten Verfahren der Meilerverkohlung von Holz zur Holzkohle, so dass sich die Frage nach dem wissensmäßigen Abstand der herkömmlichen Lehre von dem erstgenannten Stand der Technik aus den Jahren 1894ff aufdrängt.

Die herkömmliche Vorrichtung soll die bereits in Bezug genommenen Verfahren und Vorrichtungen soweit verkleinern, dass ein Waldbesitzer ein solches Verfahren für geschlagene Bäume besonders geringer Qualität und aus der Schwachholzernte stammend nutzen kann. Die herkömmliche Lehre stellt nur auf die Verkleinerung der Vorrichtung und die Anpassung des Verfahrens an diese verkleinerte Vorrichtung ab.

Es ist zwar verwunderlich, dass die herkömmliche Lehre sich zur Aufgabe die Verkleinerung der herkömmlichen Vorrichtungen und Reaktoren zur Erzeugung der Holzkohle machte, wenngleich im Stand der Technik Vorrichtungen und Schachtreaktoren ohne die Maßgabe des notwendigen Abstellens auf deren vorbestimmte Größe und vorbestimmten Maßstab beschrieben werden, die zur Durchführung der Holzverkohlung geboten wären.

Abgesehen davon, zeigt sich bei herkömmlichen, aber verkleinerten Anlagen, dass keine Holzkohle von hoher Güte erzeugt wird, da diese mit Hilfe der verkleinerten Anlagen erzeugte Holzkohle in Festigkeit und Kohlenstoffgehalt schwanken,
Hinzukommend erweist sich die Ausbeute an der mit Hilfe der herkömmlichen verkleinerten Anlagen erzeugten Holzkohle wegen schwankender Verfahrensbedingungen als gering, so dass das ein herkömmliches Verfahren nicht wirtschaftlich kostengünstig betrieben werden kann, zumal darüber hinaus der Wirkungsgrad derselben zur Erzeugung an hochwertiger Holzkohle sich durch fehlende Konstanz auszeichnet.

Auch ist die mit Hilfe der herkömmlichen verkleinerten Anlagen erzeugte Holzkohle mitunter nicht frei von Bestandteilen, wie schwerflüchtigen Bestandteilen.

Zudem weist die mit Hilfe der verkleinerten Anlagen des Stands der Technik erzeugte Holzkohle den Nachteil auf, dass wegen fehlender konstanter Verfahrensbedingungen in der Holzkohle derselben Holzcharge der Kohlegehalt und der Kohlenstoffgehalt variieren können.

Überdies zeigt die mit Hilfe der verkleinerten Anlagen wegen schwankender Verfahrensbedingungen erzeugte Holzkohle derselben Holzcharge Unterschiede in der Porosität und der Struktur auf trotz Verwendung einheitlichen stückigen Holzes, was aber unerwünscht ist.

Ganz abgesehen davon erweist sich der herkömmliche Schacht nicht als wirtschaftlich betreibbar, da neben der Kontrolle der Verkohlung in dem bekannten Schacht stets manuelle Eingriffe durch das Bedienungspersonal erforderlich oder aber zumindest zu erwarten sind, zumal das Auftreten unerwarteter Störfaktoren bei Dauerbetrieb desselben nicht auszuschließen ist.

Mit dem Einhergehen des Auftretens unerwarteter Störfaktoren bei Dauerbetrieb des herkömmlichen Schachtes variieren die Ausbeuten nicht nur an Holzkohle, sondern auch an Gasen, die der Verbrennung zwecks Energieverwertung und Kostensenkung des Betriebs des Schachtes zugeführt werden sollen.

Das Auftreten hierbei von gesundheitsschädlichen Dämpfen in schwankendem Ausmaß, das Abführen der gesundheitsschädlichen Dämpfe und deren Entsorgung sind weitere Nachteile des Verfahrens des Stands der Technik.

Darüber hinaus übersieht der Stand der Technik, dass nicht die Verkleinerung bereits hinreichend bekannter Vorrichtungen und die Anpassung der Verfahren an diese Allheilmittel sind, um die Anlage mit Hölzern minderer Qualität betriebssicher zu fahren, sondern vielmehr das Gebot besteht, die herkömmlichen Vorrichtungen und Verfahren im Einzelnen weiterzuentwickeln,
um
Pflanzenkohle hoher Güte, wie solches mit hoher Festigkeit und hohem Kohlenstoffgehalt, zu erzeugen,
Pflanzenkohle einheitlicher Qualität, wie solches ohne Auftreten nicht verkohlter oder nur teilverkohlter Holzteilchen,
umweltschonend gesundheitsschädliche Dämpfe und Gase möglichst zu verringern,
keine hohe Anforderungen an die Geschicklichkeit des Bedienungspersonals zu stellen.

Die herkömmliche Lehre übersieht überdies, dass im Fall der herkömmlichen Zuführung von Biomasse auf die Schüttung, die im Schachtreaktor sich befindet, eine kegelförmige Aufschüttung der Biomasse mit abnehmender Dichte von innen nach außen sich bildet und somit eine ungleichförmige Luftdurchlässigkeit der Schüttung in dem Schachtreaktor sich einstellt. Durch die zentrale Zuführung von Biomasse auf die Oberfläche der Schüttung entsteht die kegelförmige Aufschüttung der Biomasse, so dass in der mittigen Zone der Schüttung die Luftdurchlässigkeit der Schüttung abnimmt, hingegen in der äußeren, der mittigen Zone abgewandten Zone, auch Außenzone genannt, der Schüttung die Luftdurchlässigkeit zunimmt. Durch die hierdurch sich einstellende nicht homogene Luftdurchlässigkeit zeigt sich ein unterschiedlicher Temperaturverlauf in der Schüttung von innen nach außen, also von der mittigen Zone mit niedriger Temperatur hin in Richtung zu der äußeren Zone mit hoher Temperatur sich erstreckend. Das herkömmliche Verfahren kann diesen sogenannten radialen ungleichmäßigen Temperaturverlauf in der Schüttung nicht beseitigen, trotz Teilung der Abgase in zwei Teilströme.

Herkömmliche Verfahren zur Herstellung von Holzkohle und Vorrichtungen zur Durchführung des Verfahrens erkennen zwar die Nachteile bei der bisherigen Herstellung von Holzkohle, nämlich das Entstehen von Wasserdampf, unkondensierbaren Dämpfen und verschiedenen organischen Produkten, wie Methanol, Essigsäure und Homologen sowie Teer, und versuchen, das Entstehen von unkondensierbaren Dämpfen, die reich an Kohlenmonoxyd und somit giftig sind, zu vermeiden, indem ein Meiler kontinuierlich mit feuchtem Holz beschickt wird und der Meiler mindestens eine zentrale heiße Pyrolysezone aufweist, in der die gewöhnlich störenden Restgase aus der entstehenden Holzkohle gespalten und in einer angeschlossenen Kammer verbrannt werden, die ihre Verbrennungsluft und die zum Beheizen des Meilers notwendige Luft erwärmt.

Auch wird übersehen, das Entstehen auch des radialen Temperaturverlaufs in der Schüttung des Meilers, bedingt schon durch den Umstand, dass in dem Meiler die heiße zentrale Pyrolysezone vorgeschlagen wird. Hinzukommend übersieht die Druckschrift, dass durch die zentral gelegene Pyrolysezone die Temperaturerhöhung im zentralen Innern der Schüttung sich zeigen kann, so dass die Biomasse in der Schüttung nicht einheitlich zur Pflanzenkohle verschwelt wird. Durch die von innen nach außen absteigende Temperatur wird auch durch das herkömmliche Verfahren der Kamineffekt bewirkt, der die ungleiche Verkohlung der Biomasse noch zusehends fördert.

Aufgrund der höheren Temperatur in der inneren Zone tritt der Kamineffekt derart verstärkt auf, dass keine einheitliche Pflanzenkohle
weder mithilfe des herkömmlichen Verfahrens,
noch mithilfe des herkömmlichen Meilers
bereitgestellt wird.

Abgesehen davon bleibt mehr als zweifelhaft, ob durch das herkömmliche Verfahren das Entstehen von Wasserdampf, unkondensierbaren Dämpfen und verschiedenen organischen Produkten gerade in den Bereichen niedrigerer Temperatur vermieden werden kann.

Auch herkömmliche Vorrichtungen sollen zwar Holzkohle in einem Wanderbett aus Holz oder anderer Biomasse in einem Schachtreaktor bereitstellen, um auch in einem kleinen Maßstab Holzkohle zu erzeugen, es zeigt sich jedoch, dass auch diese Vorrichtungen weder das Problem des Entstehens des radialen Temperaturverlaufs erkennen, geschweige denn dieses Problem zu beseitigen vermögen.

Hinzukommend übersieht die herkömmliche Lehre, dass nicht nur der radiale Temperaturverlauf mit von außen nach innen absteigender Temperatur, sondern eine unterschiedliche Temperatur sich einstellen, bedingt bereits durch die Inhomogenität der Biomasse in der Schüttung, so dass auch punktuell, an einzelnen Stellen der Schüttung, in dem Schachtreaktor unterschiedliche Temperaturen sich einstellen und der Kamineffekt in Bereichen hoher Temperatur auftritt.

Diese sogenannten "hot spots" (heiße Stellen) tragen zur Bildung ungleichmäßiger Pflanzenkohle aus der Biomasse in beträchtlichem Maße bei.

Möglichkeiten, das Auftreten des zu vermeidenden Kamineffektes und das der "hot spot" zu beseitigen, werden nachteiligerweise nicht von der herkömmlichen Lehre vorgeschlagen.

Die in dem Dokument DE 10 2009 030 013 A1 offenbarte umweltfreundliche selbstständig regelbare Anlage zur kontinuierlichen Erzeugung von Pflanzenkohle aus einer Biomasseteilchen in einer Schüttung als Wanderbett mit einem Schachtreaktor mit einem ein Kopfende und ein Fußende umfassenden Schachtreaktormantel zur Aufnahme der Pflanzenkohle, mindestens einer Teilchenfördereinrichtung zur Beförderung der Biomasseteilchen in den Schachtreaktor, mindestens einer Belüftungsdosiereinrichtung zur Zuführung der Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ein Gitter in einem Inneren des Schachtreaktors in einem Übergangsbereich zwischen dem mittigen Abschnitt des Schachtreaktors und dem Fußende zur Abstützung der Schüttung angeordnet ist, wobei das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr, über welches Luft von außen zuführbar ist, verbunden ist, die Teilchenfördereinrichtung im Bereich des Kopfendes angeordnet ist, welche eine Schütteinrichtung umfasst.

Das Dokument FR 1 061 250 A beschreibt hinsichtlich des Merkmals der o.g. stufenlosen neigbaren Schütte eine eine Hauptantriebseinrichtung aufweisende Schütteinrichtung, die von der Antriebseinrichtung um die Vertikaldrehachse drehbar angetrieben ist zur Beschickung der Oberfläche der Schüttung im Bereich um die Vertikaldrehachse desselben sowie die Schütte um eine Horizontalschwenkachse neigbar ausgebildet ist.

Auch wenn die herkömmliche Lehre die Aufgabe zu lösen gewillt ist, eine Vorrichtung bereitzustellen, die geringe Investitionen und einen möglichst geringen Personalaufwand zum Betrieb derselben erforderlich macht, werden die "ureigenen" Probleme der Verkohlung von Biomasse, insbesondere von Holzkohle, wie
Vermeidung des radialen Temperaturverlaufs,
Vermeidung von "hot spots" in der Schüttung des Meilers,
nicht beseitigt.

Durch diese Nachteile werden nicht nur inhomogen ausgebildete Pflanzenkohle, wie Pflanzenkohle unterschiedlicher Güte, beispielsweise unterschiedlicher Form, Größe, Zusammensetzung,
sondern auch Pflanzenkohle mit einem hohen Anteil von Fehlverkohlungen
sowie unverkohlte Biomasse
als Endprodukte des herkömmlichen Verfahrens und der herkömmlichen Vorrichtung bereitgestellt.

Aufgabe der Erfindung soll es sein, eine Vorrichtung bereitzustellen, die nicht nur kontinuierlich gefahren werden kann, sondern den radialen ungleichmäßigen Temperaturverlauf in der Schüttung des Schachtreaktors vermeidet.

Hinzukommend soll auch das Auftreten von sogenannten "hot spots", also punktuell auftretende beträchtliche Temperaturspitzen an oder in einzelnen Bereichen der Schüttung des Schachtreaktors vermieden werden.

Des Weiteren soll auch ein hohes Ausmaß an Pflanzenkohle bereitgestellt werden, die homogen in Form, Größe und Zusammensetzung ist.

Auch sollen die Leistung an bereitzustellender Pflanzenkohle gleichbleibender Zusammensetzung und der Durchsatz an zu verarbeitender Biomasse erhöht werden.

Hinzukommend soll auch die durch die Anlage oder Meiler bereitzustellende Pflanzenkohle weitgehend keinen Anteil an Fehlverkohlungen, geschweige denn unverkohlte Biomasse aufweisen.

Darüber hinaus soll auch die Schüttung in dem Schachtreaktor eine einheitliche Temperatur aufweisen, die längs der Schüttung, parallel zu der Mitte-Längsachse des Schachtreaktors, sich einstellt.

Daher soll auch die bereitzustellende Anlage einen weitgehend axialen gleichbleibenden Temperaturverlauf, der die Betriebssicherheit der Anlage erhöht und deren Steuerbarkeit erleichtert, aufweisen.

Hinzutretend soll die bereitzustellende Anlage kontinuierlich betrieben werden können, so dass
die Beschickung der Oberfläche der Schüttung mit Biomasse in dem Schachtreaktor,
die Beflutung des Schachtreaktors mit Luft,
die Entnahme von Prozessgas
und
die Abführung der Pflanzenkohle aus dem Schachtreaktor fortlaufend während der Verkohlung
erfolgen können.

Die unterschiedliche Verkohlung stückigen Holzes in dem Schacht solcher Anlagen des Stands der Technik führt wegen der o.g. Nachteile zu dem Erfordernis, die Anlagen nur mit Holz bestimmter einheitlicher Güte zu fahren, was ursprünglich ganz und gar nicht erwünscht war, da Holz ursprünglich minderer Qualität und solches aus der Schwachholzernte verwendet werden sollten.

Auch können mit stückigem Holz verschiedener Baumarten nicht gleichzeitig die herkömmlichen Anlagen beladen werden, da Hölzer unter Umständen aufgrund deren verschiedenen Anteile die Verkohlung der Hölzer in der Verkohlungszone beeinflussen und sogenannte radiale Temperaturunterschiede, wie nachfolgend erläutert wird, hervorrufen können.

Aufgaben der Erfindung sollen sein, eine Anlage mit einem Schachtreaktor und ein Verfahren zum Betreiben derselben bereitzustellen, die die o.g. Nachteile nicht aufweisen.

Da zu beachten ist, dass die Temperatur in der mittigen Zone der Schüttung im Schachtreaktor häufig verschieden, insbesondere geringer, ist als die Temperatur in der an die mittige Zone sich anschließenden Außenzone der Schüttung, ein Phänomen, was als sogenannte rradialer Temperaturunterschied bezeichnet wird, sind eine Anlage und ein Verfahren bereitzustellen, die radiale Temperaturunterschiede vermeiden helfen.

Hinzutretend soll in der bereitzustellenden Anlage die Verkohlung von Holz zur Holzkohle weitgehend kontinuierlich sich selbst steuernd vonstatten gehen, ohne dass die Gefahr des Unterbrechens des Dauerbetriebs, wie sie häufig bei den o.g. herkömmlichen Schächten und Reaktoren des Stands der Technik zu befürchten ist, besteht.

Weiterhin soll die Anlage ohne weiteres zur Verkohlung von Holz unterschiedlichen Ursprungs, von Holzderivaten, von Holzabfallprodukten, von Holznebenprodukten, von stückigem Lignin, von Formkörpern aus Biomasse, usw. betreibbar sein.

Darüber hinaus soll die bereitzustellende Anlage Holz unterschiedlichen Feuchtigkeitsgehaltes in einem Vorgang in derselben bei Dauerbetrieb verkohlen können.

Des Weiteren soll die bereitzustellende Anlage jedwede Biomasse, wie Stücklinge aus Klärschlämmen, Gülle, Mist, usw. sowie pflanzliche Stoffe, wie Holz, die zu Teilchen, wie Holzteilchen, bei Dauerbetrieb verkohlen können.

Überdies soll die bereitzustellende Anlage kunststoffartige Materialien enthaltende Biomasse bei Dauerbetrieb verkohlen können.

Hinzukommend soll die Verkohlung in der Anlage dergestalt gesteuert werden können, dass Holzkohle mit niedrigem oder mit hohem Kohlenstoffgehalt bzw. Kohlegehalt, je nach Erfordernis, erzeugt wird.

Des Weiteren soll der Wirkungsgrad der Anlage hinreichend hoch sein, um hochwertige Holzkohle hoher Güte, wie solches mit hoher Festigkeit und hohem Kohlenstoffgehalt, zu erzeugen, und einheitlicher Qualität, wie solches ohne Auftreten nicht verkohlter oder nur teilverkohlter Holzteilchen, zu erzeugen.

Auch soll ein gleichmäßiges Glutbett in der Verkohlungszone vorliegen, um das Auftreten nicht verkohlter oder nur unzureichend verkohlter Holzteichen vermeiden zu helfen.

Hinzutretend soll die Möglichkeit bereitgestellt werden, nur unzureichend oder nicht verkohlte Holzteilchen durch eine der Verkohlung nachgeschaltete sogenannte Nachverkohlung zur Bereitstellung von verkohlten Holzteilchen einheitlicher Güte zu verkohlen.

Des Weiteren sollen die bereitzustellende Anlage und das Verfahren möglich machen, die bei der Verkohlung anfallenden gasförmigen Stoffe energetisch sinnvoll zu verwerten.

Schließlich soll die mit Hilfe der bereitgestellten Anlage erzeugte Holzkohle klassiert werden können, um je nach Verwendungszwecks der Holzkohle eine Sortierung oder Vorsortierung, je nach Erfordernis oder nach Wunsch des Benutzers, möglich zu machen, um die Weiterverarbeitung zu erleichtern und dem Benutzer einen wirtschaftlichen Vorteil gegenüber Mitbewerbern zu verschaffen.

Die Aufgabe wird gelöst durch den Hauptanspruch und den Nebenanspruch. Die Unteransprüche betreffen bevorzugte Ausgestaltungen und Weiterentwicklungen der Erfindung.

Die Erfindung betrifft eine umweltfreundliche selbstständig regelbare Anlage zur kontinuierlichen Erzeugung von Pflanzenkohle aus einer Biomasseteilchen in einer Schüttung als Wanderbett mit
einem Schachtreaktor mit einem ein Kopfende und ein Fußende umfassenden Schachtreaktormantel zur Aufnahme der Pflanzenkohle,
mindestens einer Teilchenfördereinrichtung zur Beförderung der Biomasseteilchen in den Schachtreaktor,
mindestens einer Belüftungsdosiereinrichtung zur Zuführung der Luft in den Schachtreaktor,
das Kopfende des Schachtreaktors eine Eintragsöffnung und das Fußende des Schachtreaktors eine Austragsöffnung aufweisen,
ein mittiger Abschnitt zwischen dem Kopfende und dem Fußende sich befindet,
ein Gitter in einem Inneren des Schachtreaktors in einem Übergangsbereich zwischen dem mittigen Abschnitt des Schachtreaktors und dem Fußende zur Abstützung der Schüttung angeordnet ist,
das Fußende des Schachtreaktors die Belüftungsdosiereinrichtung aufweist, die Belüftungsdosiereinrichtung ein Luftleitungsrohr und ein Außenrohr aufweist,
das Außenrohr ein oberes Ende des Luftleitungsrohrs aufnimmt,
das Außenrohr mit dem Luftleitungsrohr beweglich verbunden ist,
das Luftleitungsrohr mit einem Luftaußenrohr, über welches Luft von außen zuführbar ist, verbunden ist,
wobei
die Teilchenfördereinrichtung im Bereich des Kopfendes angeordnet ist, welche eine Schütteinrichtung umfasst,
die Schütteinrichtung eine stufenlos neigbare Schütte zur gleichmäßigen, kontrollierten, stufenlos radialen Verteilung und Beschickung der Schüttung mit Biomasseteilchen aufweist,
die Schütte um eine quer zu der Vertikaldrehachse ausgerichtete Horizontalschwenkachse neigbar ausgebildet ist,
welche dadurch gekennzeichnet ist, dass
die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben,
die Zuführung der Luft in die Schüttung durch die Belüftungsdosiereinrichtung luftmengen- und zonenkontrolliert ist, wobei
der Abstand eines oberen Endes des Außenrohrs von der Unterseite des Gitters festlegbar und das Außenrohr quer zu einer Mitte-Längsachse des Schachtreaktors verschiebbar sind.

Ein weiterer Gegenstand der Erfindung ist gerichtet auf ein kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor einer umweltfreundlichen selbstständig regelbaren Anlage zur kontinuierlichen Erzeugung von Pflanzenkohle aus Biomasse, vorzugsweise aus Biomasseteilchen, wie Holz, wobei fortlaufend
die Temperaturen in der Schüttung, vorzugsweise zumindest in einer mittigen Zone und/oder in einer Außenzone derselben,
der Volumenstrom der aus der Schüttung entweichenden Prozessgase in der mit dem Kopfende des Schachtreaktors verbundenen Prozessgasleitung,
die Höhe der Schüttung in dem Schachtreaktor gemessen werden und
nach Maßgaben der Temperaturen und / oder des Volumenstroms und/oder der Höhe der Schüttung
die Luft über die Belüftungsdosiereinrichtung der Schüttung sowie
die Biomasseteilchen über die Teilchenfördereinrichtung der Schüttung zugeführt,
die Prozessgase über die Prozessgaskontrolleinrichtung abgezogen werden.

Die erfindungsgemäße umweltfreundliche selbstständig sich regelnde Anlage zur kontinuierlichen Erzeugung von Pflanzenkohle, wie Holzkohle, aus Biomasseteilchen, vorzugsweise Holzteilchen, ist eine solche zur gleichmäßigen radialen und/oder axialen Temperaturführung in einer Schüttung mit einer mittels Messeinrichtungen ansteuerbaren Beschickung der Schüttung mit Biomasseteilchen in Menge, Geschwindigkeit und/oder Oberflächenverteilung der Biomasseteilchen und/oder einer mittels Messeinrichtungen ansteuerbaren Luftführung, wie das Zuführen von Luftvolumen und/oder -geschwindigkeit und/oder Position der Luftführung in die Schüttung, und/oder einer mittels Messeinrichtungen ansteuerbaren Abführung der Prozessgase, wie das Abziehen des Prozessgasvolumen und/oder -geschwindigkeit, usw.

Die Erfindung kann auf eine umweltfreundliche selbstständig regelbare Anlage zur kontinuierlichen Erzeugung von Pflanzenkohle, wie Holzkohle, aus einer Biomasse, vorzugsweise Holz, oder Biomasseteilchen in einer Schüttung gerichtet sein mit
einem die Schüttung mit Biomasseteilchen aufnehmenden Schachtreaktor mit einem ein Kopfende und ein Fußende umfassenden Schachtreaktormantel, wobei ein mittiger Abschnitt des Schachtreaktormantels zwischen dem Kopfende und dem Fußende angeordnet ist,
mindestens einer Teilchenfördereinrichtung zur Beförderung von Biomasseteilchen in den Schachtreaktor,
mindestens einer Belüftungsdosiereinrichtung zur Zuführung der Luft in den Schachtreaktor,
wobei das Kopfende des Schachtreaktors eine Eintragsöffnung und das Fußende des Schachtreaktors eine Austragsöffnung aufweisen,
insbesondere einer unterhalb der Belüftungsdosiereinrichtung angeordneten Auffangeinrichtung zur Ablöschung der aus der Austragsöffnung des Schachtreaktors bewegten Pflanzenkohle,
wobei ein Gitter in einem Inneren des Schachtreaktors in einem Übergangsbereich zwischen dem mittigen Abschnitt und dem Fußende angeordnet ist, auf welchen sich die Schüttung abstützt,
welche dadurch gekennzeichnet ist, dass,
insbesondere das Fußende des Schachtreaktormantels, das konisch, insbesondere mit einer trichterförmigen Ringschürze, ausgebildet ist,
das Fußende die, vorzugsweise unter dem Gitter angeordnete, Belüftungsdosiereinrichtung aufweist, die Luft über die Belüftungsdosiereinrichtung längs und/oder quer zu einer Mitte-Längsachse A des Schachtreaktors zugeführt ist.

Die Erfindung betrifft auch ein kostengünstiges Verfahren zur Erzeugung von Pflanzenkohle, wie Holzkohle, aus der Biomasse oder -teilchen in einer Schüttung als Wanderbett in einem in einem Gegenstrom zu der Pflanzenkohle von Luft durchströmten Schachtreaktor, welcher mit Biomasseteilchen, vorzugsweise Holzteilchen, insbesondere fortlaufend, beschickt wird, durch ein, vorzugsweise gleichmäßiges, radiales und/ oder axiales, Temperaturführen in der Schüttung mit einem mittels Messeinrichtungen ansteuerbaren Beschicken der Schüttung mit den Biomasseteilchen in vorbestimmter Menge und / oder in vorbestimmter Oberflächenverteilung und/oder einem mittels Messeinrichtungen ansteuerbaren Luftzuführen in vorbestimmtem Volumen und/oder in vorbestimmter Position zur Schüttung und/oder einem mittels Messeinrichtungen ansteuerbaren Luftführen in der Schüttung und/oder einem mittels Messeinrichtungen ansteuerbaren Prozessgasabführen aus der Schüttung.

Die Erfindung ist gerichtet zudem auf ein kostengünstiges Verfahren zur Erzeugung von Pflanzenkohle, wie Holzkohle, aus einer Biomasse in einem Wanderbett in einem im Gegenstrom zu der Pflanzenkohle von Luft durchströmten Schachtreaktor, welcher mit Biomasseteilchen, vorzugsweise Holzteilchen, insbesondere fortlaufend, beschickt wird,
welches dadurch gekennzeichnet, dass
die Temperaturen in der Schüttung, vorzugsweise zumindest in einer mittigen Zone und in einer an die mittige Zone angrenzenden Außenzone derselben, fortlaufend überwacht werden,
die Luft über die Belüftungsdosiereinrichtung der Schüttung, vorzugsweise volumenkontrolliert und/oder geschwindigkeitskontrolliert und/oder zonenkontrolliert, nach Maßgabe der Temperatur und / oder des Prozessgasvolumenstroms zur Erzeugung einer gleichmäßigen Temperatur in der Schüttung aufwärts im Gegenstrom zu der Schüttung bzw. Pflanzenkohle dieser zugeführt wird und/oder
die Biomasseteilchen über die Teilchenfördereinrichtung der Schüttung, vorzugsweise mengenkontrolliert und / oder zonenkontrolliert, nach Maßgabe der Temperatur und /oder des Prozessgasvolumenstroms zur Erzeugung einer gleichmäßigen Temperatur in der Schüttung zugeführt werden.

Die Pflanzenkohle, wie Holzkohle, ist in kontrollierter Menge, großer Ausbeute und hoher Güte und einheitlicher Qualität herstellbar mit der erfindungsgemäßen umweltfreundlichen selbstständig regelbaren Anlage zur kontinuierlichen Erzeugung von Pflanzenkohle aus einer Biomasse, vorzugsweise Holz.

Sonstige Bestandteile aus Pflanzenkohle, wie Holz, in kontrollierter Menge, großer Ausbeute und hoher Güte sind herstellbar mit der erfindungsgemäßen umweltfreundlichen selbstständig regelbaren Anlage zur kontinuierlichen Erzeugung von Pflanzenkohle, wie Holz, aus einer Biomasse, vorzugsweise Holz.

Die Pflanzenkohle, wie Holzkohle, ist in kontrollierter Menge, großer Ausbeute und hoher Güte und einheitlicher Qualität herstellbar mit dem erfindungsgemäßen kostengünstigen Verfahren zur Erzeugung von Pflanzenkohle, wie Holzkohle, aus einer Biomasse, insbesondere Holz, in einem Wanderbett in einem im Gegenstrom zur Holzkohle von Luft durchströmten Schachtreaktor.

Sonstige Bestandteile aus Pflanzenkohle, wie Holz, sind in kontrollierter Menge, großer Ausbeute und hoher Güte herstellbar mit dem erfindungsgemäßen kostengünstigen Verfahren zur Erzeugung von Pflanzenkohle, wie Holzkohle, aus einer Biomasse, insbesondere Holz, in einem Wanderbett in einem im Gegenstrom zur Holzkohle von Luft durchströmten Schachtreaktor.

In einer Ausgestaltung der erfindungsgemäßen Anlage umfasst diese einen Schachtreaktor mit einem ein Kopfende und ein Fußende umfassenden Schachtreaktormantel zur Aufnahme der Pflanzenkohle, mindestens einer Teilchenfördereinrichtung zur Beförderung der Biomasseteilchen in den Schachtreaktor, mindestens einer Belüftungsdosiereinrichtung zur Zuführung der Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ggf. einer mit der Austragsöffnung verbundenen Auffangeinrichtung zur Ablöschung der aus der Austragsöffnung des Schachtreaktors bewegten Pflanzenkohle, wobei ein Gitter in einem Inneren des Schachtreaktors in einem Übergangsbereich zwischen dem mittigen Abschnitt des Schachtreaktors und dem Fußende zur Abstützung der Schüttung angeordnet ist, wobei das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr, über welches Luft von außen zuführbar ist, verbunden ist, und/oder die Teilchenfördereinrichtung im Bereich des Kopfendes angeordnet ist, welche eine Schütteinrichtung umfasst, die Schütteinrichtung ein Schüttelgitter zur gleichmäßigen Verteilung und Beschickung der Schüttung mit Biomasseteilchen, wie Holzteilchen, und / oder ein Verteilerblech oder eine Rutsche zur kontrollierten Beschickung der Oberfläche der Schüttung mit Biomasseteilchen aufweist, vorzugsweise das Fußende des Schachtreaktormantels konisch, vorzugsweise mit einer trichterförmigen Ringschürze, ausgebildet ist. Die Schüttung bewegt sich als Wanderbett in dem Schachtreaktor von oben nach unten, von dem Kopfende in Richtung zu dem Fußende hin.

Unter Beschickung der Schüttung mit den Biomasseteilchen, wie Pflanzenteilchen, Holzteilchen, oder dergleichen, wird im Sinne der Erfindung auch verstanden das Auffüllen des Schachtreaktors in einer vorbestimmten Höhe mit den Biomasseteilchen, wie Pflanzenteilchen, wie Holzteilchen, und /oder das Aufschütten mit Biomasseteilchen auf die Oberflächen vorbestimmter Zonen, z.B. der mittigen Zone oder der Außenzone, der Schüttung, oder von Teilbereichen der mittigen Zone und /oder Außenzone, insbesondere in einer vorbestimmten Höhe.

Unter Holz werden im Sinne der Erfindung auch verstanden sonstige Einsatzmaterialien, wie Holzderivate, Holzabfallprodukte, Holznebenprodukte, stückiges Lignin, Formkörper aus Biomasse. Unter Holzteilchen werden im Sinne der Erfindung auch verstanden stückiges Holz unterschiedlichster Größe und Form, sonstige Einsatzmaterialien, wie Holzderivate, Holzabfallprodukte, Holznebenprodukte, stückiges Lignin, Formkörper aus Biomasse.

Unter Klassierung der Holzkohle oder -teilchen wird im Sinne der Erfindung auch verstanden das Einordnen von Holzkohle oder -teilchen nach Größe und/oder Form, die verkohlt oder unverkohlt oder teilverkohlt sein können.

Unter Biomasseteilchen werden im Sinne der Erfindung auch verstanden, zerkleinerte zur Verkohlung vorgesehene stückige Biomasse, stückiges Holz unterschiedlichster Größe und Form, sonstige Einsatzmaterialien, wie Holzderivate, Holzabfallprodukte, Holznebenprodukte, stückiges Lignin, Formkörpern aus Biomasse, Stücklinge oder dergleichen. Im Folgenden kann der Einfachheit halber für verkohlte Biomasseteilchen auch Pflanzenkohleteilchen verwendet werden. Unter Pflanzenkohle werden im Sinne der Erfindung auch verstanden verkohlte Biomasse, wie verkohlte Biomasseteilchen, z.B. verkohlte pflanzliche Stoffe, beispielsweise verkohlte Holzkohle, Holzkohleteilchen, Holzkohle, verkohlte Stücklinge von Gülle- oder Miststücklingen, verkohlte Biomasse mit kunststoffartigen Materialien, Pflanzenkohleteilchen, oder dergleichen.

Unter Pflanzenkohleteilchen werden im Sinne der Erfindung auch verstanden verkohlte Stücklinge, verkohltes stückiges Holz. Im Folgenden wird der Einfachheit halber für verkohlte Biomasseteilchen auch Pflanzenkohleteilchen verwendet. Unter Holzkohle wird im Sinne der Erfindung auch verstanden stückige Holzkohle, Holzkohleteilchen, usw. Unter Holzkohle und verkohlte Holzteilchen werden im Sinne der Erfindung auch die in Rechtsvorschriften genannten verkohlten holzartigen Stoffe verstanden.

Unter Schüttung wird im Sinne der Erfindung auch verstanden ein Biomassenbett, Holzteilchenbett, Holzscheitenbett, usw.

Im Sinne der Erfindung wird unter der erfindungsgemäßen umweltfreundlichen selbstständig regelbaren Anlage zur kontinuierlichen Erzeugung von Pflanzenkohle, wie Holzkohle, aus einer Biomasse, vorzugsweise Holz, oder Biomasseteilchen auch ein Meiler zur Herstellung von Pflanzenkohle aus der Biomasse verstanden.

Der Erfindung liegt auch zugrunde, dass das Auftreten radialer Temperaturunterschiede in der Verkohlungszone vermieden, zumindest aber weitgehend verhindert wird. Es zeigt sich, dass die auf dem Gitter lastende Schüttung, die die Verkohlungszone aufweist, unterschiedliche Temperaturen aufweisen kann; die mittige Zone, die im Bereich der Mitte-Längsachse des Schachtreaktors angeordnet sein kann, der auf dem Gitter befindlichen Schüttung oder der Verkohlungszone, die auf dem Gitter oder, z.B. auch wenig, beabstandet von demselben sich befinden kann, hat häufig eine Temperatur ab 280° C, insbesondere bis zu 500°C, vorzugsweise in einem Bereich von 280° C bis 500° C, noch mehr bevorzugt 280°C bis 350°C, hingegen ist die an die mittige Zone sich anschließende oder diese zumindest teilweise oder vollständig umgebende oder begrenzende Außenzone, die im Bereich des Schachtreaktormantels oder zwischen der mittigen Zone und dem Schachtreaktormantel angeordnet sein kann, der auf dem Gitter befindlichen Schüttung oder der Verkohlungszone gekennzeichnet durch einen höheren Temperaturbereich von mehr als 350°C, z.B. von 350° bis 700° C, wie 600 bis 700°C.

Die Änderung der Temperatur, die von der mittigen Zone in Richtung hin zu der Außenzone verlaufend, z.B. als linear oder stufenweise sich erstreckender Gradient, sich einstellen kann, wird im Sinne der Erfindung auch radialer Temperaturunterschied genannt. Beispielsweise lässt sich der radiale Temperaturunterschied nicht nur im Bereich der auf dem Gitter sich abstützenden Schüttung und deren an das Gitter angrenzenden Verkohlungszone, sondern auch im Bereich der Schüttung und deren Verkohlungszone beobachten, die weiter von dem Gitter beabstandet sind; der radiale Temperaturunterschied kann in der Verkohlungszone von dem Gitter bis zu der dem Gitter abgewandten Oberfläche der Schüttung hin sich erstrecken.

So können zusätzlich oder alternativ zu radialen Temperaturunterschieden Bereiche der Schüttung und deren Verkohlungszone, z.B. in Schüttungsbereichen verschiedener Abstände oder Höhen von dem Gitter, z.B. längs der Mitte-Längsachse des Schachtreaktormantels, verschiedene Temperaturen aufweisen; diese Bereiche können auch axiale Temperaturunterschiede in der Schüttung genannt werden.

Der radiale Temperaturunterschied führt zudem zu einer uneinheitlichen Verkohlung der Biomasseteilchen in der Verkohlungszone. Der radiale Temperaturunterschied kann sich unabhängig von der Form oder Grundriss des Schachtreaktors oder des Schachtreaktormantels zeigen, unabhängig davon, ob in der Draufsicht der Schachtreaktor oder dessen -mantel z.B. kreisförmig, teilkreisförmig oder eckig ausgebildet ist. Die radialen Temperaturunterschiede, deren Vorhandensein, Ausbreitung sind vorteilhafterweise zu überwachen und anzusteuern und je nach Erfordernis zu vermeiden.

Der axiale auch vertikale genannt, Temperaturunterschied kann auch zu einer uneinheitlichen Verkohlung der Biomasseteilchen in der Verkohlungszone führen. Der radiale Temperaturunterschied kann ebenso unabhängig von der Form oder Grundriss des Schachtreaktors oder des Schachtreaktormantels auftreten, unabhängig davon, ob in der Draufsicht der Schachtreaktor oder dessen -mantel z.B. kreisförmig, teilkreisförmig oder eckig ausgebildet ist. Ebenfalls sind die axialen Temperaturunterschiede, deren Vorhandensein, Ausbreitung bevorzugterweise zu überwachen und anzusteuern und je nach Erfordernis zu vermeiden. Es zeigt sich, dass daher vorteilhafter radiale- und axiale Temperaturunterschiede während der Verkohlung zu überwachen und zu steuern sind.

Unter radialem Temperaturunterschied wird folglich im Sinne der Erfindung auch verstanden der Temperaturunterschied, der sich im Bereich der Schüttung zwischen der MittelLängsachse des Schachtreaktors, unabhängig von dessen eckigen oder kreisrunden Grundriss, und dem Schachtreaktormantel zeigt. Unter axialem Temperaturunterschied wird folglich im Sinne der Erfindung auch verstanden der Temperaurunterschied in Bereichen der Schüttung unterschiedlicher Beabstandung von dem Gitter.

Auch liegt der erfindungsgemäßen parameterkontrollierten Anlage und dem erfindungsgemäßen parameterkontrollierten Verfahren zugrunde, die Verkohlung in der Verkohlungszone durch das, vorzugsweise fortlaufende, Messen von Parametern als Regelgrößen oder Messgrößen und durch das, vorzugsweise fortlaufende, Ermitteln z.B. der Differenzen gegenüber den Sollwerten zu regeln. Die gemessenen Istwerte der Regelgrößen können mittels herkömmlicher Messeinrichtungen bestimmt und die mit den Istwerten korrespondierenden Signale können an eine mit den Messeinrichtungen verbundene herkömmliche Steuereinrichtung weitergeleitet werden; die Steuereinrichtung kann die Differenzen der Istwerte gegenüber den Sollwerten als Regelabweichungen feststellen und die, z.B. von dem Zeitverlauf der Regelabweichungen und/oder von den Regelabweichungen abhängigen, Steuerungssignale erzeugen und an die nachfolgend aufgeführten Einrichtungen der erfindungsgemäßen Anlage als Stellglieder senden, so dass die Korrekturen der Regelgrößen, z.B. im Sinne der Verminderung des Betrags der Regelabweichungen, veranlasst werden können. Vorzugweise werden die Istwerte von mehr als einer Messeinrichtung ermittelt und die Einrichtungen der erfindungsgemäßen Anlage von der mit der Messeinrichtung oder den Messeinrichtungen verbundenen Steuereinrichtung angesteuert. Gleichfalls ist von Vorteil, wenn die Einrichtungen der erfindungsgemäßen Anlage unmittelbar von der Messeinrichtung angesteuert werden und die Einrichtungen die entsprechenden Steuerungssignale erzeugen, um die Korrekturen der Regelgrößen im Sinne der Verminderung des Betrags der Regelabweichungen veranlassen zu können.

Eine Ausgestaltung der erfindungsgemäßen umweltfreundlichen selbstständig regelbaren Anlage umfasst einen Schachtreaktor mit einem ein Kopfende und ein Fußende umfassenden Schachtreaktormantel, mindestens eine Teilchenfördereinrichtung zur Beförderung von Biomasseteilchen in den Schachtreaktor und mindestens eine Belüftungsdosiereinrichtung zur Zuführung der Luft in den Schachtreaktor, wobei das Kopfende des Schachtreaktors eine Eintragsöffnung und das Fußende des Schachtreaktors eine Austragsöffnung aufweisen, eine mit der Austragsöffnung verbundene Teilchenzähleinrichtung oder eine Auffangeinrichtung zur Ablöschung der aus der Austragsöffnung des Schachtreaktors bewegten Pflanzenkohle, wobei ein Gitter in einem Inneren des Schachtreaktors in einem Übergangsbereich zwischen einem mittigen Abschnitt des Schachtreaktors und dem Fußende desselben angeordnet ist; das Fußende des Schachtreaktors die Belüftungsdosiereinrichtung aufweist, der Luftaustritt der Belüftungsdosiereinrichtung quer zur Mitte-Längsachse A des Schachtreaktors und/oder Gitters und/oder längs der Mitte-Längsachse A des Schachtreaktors und/oder des Gitters zur kontrollierten Luftzufuhr einer Verkohlungszone beweglich ist; der Belüftungsdosiereinrichtung ist Luft von außen zugeführt und/oder die Teilchenfördereinrichtung kann eine Schütteinrichtung zur kontrollierten Beschickung der Schüttung mit Biomasseteilchen, wie Holzteilchen, aufweisen, wobei zur gleichmäßigen radialen Temperaturführung in der Schüttung die Beschickung der Schüttung mit Biomasseteilchen in Menge und/oder Oberflächenverteilung und/oder die Luftzuführung in Volumen und/oder Position mittels Messeinrichtungen und /oder über eine mit den Messeinrichtungen verbundene Steuereinrichtung vorteilhafterweise angesteuert sind.

In einer weiteren Ausgestaltung der erfindungsgemäßen umweltfreundlichen selbstständig regelbaren Anlage ist die Auffangeinrichtung zur Ablöschung der aus der Austragsöffnung des Schachtreaktors bewegten Pflanzenkohle von dem Gitter beabstandet angeordnet. Vorzugsweise ist die mit der Austragsöffnung verbundene Auffangeinrichtung unterhalb der Belüftungsdosiereinrichtung, also von ihr beabstandet angeordnet; auch kann Auffangeinrichtung ohne Beabstandung von der Belüftungsdosiereinrichtung unter dieser angeordnet sein. Zudem kann die Auffangeinrichtung mit der Teilchenzähleinrichtung derart verbunden sein, dass sie unter oder unterhalb der Teilchenzähleinrichtung sich befindet. Ebenso kann in einer anderen Ausführung der erfindungsgemäßen umweltfreundlichen selbstständig regelbaren Anlage das Gitter als Austragsöffnung ausgestaltet sein. Von Vorteil ist die Ausgestaltung der erfindungsgemäßen Anlage, wenn die Teilchenzähleinrichtung mit Auffangeinrichtung verbunden ist, vorteilhafterweise ist diese Auffangeinrichtung unter oder unterhalb der Teilchenzähleinrichtung angeordnet.

So können als Parameter, auch Regel- oder Messgrößen oder -werte genannt,
die Temperaturen in der Schüttung in der mittigen Zone und/oder
die Temperatur in der Außenzone und/oder
die Temperaturen im Bereich der Kopfendes des Schachtreaktors und/oder
die Temperaturen im Bereich des Fußendes des Schachtreaktors und/oder
die Temperaturen in der Schüttung entlang der Mitte-Längsachse des Schachtreaktors und/oder
die Temperaturen der Nachverkohlungszone und/oder
die Füllstandshöhe der Nachverkohlungszone und/oder
die Schüttungshöhen, wie die Schüttungshöhe in der mittigen Zone und /oder die Schüttungshöhe der Außenzone, und/oder
der Druck im Bereich des dicht verschlossenen Kopfendes und/oder
der Luftvolumenstrom im Bereich des Fußendes und/oder
der Prozessgasvolumenstrom des Kopfendes, der aus der Schüttung ausströmt, und/oder
der Prozessgasvolumenstrom des Kopfendes, der durch die Prozessgasleitung desselben abgeleitet wird,
mittels herkömmlicher Messeinrichtungen als Istwerte bestimmt und die den Istwerten entsprechenden Signale von den Messeinrichtungen erzeugt sowie an die an die Messeinrichtungen angeschlossene Steuereinrichtung weitergeleitet werden; die Istwerte oder Signale z.B. werden mit deren, in der Steuereinrichtung eingegebenen, Sollwerten in der Steuereinrichtung verglichen und die Regelabweichungen, soweit festgestellt und/oder erforderlich, können als Steuerungssignale an die an die Steuereinrichtungen angeschlossenen Einrichtungen der erfindungsgemäßen Anlage und Verfahren beispielswiese an die Einrichtungen, wie
die Prozessgaskontrolleinrichtung in der Prozessgasleitung
und/oder
die Teilchenfördereinrichtung im Bereich des Kopfendes des Schachtreaktors
und/oder
die Belüftungsdosiereinrichtung am Fußende des Schachtreaktors
und/oder
die Teilchenzähleinrichtung im Bereich des Fußendes des Schachtreaktors, wie in oder an der Austragsöffnung,
und/oder
die Auffangeinrichtung oder Ablöscheinrichtung im Bereich des Fußendes des Schachtreaktors, wie mit der Austragsöffnung verbundene, des Schachtreaktors
und/oder
die Gitterlocheinrichtung zur Veränderung der Maschenweite des Gitters
weitergeleitet werden. Die Anschlüsse zwischen der Steuereinrichtung und den sonstigen, wie o.g., Einrichtungen der Anlage sind herkömmliche, z.B. elektrische, elektromotorische, drahtlose, usw.

In einer Ausgestaltung der erfindungsgemäßen umweltfreundlichen selbstständig regelbaren Anlage können die Einrichtungen, wie die Prozessgaskontroll-, die Teilchenförder-, die Belüftungsdosier-, die Teilchenzähl-, die Ablösch- und die Gitterlocheinrichtung oder ein Teil oder Teile derselben, ebenso an die Messeinrichtungen zur Bestimmung der vorgenannten Messgrößen und deren Istwerte sowie zur Erzeugung der mit diesen korrespondierenden Signalen, die zu der Steuereinrichtung und/oder zu einem Teil der vorgenannten Einrichtungen zwecks Signalverarbeitung und Steuerung, auch Ansteuerung genannt, der erfindungsgemäßen Anlage weitergeleitet werden können, angeschlossen sein.

Die erfindungsgemäße umweltfreundliche Anlage und Verfahren sind in der Lage, durch die fortlaufende Bestimmung von mindestens einem der Parameter, wie von
Temperaturen in der Schüttung, z.B. in der mittigen Zone und Außenzone und/oder
Temperaturen im Bereich des Kopfendes des Schachtreaktors, z.B. auf und/oder oberhalb der Schüttung, und/oder in der Schüttung längs deren Mitte-Längsachse und/oder des Fußendes des Schachtreaktors, z.B. unter und/oder unterhalb des Gitters, und/oder
Schüttungshöhen der Schüttung, z.B. in Bereich der mittigen Zone und/oder der Außenzone, und/oder
Druck im Bereich des Kopfendes, z.B. in der Prozessgasleitung und/oder in dem schüttungsfreien Bereich des Kopfendes, und/oder
Luftvolumenstrom im Bereich des Fußendes, z.B. des Gitters und/oder in der Belüftungsdosiereinrichtung, und/oder
Prozessgasvolumenstrom im Bereich des Kopfendes, z.B. in der Prozessgasleitung und/oder in dem schüttungsfreien Bereich des Kopfendes,
usw. mittels herkömmlicher Messeinrichtungen
die Verkohlung in dem Schachtreaktor selbstständig zu regeln und in Abhängigkeit von deren festgestellten Istwerten mindestens eine der Einrichtungen der erfindungsgemäßen umweltfreundlichen Anlage und Verfahrens zur Bereitstellung der hinreichenden Verkohlung der Biomasse dergestalt anzusteuern, dass sich ein weitgehender Eingriff von außen durch den Benutzer erübrigt.

Erst das geschickte Ansteuern mindestens einer der o.g. Einrichtungen als Stellglieder, bevorzugterweise das geschickte Zusammenwirken von mehr als einem der o.g. Stellglieder miteinander, ermöglicht die Bereitstellung von Pflanzenkohle
in hinreichender Menge, Güte und Zusammensetzung,
sogar aus Biomassen unterschiedlicher Zusammensetzung,
fortlaufend,
ohne dass es eines manuellen Eingriffs des Fachmanns von außen bedarf.

Unter Volumenstrom wird im Sinne der Erfindung auch verstanden die Menge an Prozessgas oder Luft, die z.B. pro vorbestimmter Zeitdauer, ab- oder zugeführt werden kann.Unter Luftvolumenstrom wird im Sinne der Erfindung auch verstanden die Menge an Luft, die z.B. pro vorbestimmter Zeitdauer, der Schüttung zugeführt oder abgeführt und/oder infolge Verkohlung in den Schachtreaktor angesaugt werden kann. Unter Prozessgasvolumenstrom wird im Sinne der Erfindung auch verstanden die Menge an Prozessgas, die, z.B. pro vorbestimmter Zeitdauer, über die Prozessgasleitung abgeführt werden oder der Schüttung entströmen kann.

Bei von unten nach oben erfolgender Draufsicht auf das Gitter lässt der von der Mitte nach außen verlaufende Anstieg der Temperatur in der auf dem Gitter lastenden Schüttung auf den vorgenannten radialen Temperaturunterschied in der Schüttung oder der Verkohlungszone derselben schließen, welche Verkohlungszone von dem Gitter, je nach Verfahrensbedingungen, ebenso beabstandet sein oder unmittelbar an dieses sich anschließen kann. Der radiale Temperaturunterschied in unterschiedlichen Schüttungshöhen wird von dem Stand der Technik nicht erkannt, geschweige denn wird im Stand der Technik versucht, den radialen Temperaturunterschied zu vermeiden. Denn stets ist die herkömmliche Lehre auf die möglichst identische Darstellung oder Nachmachen der bei der Meilerei bereits seit alters her etablierten Verfahrensschritte ohne Eingriff von außen in diese gerichtet.

Der radiale Temperaturunterschied in verschiedenen Schüttungshöhen, z.B. als "hot spots", sollte in dem Schachtreaktor zu vermeiden sein, da der radiale Temperaturunterschied zu einer unausgewogenen Verkohlung der Biomasseteilchen, wie Holzteilchen, führt. Der radiale Temperaturunterschied kann auch zu V-förmigem Temperaturgradient führen, so dass die Verkohlungszone z.B. eine im Längsschnitt V-förmige Gestalt ausbildet und in der mittigen, dem Schnittpunkt der beiden die V-förmige Gestalt bildenden Schenkel entsprechenden Zone der Schüttung infolge niedrigerer Temperatur sich deutlich abzuflachen vermag.

Auch zeigt sich gar als besonderer Nachteil bei der Verkohlung in herkömmlichen Vorrichtungen zur Verkohlung, dass Temperaturunterschiede in der Schüttung im Längsschnitt V-förmige Gestalt aufweisen können, so dass, z.B. in Abhängigkeit von der Zuführung der Biomasseteilchen auf die Schüttung, der Schüttung, der Luftzuführung, der Luft- oder Prozessgasführung in der Schüttung, Prozessabgasabführung, usw., heißere oder kältere Temperaturbereiche im Längsschnitt des Schachtreaktors V-förmig oder umgekehrt V-förmig sich auszubilden vermögen und sich eine deutlich uneinheitliche Verkohlung einstellt.

Auch zeigt sich. dass die radialen und axialen Temperaturunterschiede in herkömmlichen Anlagen oder Meilern derart miteinander zusammenzuwirken vermögen, dass die V-förmig verlaufenden Temperaturbereiche, die mit unzureichender Verkohlung einhergehen, hierdurch erzeugt werden oder gar deren Ausmaße sich verstärken können.

Diese im Längsschnitt durch den mit Holzteilchen befüllten Schachtreaktor sogenannte V-förmige Verkohlungszone ist ebenso zu vermeiden, da die Beschickung der Schüttung mit Biomasseteilchen, wie Holzteilchen, auf herkömmliche Weise weder Schritt mit der Geschwindigkeit der Verkohlung der Biomasseteilchen in der Außenzone halten kann, noch das Ausmaß der Verkohlung in dem Inneren der Schüttung sensorisch in hinreichender Weise unter Umständen kontrollierbar sein kann.

Die V-förmige Verkohlungszone oder der V-förmige Temperaturunterschied in der Schüttung während der Verkohlung wird ebenso wenig von dem Stand der Technik erkannt, geschweige denn versucht, die V-förmige Verkohlungszone zu verhindern.

Auch zeigt sich bei dem Betreiben der erfindungsgemäßen Anlage, dass für die ausgewogene Verkohlung das geschickte Zusammenwirken der Steuerung von Prozessgasabzug , wie mittels Prozessgaskontrolleinrichtung, über das Kopfende des Schachtreaktors, von Druck im Schachtreaktor, zum Beispiel in dem Bereich des Kopfendes desselben, und von Geschwindigkeit der angesaugten bzw. der der Schüttung zugeführten Luft und/ oder der abgezogenen Prozessgase miteinander auch wesentlich ist.

Des Weiteren sind die Bedeutung und das Zusammenspiel von Prozessgasabzug mit dem Druck in dem Schachtreaktor und der Geschwindigkeit der außerhalb des Schachtreaktors angesaugten oder teilweise angesaugten oder zugeführten Luft und/ oder der abgezogenen Prozessgase im Stand der Technik nicht erkannt, so dass das bloße Nachmachen des Arbeitsprinzips des seit langem bekannten Holzkohlemeilers durch die Bereitstellung des herkömmlichen Schachtes mit der unteren Öffnung und der Luftzuführeinrichtung sowie Ablöschen der Holzkohle den zeitgemäßen Anforderungen an die Verkohlung, wie der Bereitstellung einheitlicher verkohlter Pflanzenkohleteilchen hoher Güte mittels eines umweltschonenden Verfahrens mit einem hohen Wirkungsgrad in einer wirtschaftlichen Betriebsweise nicht gerecht wird.

In einer Ausgestaltung der erfindungsgemäßen umweltfreundlichen selbstständig regelbaren Anlage können der Druck im Bereich des Kopfendes des Schachtreaktors und die Geschwindigkeiten der, z.B. über die Belüftungsdosiereinrichtung kontrolliert, angesaugten Luft und/ oder der, z.B. über die Prozessgaskontrolleinrichtung in der Prozessgasleitung kontrolliert, abgezogenen Prozessgase mit Hilfe herkömmlicher hitzestabiler Drucksensoren und Geschwindigkeitssensoren bestimmt und deren Messgrößenergebnisse zur Verkohlungssteuerung verwendet werden.

In einer Ausgestaltung der erfindungsgemäßen Anlage leitet die Belüftungsdosiereinrichtung die Luft dem Gitter kontrolliert, z.B. demjenigen vorbestimmten Bereich des Gitters, zu, der unter oder unterhalb eines Bereich der Schüttung mit einer Temperatur sich befinden kann, welche Temperatur nach Maßgabe der o.g. festgestellten Parameter zu verändern ist. Die Belüftungsdosiereinrichtung kann ein, vorzugsweise längs der Mitte-Längsachse A sich erstreckendes, Luftleitungsrohr und ein Außenrohr mit dem Luftaustritt aufweisen, das Außenrohr ein oberes Ende des Luftleitungsrohrs aufnimmt, wobei das Außenrohr mit dem Luftleitungsrohr beweglich verbunden ist, vorzugsweise ein unteres Ende des Luftleitungsrohr eine weitere Öffnung aufweist, das Luftleitungsrohr mit einem Luftaußenrohr, über welches Luft von außen zugeführt ist, verbunden ist, vorzugsweise die Teilchenfördereinrichtung im Bereich des Kopfendes, vorzugsweise in der, vorzugsweise dicht verschliessbaren, Eintragsöffnung, angeordnet ist, welche eine Schütteinrichtung zur kontrollierten Beschickung der Schüttung mit Biomasseteilchen, wie Holzteilchen, umfasst, z.B. die Schütteinrichtung ein Schüttelgitter zur gleichmäßigen Verteilung der Biomasseteilchen auf der Schüttung, und / oder ein Verteilerblech oder eine Rutsche zur kontrollierten Beschickung der Oberfläche der Schüttung mit Biomasseteilchen aufweist, insbesondere das Verteilerblech um eine Mitte-Längsachse A des Schachtes drehbar gelagert ist, vorzugsweise die Länge und/oder die Neigung des Verteilerblechs veränderbar sind.

Die erfindungsgemäße umweltfreundliche selbstständig regelbare Anlage zur kontinuierlichen Erzeugung von Pflanzenkohle aus Biomasse, vorzugsweise Holz, umfasst auch einen Schachtreaktor, der oder dessen -mantel aus einem feuerfesten, z.B. metallenen, Werkstoff hergestellt sein kann. Sein Kopfende kann mit einer Eintragsöffnung versehen sein. Die Eintragsöffnung kann auf herkömmliche Weise hermetisch, z.B. mittels einer herkömmlichen Schleuseneinrichtung, wie eines Schiebers oder einer Klappe, verschließbar sein. Der dichte Verschluss des Kopfendes des Schachtreaktors ermöglicht die Bestimmung des Drucks in demselben. Das von dem Schachtreaktormantel begrenzte Innere kann die Schüttung mit den Biomasseteilchen zur Verkohlung aufnehmen, wobei eine Schüttungshöhe in dem Schachtreaktor, vorzugsweise eine nach Maßgabe von mindestens einem Sollwert vorbestimmte Schüttungshöhe, eingehalten und mittels Messeinrichtung überwacht werden kann.

Der Schachtreaktor kann einen Durchmesser von 200 bis 300 cm, vorzugsweise 270 cm, haben und eine Höhe von 5 bis 7 m, vorzugsweise 5 bis 6 m, z.B. 6 m, aufweisen. Der Schachtreaktor kann mit Holzteilchen zu einer Höhe von ca. 3 bis 4 m aufgefüllt sein. Sein Fußende kann spitz zulaufend, wie konusförmig, trichterförmig oder eckig zulaufend ausgestaltet sein; das Fußende des Schachtreaktors kann eine Höhe von 1,20 m aufweisen. Es zeigt sich, dass der Grundriss des Schachtreaktors für das Zusammenwirken der Einrichtungen der erfindungsgemäßen Anlage und Verfahrens unerheblich ist.

Die in dem Schachtreaktor ausgebildete Schüttung bewegt sich, vorzugsweise fortlaufend, als Wanderbett von der Eintragsöffnung, bzw. von dem Kopfende, des Schachtreaktors in Richtung zu der Austragsöffnung, bzw. zu dem Fußende, des Schachtreaktors hin mit einer, vorzugsweise vorbestimmten, Geschwindigkeit, -vorzugsweise langsam-, von oben nach unten durch den mittigen zwischen dem Kopfende und dem Fußende angeordneten Abschnitt. Die Verkohlung, z.B. der Biomasseteilchen zu Pflanzenkohleteilchen, wie die des Holzes, erfolgt in der Verkohlungszone der Schüttung durch das Einleiten vorbestimmter geringer Mengen an Luft, die von unten über die Belüftungsdosiereinrichtung infolge der Verkohlung in den Schachtreaktor geleitet oder dorthin angesaugt wird.

Über das Kopfende des Schachtreaktors, z.B. über die Eintragsöffnung, werden die Prozessgase über eine Prozessgasleitung abgezogen. In der Prozessgasleitung kann in einer besonderen Ausgestaltung der erfindungsgemäßen Anlage eine, insbesondere von der Steuereinrichtung angesteuerte, Prozessgaskontrolleinrichtung, z.B. eine Stellklappe, ein Ventil oder dergleichen, angeordnet sein, die die Prozessgasleitung zu öffnen und zu verschließen vermag. Mit Hilfe der Stellklappe können je nach Erfordernis der Verkohlung, deren Ausmaß, und Temperaturen in der Schüttung, usw. , vorzugsweise parameterkontrolliert, das Volumen der aus dem Schachtreaktor abzuziehenden oder abgezogenen Prozessgase und/oder die Geschwindigkeit des in dem Abströmungsbereich aus der Schüttung entweichenden Prozessgases gesteuert werden; unter Abströmungsbereich kann man im Sinne der Erfindung auch die dem Kopfende zugewandte Oberfläche der Schüttung verstehen.

Mit Hilfe der Stellklappe können das Volumen und/oder die Geschwindigkeit, z.B. als Luftvolumenstrom, der über die Belüftungsdosiereinrichtung infolge Hitze und Sauerstoffverbrauchs in der Verkohlungszone angesaugten oder zu dieser zugeführten Luft in den Schachtreaktor vorteilhafterweise ebenso gesteuert werden. Das Maß des Öffnens und Verschließens der Prozessgasleitung mit Hilfe der Prozessgaskontrolleinrichtung kann abhängen von der Temperatur des Prozessgases im Bereich des Kopfendes im Schachtreaktor und / oder des Prozessgasvolumenstroms in der Prozessgasleitung.

Durch die prozessgasmengenkontrollierte Verkohlung in dem Schachtreaktor kann das Auftreten von Temperaturunterschieden, wie radialen Temperaturunterschieden und der V-förmigen Temperatur- oder Verkohlungszonen, im Schachtreaktor während der Verkohlung wirkungsvoll vermieden werden.

Auch kann mittels einer Druckmesseinrichtung im Bereich des Kopfendes, z.B. oberhalb der Oberfläche der Schüttung, des Schachtreaktors der Druck bestimmt werden, so dass je nach Druckverhältnissen in dem Schachtreaktor infolge der durch die Druckmesseinrichtung bestimmten Istwerte in die Verkohlung von außen ohne Weiteres wirkungsvoll eingegriffen werden kann durch das verstärkte Ansaugen der Luft über die Belüftungsdosiereinrichtung infolge Öffnens oder durch das Zurückfahren der Luftansaugung oder -zuführung infolge Verschließens der Prozessgasleitung mittels der Prozessgaskontrolleinrichtung, wie im Fall des dicht verschlossenen Kopfendes.

Es zeigt sich, dass die prozessgasgeschwindigkeitskontrollierte und/oder prozessgasmengenkontrollierte, zusammengefasst prozessgaskontrollierte, Verkohlung in dem Schachtreaktor das Auftreten z.B. radialer Temperaturunterschiede, axialer Temperaturunterschiede und der V-förmigen Verkohlungszone im Schachtreaktor während der Verkohlung vorteilhafterweise vermeiden helfen oder zumindest steuern kann.

Das parameterkontrollierte, z.B. das prozessgasgeschwindigkeits-, druck- und/oder prozessgasmengenkontrollierte, Abführen von Prozessgas aus dem Kopfende des Schachtreaktors trägt ebenso im Gegensatz zum Stand der Technik unerwarteterweise zu den erstmals durch die erfindungsgemäße Anlage und Verfahren sich einstellenden technischen Erfolge infolge des geschickten Zusammenwirkens der Einrichtungen und der umfassenden parameterkontrollierten Steuerung derselben und zu der erwünschten einheitlichen Verkohlung im Schachtreaktor bei und hilft ganz besonders, das Auftreten von in herkömmlichen Schachtreaktoren auftretenden Zonen unterschiedlicher Temperaturen oder Glimm- und Flammenzonen in verschiedenen Bereichen der Schüttung oder des Wanderbetts unterschiedlichen Abstands von dem Gitter zu vermeiden.

In einer weiteren Ausgestaltung der erfindungsgemäßen Anlage kann in der Prozessgasleitung als Prozessgaskontrolleinrichtung auch eine Prozessgasfördereinrichtung, z.B. ein Gebläse, ein Ventilator, angeordnet sein, die nicht nur die Prozessgasleitung zu öffnen und zu verschließen vermag, sondern auch die Menge der abzuziehenden Prozessgase fördern oder verringern kann je nach Verkohlungszustand.

Die Prozessgase aus dem Schachtreaktor können in einer Ausgestaltung der erfindungsgemäßen Anlage und Verfahren, z.B. über die Prozessgasleitung, einer Brennkammer zugeführt werden zum Abfackeln der Prozessgase mittels eines in der Brennkammer befindlichen Brenners und/oder zur Erzeugung zusätzlicher thermischer Energie.

Auch können die Prozessgase in einer anderen Ausgestaltung der erfindungsgemäßen Anlage und Verfahren alternativ oder zusätzlich, ggf. nach deren Abkühlung, einem Wärmetauscher zur Weiterleitung thermischer Energie zugeleitet werden, welche thermische Energie z.B. zur Trocknung von Klärkuchen, Gärresten oder Klärschlämmen aus Kläranlagen eingesetzt wird, so dass anschließend deren Trockenmasse zu Stücklingen zusammengepresst wird zur sich anschließenden Verkohlung derselben.

Ebenso kann in einer weiteren Ausgestaltung der erfindungsgemäßen Anlage die Wärme der Prozessgase, die eine Temperatur beispielsweise von 80 bis 100°C aufweisen können, zusätzlich oder alternativ über einen zwischengeschalteten Wärmetauscher einer Dampfturbine zur Erzeugung elektrischer Energie zugeleitet werden, um möglichst den Energieverlust aus Umweltschutzgründen niedrig zu halten.

Darüber hinaus zeigt sich der Vorteil, dass die über die Wärmetauscher geleiteten Prozessgase nicht nur getrocknet, sondern auch aus ihnen die Teer, Säuren, organische Lösungen und dergleichen enthaltenden Bestandteile entfernt werden können. Die Bestandteile können in einer besonderen Ausgestaltung der erfindungsgemäßen Anlage einer weiteren Verarbeitung, wie Fraktionierung in ihre Anteile, zugeführt werden; einige der Anteile eignen sich zur Bereitstellung pharmazeutischer Erzeugnisse und als Grundstoffe zur chemischen Verarbeitung.

Die aus der Brennkammer abgeleiteten Abgase können in einer anderen Ausgestaltung der erfindungsgemäßen Anlage und Verfahren alternativ oder zusätzlich einem Wärmetauscher zur Weiterleitung thermischer Energie zugeleitet werden, welche thermische Energie z.B. zur Trocknung von Klärkuchen, Gärresten oder Klärschlämmen aus Kläranlagen eingesetzt wird, so dass anschließend deren Trockenmasse zu Stücklingen zusammengepresst wird, welche der erfindungsgemäßen Anlage zur Verkohlung derselben zugeführt werden können.

Ebenso kann die Wärme der Abgase in einer besonderen Ausgestaltung der erfindungsgemäßen Anlage zusätzlich oder alternativ über einen zwischengeschalteten Wärmetauscher einer Dampfturbine, einem Dampfmotor, einem Sterlingmotor, einer ORC-Technik, oder dergleichen, z.B. zur Erzeugung elektrischer Energie zugeleitet werden, um möglichst den Energieverlust aus Umweltschutzgründen gering zu halten und die Betriebskosten der erfindungsgemäßen Anlage niedrig zu halten.

In einer zusätzlichen Ausführungsform der erfindungsgemäßen Anlage können die, z.B. über die Eintragsöffnung des Schachtreaktors abgezogenen, erhitzten Gase, wie Prozessgase, zu einem Wärmeaustauscher zur Gewinnung thermischer Energie und/oder zu einer Brennkammer als Verbrennungskammer zur Erzeugung thermischer und /oder elektrischer Energie weitergeleitet werden.

Das Gitter kann sich vorzugsweise in dem Übergangsbereich zwischen dem mittigen Abschnitt des Schachtreaktors oder -mantels und dessen Fußende befinden. Das Gitter umfasst beispielsweise gekreuzte Metallstäbe oder ein Metallgeflecht mit einer Maschenweite, die der Größe der bereitzustellenden verkohlten Holzteilchen entspricht. In einer besonderen Ausführungsform der erfindungsgemäßen Anlage kann die Maschenweite des Gitters einstellbar sein. In einer zusätzlichen Ausführungsform der erfindungsgemäßen Anlage wird die Maschenweite des Gitters durch eine die Gitterlocheinrichtung zur Veränderung der Maschenweite des Gitters, vorzugsweise parametermeterkontrolliert, angesteuert, um das Ausmaß des Passierens der Pflanzenkohleteilchen von der Größe derselben zu bestimmen und zu kontrollieren, welche auch von der Steuereinrichtung angesteuert werden kann.

In einer Ausgestaltung der erfindungsgemäßen Anlage ist das Fußende des Schachtreaktors konisch ausgebildet; die konische Ausgestaltung kann durch eine trichterförmige Ringschürze dargestellt sein, die an dem unteren Rand des Übergangsbereichs des Schachtreaktormantels, welcher innenseitig mit dem Gitter verbunden ist, angeformt sein kann.

Mindestens eine Belüftungsdosiereinrichtung kann in dem von der Ringschürze begrenzten Raum angeordnet sein. Das Ende der Belüftungseinrichtung, aus welchem die Luft in Richtung Schüttung hin ausströmt, kann gegen das Gitter angesetzt oder von diesem beabstandet angeordnet werden; auch kann das Ende der Belüftungseinrichtung an jedwede Stelle der Unterseite des Gitters, z.B. quer zur Mitte-Längsachse des Schachtreaktors, bewegt werden. Die Bewegungen des Endes können parameterkontrolliert mittels der Steuerungseinrichtung gesteuert sein. Die Belüftungsdosiereinrichtung ermöglicht das infolge der Verkohlung erfolgende Zuführen, Ansaugen oder, mittels Pumpen erfolgende, Zuführen von Luft in das Gitter oder vorbestimmte Stelle oder Bereichen desselben oder in den von der Ringschürze begrenzten Raum, z.B. in einem vorbestimmten also regelbaren Abstand des Außenrohrs der Belüftungsdosiereinrichtung zu der Unterseite des Gitters; auch kann diese das Volumen, ggf. auch die Temperatur und/oder die Zusammensetzung, der zugeführten Luft durch eine angesteuerte Verschlusseinrichtung der Belüftungsdosiereinrichtung, z.B. Ventil, Stellklappe, oder dergleichen, und /oder den Ort der Belüftung der Schüttung durch die Luftzuführung quer zur Mitte-Längsachse A, auch radiale Luftzuführung oder Radialverschiebung der Luftzuführung genannt, insbesondere parameterkontrolliert, steuern.

Es zeigt sich, dass im Gegensatz zum Stand der Technik erstmals infolge der durch die erfindungsgemäße Anlage und Verfahren sich einstellenden technischen Erfolge, bedingt durch das geschickte Zusammenwirken der Einrichtungen und die umfassende parameterkontrollierte Steuerung der Einrichtungen, eine einheitliche Verkohlung in dem Schachtreaktor erfolgt und erst durch das Vermeiden des Auftretens von in herkömmlichen Schachtreaktoren auftretenden Zonen unterschiedlicher Temperaturen oder Glimm- und Flammenzonen in verschiedenen Bereichen der Schüttung oder des Wanderbetts unterschiedlichen Abstands von dem Gitter eine einheitliche Pflanzenkohle gleichbleibender Güte, wie bez. Größe und Festigkeit, überraschend bereitgestellt wird.

Da erstmals die radialen, axialen und V-förmig verlaufenden Temperaturunterschiede festgestellt werden, beispielweise
eine starke Erhöhung der Temperatur in der Außenzone, auch äußeren Zone genannt,
eine Verringerung derselben in der mittigen Zone der Verkohlungszone oder der Schüttung,
ein Abflachen von Temperatur oder -gradienten in geneigter oder ansteigender Richtung von der Außenzone zu der mittigen Zone hin,
kann in der erfindungsgemäßen Anlage mit Hilfe der Belüftungsdosiereinrichtung Luft,
nicht nur in der Menge kontrolliert, auch luftmengenkontrolliert genannt,
sondern auch einem oder mehreren bestimmten Bereichen der Unterseite der Schüttung über das Gitter zonenbestimmt, auch zonenkontrolliert,
und /oder von den Bereichen vorbestimmt beabstandet, auch abstandskontrolliert,
zugeführt werden.

Das parameterkontrollierte, z.B. das luftmengenkontrollierte, zonenkontrollierte und/oder abstandskontrollierte, Zuführen von Luft trägt überraschenderweise ebenso im Gegensatz zum Stand der Technik erstmals durch die erfindungsgemäße Anlage und Verfahren sich einstellenden technischen Erfolge infolge des geschickten Zusammenwirkens der Einrichtungen und der umfassenden parameterkontrollierten Steuerung derselben und zu der erwünschten einheitlichen Verkohlung im Schachtreaktor bei und hilft ganz besonders, das Auftreten von in herkömmlichen Schachtreaktoren auftretenden Zonen unterschiedlicher Temperaturen oder Glimm- und Flammenzonen in verschiedenen Bereichen der Schüttung oder des Wanderbetts unterschiedlichen Abstands von dem Gitter zu vermeiden. Es zeigt sich, dass dieses parameterkontrollierte Belüften der Schüttung und die Steuerung des Belüftens betriebssicher ist und sich vorteilhafterweise auch für den Dauereinsatz der Anlage eignet.

Durch das Zusammenwirken der Luftzuführung sowohl in Richtung entlang des Radius des Schachtreaktormantels oder des Gitters, wie in einen Bereich der mittigen oder randständigen Position, als auch in axialer Richtung, wie parallel zu der Mitte-Längsachse A des Schachtreaktors oder Schachtreaktormantels, z.B. in unterschiedlicher Beabstandung von dem Gitter, auch Axialverschiebung der Luftzuführung genannt, wird die Verkohlungszone fein abgestimmt mit Luft über die Belüftungsdosiereinrichtung versorgt zur Bereitstellung einer einheitlichen radialen Temperatur in der Verkohlungszone.

Durch
das Heranfahren der Belüftungsdosiereinrichtung an die Unterseite, z.B. längs der Mitte-Längsachse A des Schachtreaktors, und/oder in radialer Richtung, z.B. in einen Bereich unterhalb der Unterseite des Gitters, wie an die mittige Zone oder Außenzone der Unterseite des Gitters, und
die Beschickung der mittigen Zone mit Luft in einem, wenn auch für die Verkohlung erforderlichen, beschränktem Umfang,
und /oder die Beschickung der Glutbettzone oder Verkohlungszone mit in Abhängigkeit von der Temperatur geregelter Luftzuführung,
werden erstmals der radiale Temperaturunterschied weitgehend beseitigt und
hinzukommend vorteilhafterweise das einheitliche Glutbett in der Verkohlungszone bereitgestellt sowie
das Auftreten der V-förmigen Verkohlungszone und/oder axial unterschiedlich verlaufenden Verkohlungszonen, welche in Kombination oder einzeln Glimm- und Flammenzonen in herkömmlichen Schachtreaktoren entsprechen können, im Schachtreaktor vermieden.

Die Verkohlung kann auch in weiteren Ausgestaltungen der erfindungsgemäßen Anlage alternativ oder zusätzlich durch die Geschwindigkeit der Ansaugung oder Zuführung der Luft über die Belüftungsdosiereinrichtung, also geschwindigkeitskontrolliert, geregelt werden, indem der Abzug der Prozessgase aus dem Kopfende des Schachtreaktors durch das Maß oder Vorgabe der durch die Prozessgaskontrolleinrichtung gesteuerten Durchgängigkeit der Prozessgasleitung bestimmt wird.

Infolge der prozessgasgeschwindigkeitskontrollierten Verkohlung in dem Schachtreaktor können Pflanzenkohle einheitlicher Güte und Zusammensetzung bereitgestellt werden.

Durch das einheitliche Glutbett mit der weitgehend übereinstimmenden Verkohlungstemperatur in der Schüttung wird Pflanzenkohle erzeugt, welche
von hoher Güte, wie solche mit hoher Festigkeit und hohem Kohlenstoffgehalt,
und
von einheitlicher Qualität, wie solche ohne Auftreten nicht verkohlter Holzteilchen, ist.

Zudem kann mit Hilfe der Belüftungsdosiereinrichtung die Verkohlung dergestalt gesteuert werden, dass umweltschonend die Bildung gesundheitsschädlicher Dämpfe und Prozessgase verringert werden und der Wirkungsgrad des Schachtreaktors beträchtlich gesteigert werden.

Mit der Erhöhung des Wirkungsgrades geht auch die Erhöhung der wirtschaftlichen Betriebsweise ohne Unterbrechung desselben einher.

Auch wird erstmals das Auftreten nicht verkohlter oder nur unzureichend verkohlter Holzteilchen weitgehend vermieden.

Um die technischen Erfolge der erfindungsgemäßen umweltfreundlichen selbstständig regelbaren Anlage noch zu erhöhen, kann die Teilchenfördereinrichtung eine Schütteinrichtung umfassen. Über die Schütteinrichtung wird die Oberfläche der in dem Schachtreaktor befindlichen Schüttung mit Holzteilchen beschickt.

Die Teilchenfördereinrichtung kann mit einer herkömmlichen Hubfördereinrichtung, wie einer Transportschnecke, einem Förderband, einem Becherwerk, einem Elevator oder Kratzkettenförderer, zum Antransport der Biomasseteilchen, wie Holzteilchen, als Zuführeinrichtung verbunden sein. Die Teilchenfördereinrichtung kann auch als eine herkömmliche Holzfördereinrichtung ausgestaltet sein.

Die Teilchenfördereinrichtung umfasst z.B. die Schütteinrichtung, die als Schüttelgitter zur gleichmäßigen Verteilung und Beschickung der Schüttung mit Biomasseteilchen, wie Holzteilchen, und/oder als Verteilerblech mit einer festlegbaren geneigten Ebene zur kontrollierten Beschickung der Oberfläche der Schüttung mit Holzteilchen oder mit einer Schütte ausgebildet ist. Von Vorteil ist ein Verteilerblech, welches um eine Mitte-Längsachse A des Schachtreaktors drehbar gelagert ist; zudem ist ganz von Vorteil ein Verteilerblech, dessen Ebene oder Länge längenveränderbar ist, so dass die Beladung der Oberfläche der Schüttung zonenabhängig erfolgen kann. Während der Verkohlung können die mittige Zone und/oder die Außenzone je nach Verkohlungszustand in der Schüttung, der durch die o.g. Messwerte oder Parameter ermittelt werden kann, mit Biomasseteilchen -kontrolliert- beschickt werden. Ebenfalls kann die Ebene des Verteilerblechs unterschiedlich geneigt werden, um z.B. die Geschwindigkeit der Beladung der Oberfläche der Schüttung, z.B. der mittigen Zone und/oder Außenzone, kontrolliert zu erhöhen oder zu verringern. Die Beschickung kann stufenlos erfolgen, wie radial, bezogen auf kreisförmigen Drehbereich, z.B. quer im rechten Winkel zu der Mitte-Längsachse des Schachtreaktors, und/oder kreisbogenförmig, um den Drehbereich oder die Mitte-Längsachse, und/oder in unterschiedlicher Höhe zur Schüttungsoberfläche.

In einer Ausgestaltung der erfindungsgemäßen Anlage ist die Schütteinrichtung als ein Schüttelgitter ausgestaltet, über welches die Oberfläche der Schüttung in dem Schachtreaktor gleichmäßig mit Biomasseteilchen, wie Holzteilchen, beschickt wird. In einer weiteren Ausformung der erfindungsgemäßen Anlage kann die Schütteinrichtung als Verteilerblech, auch Rutsche genannt, ausgebildet sein, die um eine Achse neigbar, auch schwenkbar genannt, sein kann. Über das Verteilerblech kann je nach Erfordernis oder Wunsch des Benutzers oder nach Verkohlungszustand oder Temperatur und / oder Luftvolumenstrom die Oberflächen der Zonen, wie mittige Zone oder Außenzone, der Schüttung Biomasseteilchen, wie Holzteilchen, beladen werden.

In einer anderen Ausformung der erfindungsgemäßen Anlage kann die Länge des Verteilerblechs veränderbar und festlegbar sein, so dass über das Verteilerblech jeder Bereich der Oberfläche der Schüttung in dem Schachtreaktor mit den Biomasseteilchen beladen werden kann und überdies die ortsbestimmte Beladung der Schüttung, auch orts- oder oberflächenkontrolliert genannt, der Luftstrom durch die Verkohlungszone im Allgemeinen und der Luftstrom in deren mittigen Zone und/oder Außenzone im Besonderen je nach Maßgaben der gemessenen Parameter als Istwerte gesteuert werden können. Durch die schüttungszonenkontrollierte Verkohlung in dem Schachtreaktor wird ebenso das Auftreten der radialen Temperaturunterschiede sowie der V-förmigen Verkohlungszone im Schachtreaktor während der Verkohlung wirkungsvoll vermieden.

In einer besonderen Ausgestaltung der erfindungsgemäßen Anlage kann auch die Neigung des Verteilerblechs veränderbar und festlegbar sein, so dass über das Verteilerblech jeder Bereich der Oberfläche der Schüttung in dem Schachtreaktor mit den Biomasseteilchen zeitnah, mit hoher Geschwindigkeit soweit erforderlich, beladen werden kann und zudem die ortsbestimmte Beladung der Schüttung, auch schnellbeladungskontrolliert genannt, und der Status der Verkohlungszone rasch durch die Veränderung des Luftstroms durch Schüttungshöhenveränderung in der Verkohlungszone im Allgemeinen und der Luftstrom durch Schüttungshöhenveränderung in deren mittigen Zone und/oder Außenzone im Besonderen je nach Maßgaben der gemessenen Parameter als Istwerte gesteuert werden können. Die schnellbeladungskontrollierte Verkohlung in dem Schachtreaktor unterstützt vorteilhafterweise, dass die radialen Temperaturunterschiede sowie die V-förmige Verkohlungszone im Schachtreaktor bei Betrieb nicht auftreten.

In einer vorteilhaften Ausgestaltung der erfindungsgemäßen Anlage kann die Höhe der Schüttung in dem Schachtreaktor, z.B. die Höhe der Schüttung verschiedener Zonen, wie die der mittigen Zone und die der Außenzone, durch herkömmliche Abstandsmesseinrichtungen bestimmt werden. In einer anderen vorteilhaften Ausgestaltung der erfindungsgemäßen Anlage kann der Abstand der Schütte von der Oberfläche der Schüttung ebenso verändert werden, so dass der Durchmesser des auf der Oberfläche der Schüttung ausgestalteten Schüttungskegels an den Durchmesser der "hot spots" angepasst werden kann; die höhenkontrollierte Be-schickung kann ebenso an die Erfordernisse während der Verkohlung angepasst werden.

Die radialen, axialen und V-förmig verlaufenden Temperaturunterschiede, beispielsweise eine starke Erhöhung der Temperatur in der Außenzone, auch äußeren Zone genannt, eine Verringerung derselben in der mittigen Zone der Verkohlungszone oder der Schüttung, ein Abflachen der Temperatur in geneigter oder ansteigender Richtung von der Außenzone zu der mittigen Zone hin oder vice versa können mit Hilfe der Teilchenfördereinrichtung gesteuert werden
nicht nur durch die Menge der hinzuzugebenen Biomasseteilchen kontrolliert, auch mengenkontrolliert genannt,
sondern auch durch die Beschickung eines oder mehrerer bestimmter Bereiche der Oberfläche der Schüttung zonenbestimmt, auch zonenkontrolliert,
und /oder durch die Geschwindigkeit der Beschickung, auch geschwindigkeitskontrolliert,
und/oder durch die Größe der Biomasseteilchen, auch teilchengrößenkontrolliert.

Das parameterkontrollierte, z.B. das mengenkontrollierte, zonenkontrollierte, geschwindigkeitskontrollierte, höhenkontrollierte und/oder teilchengrößenkontrollierte, Zuführen von Biomasseteilchen trägt ebenso im Gegensatz zum Stand der Technik unerwarteterweise zu den erstmals durch die erfindungsgemäße Anlage und Verfahren sich einstellenden technischen Erfolge infolge des geschickten Zusammenwirkens der Einrichtungen und der umfassenden parameterkontrollierten Steuerung derselben und zu der erwünschten einheitlichen Verkohlung im Schachtreaktor bei und hilft ganz besonders, das Auftreten von in herkömmlichen Schachtreaktoren auftretenden Zonen unterschiedlicher Temperaturen oder Glimm- und Flammenzonen in verschiedenen Bereichen der Schüttung oder des Wanderbetts unterschiedlichen Abstands von dem Gitter zu vermeiden.

Die erfindungsgemäße Anlage erweist sich als betriebssicher aufgrund ihrer umfassenden parameterkontrollierten Betriebsweise, so dass der Ablauf der Verkohlung der Biomasse überwacht und mit dem Instrumentarium der Einrichtungen der Anlage der Benutzer derselben in der Lage ist, die Verkohlung im Schachtreaktor entsprechend der Vorgaben stattfinden lassen.

Die erfindungsgemäße umweltfreundliche selbstständig regelbare Anlage zur kontinuierlichen Erzeugung von Pflanzenkohle, wie Holzkohle, aus einer Biomasse, vorzugsweise Holz, in einer Schüttung als Wanderbett mit einem Schachtreaktor umfasst einen ein Kopfende und ein Fußende umfassenden Schachtreaktormantel zur Aufnahme der Pflanzenkohle, mindestens eine Teilchenfördereinrichtung zur Beförderung der Biomasseteilchen in den Schachtreaktor, mindestens eine Belüftungsdosiereinrichtung zur Zuführung der Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, insbesondere eine mit der Austragsöffnung verbundene Auffangeinrichtung zur Ablöschung der aus der Austragsöffnung des Schachtreaktors bewegten Pflanzenkohle, wobei ein Gitter in einem Inneren des Schachtreaktors in einem Übergangsbereich zwischen dem mittigen Abschnitt des Schachtreaktors und dem Fußende zur Abstützung der Schüttung angeordnet ist, das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr, über welches Luft von außen zuführbar ist, verbunden ist, und/oder die Teilchenfördereinrichtung im Bereich des Kopfendes angeordnet ist, welche eine Schütteinrichtung umfasst, die Schütteinrichtung ein Schüttelgitter zur gleichmäßigen Verteilung und Beschickung der Schüttung mit Biomasseteilchen, wie Holzteilchen, und / oder ein Verteilerblech oder eine Rutsche zur kontrollierten Beschickung der Oberfläche der Schüttung mit Biomasseteilchen aufweist, vorzugsweise das Fußende des Schachtreaktormantels konisch, vorzugsweise mit einer trichterförmigen Ringschürze, ausgebildet ist. Zudem kann zur gleichmäßigen radialen Temperaturführung in der Schüttung die Beschickung der Schüttung mit Biomasseteilchen in Menge und Oberflächenverteilung und/oder die Luftzuführung in Volumen und Position mittels Messeinrichtungen gesteuert sein. Auch ist es möglich, wenn die Länge und /oder die Neigung des, vorzugsweise um eine Achse drehbaren, Verteilerblechs einstellbar und steuerbar sind. In der Austragsöffnung des Fußendes des Schachtreaktors kann eine Teilchenzähleinrichtung als Messeinrichtung, vorzugsweise eine Zellradschleuse, zur Bestimmung der Anzahl der die Austragsöffnung passierenden Pflanzenkohleteilchen und der Menge des Ablöschwassers zum Ablöschen derselben angeordnet sein. Vorzugsweise sind der Abstand eines oberen Endes des Außenrohrs von der Unterseite des Gitters festlegbar und/oder das Außenrohr und/oder das Luftleitungsrohr quer und/oder längs zu einer Mitte-Längsachse A des Schachtreaktors verschiebbar. Besonders bevorzugt ist, dass eine Nachverkohlungszone auf der in der Austragsöffnung des Schachtreaktors befindlichen Teilchenzähleinrichtung als Messeinrichtung, vorzugsweise eine Zellradschleuse, zur Bestimmung der Dauer der Nachverkohlung, der Anzahl der die Austragsöffnung passierenden Pflanzenkohleteilchen und /oder zur Bestimmung der Menge an Ablöschwasser angeordnet ist. So können das Verhältnis des Durchmessers des Gitters zu dem Abstand des oberen, dem Kopfende zugewandten Endes des Außenrohrs zu der Unterseite des Gitters 5 bis 50, vorzugsweise 10 bis 50 oder 20 bis 35, noch mehr bevorzugt 27 bis 30, und / oder das Verhältnis des Durchmessers des Gitters zu dem Durchmesser des Außenrohrs 5 bis 40, vorzugsweise 10 bis 30 oder 10 bis 20, noch mehr bevorzugt 12 bis 15, betragen. Bevorzugterweise ist eine Prozessgaskontrolleinrichtung, vorzugsweise eine Stellklappe oder Ventilator, in einer von dem Kopfende abgehenden Prozessgasleitung zur Weiterleitung der Gase angeordnet zum Verschließen und Öffnen derselben. Über die Prozessgasleitung können die Prozessgase einer Brennkammer zum Abfackeln und/oder zur Gewinnung zusätzlicher thermischer Energie leitbar sein. Auch der Druck in dem Kopfende des Schachtreaktors und/ oder die Geschwindigkeit der angesaugten Luft in der Belüftungsdosiereinrichtung und/ oder die Geschwindigkeit der aus der Schüttung abgezogenen Prozessgase können mittels Messeinrichtungen bestimmt sein. Herkömmliche Messeinrichtungen sind zudem zur Bestimmung der Höhe der mittigen Zone und der Außenzone der Schüttung im Kopfende des Schachtreaktors angeordnet. *Die Auffangeinrichtung kann eine Sortierungs- und Zerkleinerungseinrichtung umfassen zur Klassierung der Pflanzenkohleteilchen nach Größe, Form und*/*oder Verkohlungsgrad derselben und zur Aussortierung von Fremdstoffen.* Auch die Maschenweite des Gitters ist einstellbar. Von Vorteil ist, wenn die Teilchenfördereinrichtung mit dem Verteilerblech und/oder die Belüftungsdosiereinrichtung über eine Steuereinrichtung angesteuert sind, wobei die im Bereich des Gitters und/oder Kopfendes angebrachten Messeinrichtungen Temperaturen der Zonen, vorzugsweise der mittigen Zone und Außenzone, der im Bereich der auf dem Gitter lastenden Schüttung und / oder des Luftvolumenstroms in denselben oder in einer mit dem Kopfende verbundenen Prozessgasleitung bestimmen und die mit den Temperaturen als Istwerte korrespondierenden Signale an die Steuerungseinrichtung weiterleiten; die Steuerungseinrichtung kann die Istwerte mit Sollwerten vergleichen, gegenüber den Sollwerten Regelabweichungen feststellen und die mit den Regelabweichungen korrespondierenden Steuerungssignale an die Teilchenfördereinrichtung zur Bestimmung der Aufschüttung der Oberfläche der Schüttung mit Biomasseteilchen nach Ort, Geschwindigkeit und/oder Dauer und/oder an die Belüftungsdosiereinrichtung zur Bestimmung der Dauer, der Geschwindigkeit der Luftzuführung und/oder des Abstandes des oberen Endes des Außenrohrs von der Unterseite des Gitters weiterleiten. Auch ist es von Vorzug, dass das obere Ende des Außenrohrs mit einer Venturi-Düse zur gerichteten Luftzuführung ausgebildet ist, welche um eine mit der Mitte-Längsachse des Außenrohrs übereinstimmende Schwenkachse schwenkbar und deren Ausrichtung festlegbar ist. Unterhalb des Gitters kann eine Nachverkohlungszone angeordnet sein; die Intensität der Nachverkohlungszone kann nach Maßgaben der Füllstandshöhe und/oder der Temperatur derselben oder in derselben steuerbar sein. Pflanzenkohle und /oder sonstige Bestandteile können in kontrollierter Menge, großer Ausbeute und hoher Güte und einheitlicher Qualität herstellbar sein mit der umweltfreundlichen selbstständig regelbaren Anlage zur kontinuierlichen Erzeugung von Pflanzenzkohle aus Biomasse, vorzugsweise Holz.

Die Teilchenfördereinrichtung kann als eine Verteilereinrichtung zur Gewinnung von hochwertiger einheitlicher Pflanzenkohle aus der Biomasse in der erfindungsgemäßen Anlage oder Meiler ausgestaltet sein oder zumindest eine Verteilereinrichtung umfassen; der Einfachheit halber wird im Folgenden auch von Verteilervorrichtung statt Verteilereinrichtung gesprochen. Die Verteilervorrichtung kann mit einer Zuführeinrichtung verbunden sein. Vorzugsweise ist die Zuführeinrichtung in der Eintragsöffnung des Schachtreaktors angeordnet zur Abgabe der Biomasse an die Verteilervorrichtung, bevorzugterweise mit dieser luftdicht verbindbar. In einer Ausgestaltung derselben umfasst die Verteilervorrichtung eine Schütteinrichtung mit einer neigbaren Schütte und einer die Schütteinrichtung zur Drehung antreibenden Antriebseinrichtung.

Die Verteilervorrichtung kann zudem gekennzeichnet sein durch eine um eine Vertikaldrehachse drehbare Schütteinrichtung und eine Antriebseinrichtung zur kontrollierten Beschickung einer Schüttung des Meilers mit der Biomasse, die eine stufenlos neigbare Schütte zur stufenlosen radialen Beschickung derselben aufweist; so kann die eine Hauptantriebseinrichtung aufweisende Schütteinrichtung von der Antriebseinrichtung um die Vertikaldrehachse drehbar angetrieben sein zur Beschickung der Oberfläche der Schüttung im Bereich um die Vertikaldrehachse derselben. Es ist möglich, dass die Schütteinrichtung eine Schütte aufweist, welche um eine, vorzugsweise quer zu der Vertikaldrehachse ausgerichtete, Horizontalschwenkachse neig- oder schwenkbar ausgebildet ist. Vorzugsweise ist die Schütte mit ihrem oberen Ende mit der Hauptantriebseinrichtung gelenkig verbunden und mit ihrem von ihrem oberen Ende beabstandeten unteren Abschnitt an einem entlang einer, vorzugsweise parallel zu der Vertikaldrehachse ausgerichteten, Achse verschiebbaren Rohr beweglich angelenkt zur stufenlosen Neigbarkeit der Schütte um die, vorzugsweise quer zu der Vertikaldrehachse ausgerichteten, Horizontalschwenkachse zur stufenlosen Radialbeschickung der Oberfläche der Schüttung. In einer Ausgestaltung der Verteilervorrichtung weist die Hauptantriebseinrichtung ein Antriebsaggregat und eine von demselben drehbar angetriebene Gewindestange oder Welle auf. Zum Beispiel ist die Gewindestange in dem Rohr zur Verschiebung desselben drehbar geführt und/oder die Gewindestange mit ihrem Außengewinde in einem Innengewinde des Rohrs drehbar geführt. Die Schütteinrichtung kann von einem Antriebsaggregat der Antriebseinrichtung um die Vertikaldrehachse V drehbar angetrieben sein. Bevorzugterweise weist die Schütteinrichtung in ihrem Rahmen die Hauptantriebseinrichtung und die von der Hauptantriebseinrichtung angetriebene Gewindestange auf, ist das Rohr aus dem Rahmen bewegbar, ist die Schütteinrichtung über ein Getriebe, vorzugsweise ein Antriebsritzel und Gliederkette, von dem Antriebsaggregat der Antriebseinrichtung angetrieben, wobei die Schütte mit ihrem oberen Ende über eine Koppel als Stange mit dem Rahmen gelenkig verbunden sein kann.

Die erfindungsgemäße betriebssichere, wie auch umweltfreundliche, selbstständig regelbare Anlage zur kontinuierlichen Erzeugung von homogener Pflanzenkohle aus einer Biomasse in einer Schüttung als Wanderbett mit einem, vorzugsweise hohlzylindrisch ausgebildeten, Schachtreaktor ist gekennzeichnet mit mindestens einer Verteilervorrichtung zur kontrollierten Beschickung der Biomasse auf die Schüttung in dem Schachtreaktor, einem ein Kopfende und ein Fußende umfassenden Schachtreaktormantel zur Aufnahme der Pflanzenkohle, einer Zuführeinrichtung, mindestens einer Belüftungsdosiereinrichtung zur Zuführung von Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, einer mit der Austragsöffnung verbundenen Auffangeinrichtung zur Ablöschung und -leitung der aus der Austragsöffnung des Schachtreaktors bewegten Pflanzenkohle, ein Gitter in einem Inneren des Schachtreaktors in einem Übergangsbereich zwischen dem mittigen Abschnitt des Schachtreaktors und dem Fußende zur Abstützung der Schüttung angeordnet ist, wobei die Zuführeinrichtung in der Eintragsöffnung, vorzugsweise mit dieser luftdicht verbindbar ist, angeordnet ist zur Abgabe der Biomasse an die Verteilervorrichtung, die Verteilervorrichtung im Bereich des Kopfendes des Schachtreaktors angeordnet ist, die Verteilervorrichtung eine Schütteinrichtung mit einer neigbaren Schütte und eine die Schütteinrichtung zur Drehung antreibende Antriebseinrichtung umfasst.

Vorteilhaft ist, dass die Neigung der Schütte und/oder Drehbarkeit der Schütteinrichtung einstellbar und steuerbar sind. Durch die Schütteinrichtung kann die Beschickung der Schüttung mit der Biomasse in Bezug auf deren Menge und Oberflächenverteilung mittels Messeinrichtungen angesteuert sein. Zur gleichmäßigen radialen und / oder vertikalen Temperaturführung in der Schüttung ist es bevorzugt, wenn das Ausmaß der Neigung der Schütte und der Drehbarkeit der Schütteinrichtung und/oder das Ausmaß der Beschickung der Schüttung mit der Biomasse in Bezug auf deren Menge und Oberflächenverteilung mittels Messeinrichtungen angesteuert sind; die Auffangeinrichtung kann ein Auffangbecken mit einer Berieselungseinrichtung, eine an das Auffangbecken angeschlossene mit einem Rührbecken verbundene von einem Antriebsaggregat angetriebene Transportschnecke, welche Pflanzenkohle von dem Auffangbecken in das Rührbecken weiterleitet, vorzugsweise eine Zellradschleuse mit der Transportschnecke verbunden ist, aufweisen. In Bereichen des Gitters und/oder des Kopfendes angebrachte Messeinrichtungen können Temperaturen der Zonen, vorzugsweise der mittigen Zone und Außenzone, der im Bereich der auf dem Gitter lastenden Schüttung und / oder des Luftvolumenstroms in Belüftungsdosiereinrichtung und/oder in denselben oder in einer mit dem Kopfende verbundenen Prozessgasleitung als Istwerte bestimmen und die mit den Istwerten korrespondierenden Signale an die Steuerungseinrichtung weiterleiten und/oder die Messeinrichtungen die Temperatur, die Feuchtigkeit, das Gewicht, Volumen der Pflanzenkohle und/oder Anzahl der Teile derselben in dem Auffangbecken, dem Rührbecken und/oder in einem Bereich der Transportschnecke als Istwerte bestimmen und die mit den Istwerten korrespondierenden Signale an die Steuerungseinrichtung weiterleiten. Die Schütteinrichtung, die Zuführeinrichtung, die Antriebseinrichtung und/oder die Belüftungsdosiereinrichtung und/oder Auffangeinrichtung sind über die Steuereinrichtung vorteilhafterweise angesteuert. Die Zuführeinrichtung kann eine Biomassezähleinrichtung, wie eine Zellradschleuse, zur kontrollierten Zuführung der Biomasse an die Verteilervorrichtung aufweisen. Von Vorzug ist, wenn die Steuerungseinrichtung die Istwerte mit Sollwerten vergleicht, gegenüber den Sollwerten Regelabweichungen feststellt und die mit den Regelabweichungen, soweit festgestellt, korrespondierenden Steuerungssignale an die Schütteinrichtung der Verteilervorrichtung und deren Antriebseinrichtung, die Zuführeinrichtung und/oder die Belüftungsdosiereinrichtung und/oder die Auffangeinrichtung weiterleitet.

Das kostengünstige Verfahren zur Erzeugung von einheitlicher Pflanzenkohle aus Biomasse in einem Wanderbett in einem im Gegenstrom zu der Pflanzenkohle von Luft durchströmten Schachtreaktor einer umweltfreundlichen selbstständig regelbaren Anlage zur kontinuierlichen Erzeugung der Pflanzenkohle aus Biomasse zeichnet sich auch aus, dass fortlaufend
die Temperaturen in der Schüttung, vorzugsweise zumindest in einer mittigen Zone und/oder in einer Außenzone und/oder im oberen und/oder unteren Bereich derselben,
die Temperaturen in einem Bereich des Gitters und/oder des Kopfendes,
der Volumenstrom der aus der Schüttung entweichenden Prozessgase in der Prozessgasleitung,
der Volumenstrom der der Schüttung zugeführten Luft und/oder
die Höhe der Schüttung in dem Schachtreaktor gemessen werden,
nach Maßgaben von Temperaturen und / oder Volumenstroms und/oder Höhe der Schüttung die Neigbarkeit der Schütte und/oder die Drehbarkeit der Schütteinrichtung angesteuert werden. Zudem können fortlaufend die Temperatur, die Feuchtigkeit, das Gewicht, Volumen und/oder Anzahl der Pflanzenkohle in dem Auffangbecken, dem Rührbecken und/oder im Bereich der Transportschnecke gemessen werden, nach Maßgaben von Temperaturen, Feuchtigkeit, das Gewicht, Volumen und/oder Anzahl der Pflanzenkohle die Ablöschung der Pflanzenkohle und/oder die Neigbarkeit der Schütte und/oder die Drehbarkeit der Schütteinrichtung angesteuert werden. Das Ausmaß der Neigung der Schütte und /oder der Drehung der Schütteinrichtung können sonach nach Maßgaben der Temperaturen und / oder Volumenstroms und/oder der Höhe der Schüttung durchgeführt werden.

So kann die Anlage mit einem Schachtreaktor umfassen einen ein Kopfende und ein Fußende umfassenden Schachtreaktormantel zur Aufnahme der Pflanzenkohle,
eine Zuführeinrichtung, mindestens eine Verteilervorrichtung zur kontrollierten Beschickung der Biomasse auf die Schüttung in dem Schachtreaktor
und/oder mindestens eine Belüftungsdosiereinrichtung zur Zuführung von Luft in den Schachtreaktor, wobei das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, und/oder eine mit der Austragsöffnung verbundene Auffangeinrichtung zur Ableitung und Weiterverarbeitung, wie Löschung, Klassierung, usw. der aus der Austragsöffnung des Schachtreaktors bewegten Pflanzenkohle, wobei ein Gitter in einem Inneren des Schachtreaktors in einem Übergangsbereich zwischen dem mittigen Abschnitt des Schachtreaktors und dem Fußende zur Abstützung der Schüttung angeordnet ist, wobei
die Zuführeinrichtung in der Eintragsöffnung, vorzugsweise die Zuführeinrichtung mit der Eintragsöffnung luftdicht verbindbar ist, angeordnet ist zur Abgabe der Biomasse an die Verteilervorrichtung,
die mit der Zuführeinrichtung verbundene Verteilervorrichtung im Bereich des Kopfendes des Schachtreaktors angeordnet ist,
die Verteilervorrichtung eine um eine Drehachse, vorzugsweise eine, insbesondere lot-oder senkrecht ausgerichtete, Vertikaldrehachse V, drehbare Schütteinrichtung und eine Antriebseinrichtung zur kontrollierten Beschickung der Schüttung in dem Schachtreaktor mit Biomasse umfasst, die eine, vorzugsweise stufenlos, neigbare Schütte zur stufenlosen radialen Beschickung derselben aufweist.

Das kostengünstige Verfahren zur Erzeugung von einheitlicher Pflanzenkohle aus einer Biomasse in einem Wanderbett in einem in einem Gegenstrom zu der Pflanzenkohle von Luft durchströmten Schachtreaktor einer betriebssicheren selbstständig regelbaren Anlage zur kontinuierlichen Erzeugung der Pflanzenkohle aus Biomasse ist gekennzeichnet, dass fortlaufend
die Temperaturen in der Schüttung, vorzugsweise zumindest in einer mittigen Zone und/oder in einer Außenzone derselben, und/oder
der Volumenstrom an Luft, der dem Schachtreaktor zugeführt wird, und/oder
der Volumenstrom der aus der Schüttung entweichenden Prozessgase, z.B. in einer Prozessgasleitung, und/oder
die Höhe der Schüttung in dem Schachtreaktor gemessen und/oder
die Temperatur, die Feuchtigkeit und/oder das Gewicht der Pflanzenkohle in der Auffangeinrichtung gemessen werden,
nach Maßgaben der Temperaturen und / oder des Volumenstroms und/oder der Höhe der Schüttung und deren Vergleich mit in der Steuereinrichtung festgelegten oder festlegbaren Sollwerten die Neigbarkeit der Schütte und/oder die Drehbarkeit der Schütteinrichtung angesteuert werden.

Unter der Biomasse werden im Sinne der Erfindung auch verstanden organische Stoffe, wie Abfälle aus Küche und Landwirtschaft, wie Gülle oder tierischer Mist, Klärkuchen, Gärreste oder Klärschlämme aus Kläranlagen, die getrocknet und zu Stücklingen, z.B. Gülle- oder Miststücklingen, gepresst und/ oder pflanzliche Stoffe, wie Holz, die zu Teilchen, wie Holzteilchen, zerkleinert sind. Auch kann die Biomasse kunststoffartige Materialien enthalten, deren Anteil auch von gesetzlichen Regelungen und/ oder verfahrenstechnischen Gründen bestimmt sein kann. Des Weiteren kann die Biomasse auch Kohlebestandteile enthalten oder solche gar sein.

Der Erfindung liegt auch zugrunde, dass die erfindungsgemäße Anlage zur kontinuierlichen Erzeugung von homogener Pflanzenkohle aus der Biomasse eine Verteilervorrichtung aufweist, die eine um eine, vorzugsweise zu der Mitte-Längsachse des Schachtreaktors parallel ausgerichtete, Drehachse V drehbare Schütteinrichtung umfasst, deren Schütte um eine Schwenkachse H, insbesondere eine Horizontalschwenkachse H, schwenkbar oder neigbar ist.

Die Verteilervorrichtung umfasst eine Schütteinrichtung, die um die Drehachse V, vorzugsweise um die lotrecht oder vertikal und/oder parallel zu der Mitte-Längsachse des Schachtreaktors ausgerichtete Drehachse V, wie Vertikaldrehachse V, -einen kreisförmigen Drehbereich beschreibend- drehbar ist, und eine von einer Steuereinrichtung ansteuerbare Antriebseinrichtung, deren Aggregat die Schütteinrichtung stufenlos -unabhängig von der Umlaufrichtung- gedreht werden kann. Die Schütteinrichtung weist eine Hauptantriebseinrichtung auf. Die von einer Steuereinrichtung ansteuerbare Hauptantriebseinrichtung umfasst beispielsweise ein Aggregat, mit der eine Gewindestange oder Welle stufenlos -unabhängig von der Umlaufrichtung- gedreht werden kann. Die Gewindestange kann mit einem Rohr, auch Teleskop genannt, drehbar verbunden sein, so dass durch die Drehung der Gewindestange das Rohr je nach Umlaufrichtung der Gewindestange eine Positionsänderung, z.B. bezogen auf die Gewindestange, erfährt. Die Aggregate können als herkömmliche Linearantriebe, die mittels elektrischen Stroms antreibbar sind, ausgestaltet sein.

In einer Ausgestaltung der Verteilervorrichtung ist die Gewindestange mit einem Außengewinde versehen, welches in einem Innengewinde des Rohrs drehbar geführt ist. Die Schütte kann mit ihrem oberen Ende mit der Hauptantriebseinrichtung gelenkig verbunden und mit ihrem von ihrem oberen Ende beabstandeten unteren Abschnitt an dem Rohr beweglich angelenkt sein. Vorzugsweise ist die Schütte mit der Hauptantriebseinrichtung über die Stange, insbesondere eine Koppel, derart gelenkig verbunden, dass durch die Verschiebbarkeit des Rohrs die Schütte stufenlos neigbar ausgebildet ist. In einer bevorzugten Ausgestaltung der erfindungsgemäßen Verteilervorrichtung ist die Schütte derart über die Stange mit der Hauptantriebseinrichtung gelenkig verbunden, dass die Schütte um die Schwenkachse H, insbesondere eine Horizontalschwenkachse H, geschwenkt bzw. geneigt wird. Das Ausmaß der Drehung der Gewindestange bestimmt das Ausmaß der Verschiebung des Rohrs längs einer, vorzugsweise parallel zu der Drehachse V, vorzugsweise der Vertikaldrehachse V, oder der Mitte-Längsachse des Schachtreaktors ausgerichteten Achse, und das Ausmaß der Neigung der Schütte um die Schwenkachse H, insbesondere die Horizontalschwenkachse H. Die Schwenkachse H kann zu der Drehachse und / oder zu der Mitte-Längsachse des Schachtreaktors im rechten Winkel ausgerichtet sein.

In einer besonderen Ausgestaltung der Verteilervorrichtung wird das Rohr über ein Getriebe von der Hauptantriebseinrichtung der Schütteinrichtung angetrieben, welches Getriebe beispielsweise ein Antriebsritzel und eine Gliederkette umfassen kann. Die Antriebseinrichtung der erfindungsgemäßen Verteilervorrichtung weist gleichfalls ein Aggregat, beispielsweise einen herkömmlichen Elektromotor, auf, von der die Schütteinrichtung gedreht werden kann, um die Drehachse V, vorzugsweise die Vertikaldrehachse. In einer Ausgestaltung der erfindungsgemäßen Verteilervorrichtung ist die Horizontalschwenkachse H, um welche die Schütte schwenkbar oder neigbar ausgestaltet ist, quer zu der Drehachse V der Schütteinrichtung ausgerichtet.

Mithilfe der Verteilervorrichtung kann das Verteilergut, mit welchem die Schütte beaufschlagt wird, vorteilhafterweise stufenlos in dem von dem Schwenkwinkel bestimmten radialen Schwenkbereich der Schütte ausgeworfen werden.

Hinzukommend weist die Verteilervorrichtung den Vorteil auf, dass das Verteilergut oder Biomasseteilchen nicht nur radial, bezogen auf einen kreisförmigen Drehbereich, ausgeworfen, sondern auch in dem Drehbereich um die Drehachse V ausgeschüttet werden kann, die mit der Mitte-Längsachse des Schachtreaktor zusammenfallen kann.

Durch die erfindungsgemäße Verteilervorrichtung kann das Verteilergut überdies punktuell gezielt auf bestimmte Stellen, soweit sie im radialen Schwenkbereich der Schütte und im Drehbereich der Schütteinrichtung sich befindet, ausgeschüttet werden.

Eine bevorzugte Ausführungsform der erfindungsgemäßen betriebssicheren selbstständig regelbaren Anlage zur kontinuierlichen Erzeugung von homogener Pflanzenkohle aus einer Biomasse in einer Schüttung als Wanderbett umfasst
einen Schachtreaktor mit einem Schachtreaktormantel mit einem Kopfende und einem Fußende zur Aufnahme der Pflanzenkohle,
eine Zuführeinrichtung zur Zuführung der Biomasse von außen an die Verteilervorrichtung,
mindestens eine Verteilervorrichtung zur kontrollierten Beschickung der Schüttung in dem Schachtreaktor mit der Biomasse,
mindestens eine Belüftungsdosiereinrichtung zur Zuführung von Luft in den Schachtreaktor,
wobei das Kopfende des Schachtreaktors eine Eintragsöffnung und eine Prozessgasleitung zur Ableitung von während der Verkohlung erzeugtem Prozessgas sowie das Fußende des Schachtreaktors eine Austragsöffnung aufweisen,
ein mittiger Abschnitt zwischen dem Kopfende und dem Fußende sich befindet,
eine mit der Austragsöffnung verbundene Auffangeinrichtung zur Ableitung der aus der Austragsöffnung des Schachtreaktors bewegten Pflanzenkohle,
eine in einer Prozessgasleitung angeordneten Prozessgaskontrolleinrichtung zur Bestimmung des Prozessgasvolumenstroms des Kopfendes, der durch die Prozessgasleitung desselben abgeleitet wird,
wobei ein Gitter in einem Inneren des Schachtreaktors in einem Übergangsbereich zwischen dem mittigen Abschnitt des Schachtreaktors und dem Fußende zur Abstützung der Schüttung angeordnet ist,
die Zuführeinrichtung in der Eintragsöffnung, vorzugsweise mit dieser luftdicht verbindbar, angeordnet ist zur Abgabe der Biomasse an die Verteilervorrichtung,
sowie
die Verteilervorrichtung im Bereich des Kopfendes des Schachtreaktors angeordnet ist,
eine um eine Drehachse V drehbare Schütteinrichtung, welche Schütteinrichtung eine, vorzugsweise stufenlos, neigbare Schütte zur stufenlosen radialen Beschickung der Schüttung in dem Schachtreaktor aufweist,
und
eine Antriebseinrichtung
umfasst.

In einer Ausgestaltung der erfindungsgemäßen Anlage ist die Verteilervorrichtung im Bereich des, vorzugsweise konisch ausgebildeten, Kopfendes des Schachtreaktors im Inneren desselben angeordnet und wird mit der Biomasse als Verteilergut über die Zuführeinrichtung beaufschlagt, welche in der Eintragsöffnung des Schachtreaktors sich befindet. Vorteilhafterweise kann die Oberfläche der Schüttung, die sich beispielsweise im Bereich des Kopfendes des Schachtreaktors befindet, fein dosiert und daher kontrolliert mit der Biomasse mit Hilfe der Verteilervorrichtung beschickt werden.

Die wesentlichen Vorteile der erfindungsgemäßen Anlage betreffen auch die kontrollierte Beschickung der Oberfläche der Schüttung im radialen Bereich, der also von der Drehachse V ausgehend in Richtung hin zu dem Schachtreaktormantel des Schachtreaktors verläuft. Von der mittigen Zone bis zu der äußeren Zone der Schüttung kann die Schüttung des Schachtreaktors je nach Erfordernis kontrolliert und stufenlos mit der Biomasse beschickt werden, so dass genau positioniert die Aufschüttung der Oberfläche der Schüttung in dem Schachtreaktor mit der Biomasse erfolgen kann.

Hinzukommend wird ebenso die Beschickung der Schüttung des Schachtreaktors kontrolliert und stufenlos mit der Biomasse in dem Drehbereich der Schütteinrichtung möglich gemacht, so dass jeder Bereich der Schüttung des Schachtreaktors in einem 360°-Bereich, z.B. je nach Temperaturstatus in der Schüttung, mit der Biomasse -ebenso genau positioniertversehen werden kann.

Durch das vorteilhafte Zusammenwirken der Schütteinrichtung mit der Antriebseinrichtung der Verteilervorrichtung der erfindungsgemäßen Anlage kann erstmals die Schüttung des Schachtreaktors den radialen ungleichmäßigen Temperaturverlauf dadurch beseitigen, dass diejenige Oberflächenzone der Schüttung, die auf oder oberhalb von einem Bereich hoher Temperatur angeordnet ist, mit einem höheren Ausmaß an Biomasse beschickt wird als diejenige Oberflächenzone der Schüttung, die auf oder oberhalb von einem Bereich niedriger Temperatur angeordnet ist.

Hinzukommend wird durch die erfindungsgemäße Anlage dem Auftreten von sogenannten "hot spots", also von punktuell in der Schüttung auftretenden Temperaturerhöhungen entgegengewirkt, da diejenige Oberflächenzone der Schüttung, die auf oder oberhalb von einem Bereich eines "hot spots" angeordnet ist, mit einem höheren Ausmaß an Biomasse beschickt wird als diejenige Oberflächenzone der Schüttung, die auf oder oberhalb von einem Bereich ausgeglichener Temperatur angeordnet ist.

Hinzutretend wird der zuweilen stark axiale ungleichmäßige Temperaturverlauf längs der Mitte-Längsachse des Schachtreaktors durch die erfindungsgemäße Anlage vermieden, da diejenige Oberflächenzone der Schüttung, die auf oder oberhalb von einem Bereich mit einem stark ungleichmäßigen axialen Temperaturverlauf wiederum mit einem kontrollierten Ausmaß an Biomasse beschickt werden kann verglichen mit einer solchen, die auf oder oberhalb von einem Bereich mit einem gleichmäßigen axialen Temperaturverlauf angeordnet ist.

Durch das Angleichen der Temperaturen in der Schüttung des Schachtreaktors lediglich zu einer weitgehend einheitlichen Temperatur durch Vermeiden
des axialen ungleichmäßigen Temperaturverlaufs,
des Auftretens von "hot spots",
des axialen stark ungleichmäßigen Temperaturverlaufs,
wird die Biomasse einheitlich verkohlt, so dass die durch die Anlage und Verfahren bereitgestellte Pflanzenkohle die geforderte Güte in Zusammensetzung, Form und Größe erstmals aufweisen kann.

Ebenso können umgekehrt durch gezielte, punktuelle genau positionierte Aufschüttung der Oberfläche der Schüttung mit der Biomasse Temperaturen in jedwedem Bereich in der Schüttung des Schachtreaktors erhöht werden. Die gezielte Erhöhung oder Erniedrigung der Temperaturen in der Schüttung in dem Schachtreaktor wird erstmals durch die erfindungsgemäße Anlage und das erfindungsgemäße Verfahren bereitgestellt.

Die von dem Stand der Technik ungelösten Probleme, nämlich Auftreten
unterschiedlicher Temperaturen in der mittigen Zone und der äußeren oder Außenzone,
stark unterschiedlicher Temperaturen in den oberen und unteren Bereichen der Schüttung,
unterschiedlicher Temperaturen als "hot spots" in der Schüttung,
werden wirkungsvoll beseitigt durch die erfindungsgemäße Anlage und das erfindungsgemäße Verfahren zum Betrieb derselben.

Hinzukommend können in Ausgestaltungen der erfindungsgemäßen Anlage und des Verfahrens die Schütteinrichtung, die Zuführeinrichtung, die Antriebseinrichtung, die Prozessgaskontrolleinrichtung und/oder die Belüftungsdosiereinrichtung über eine Steuereinrichtung angesteuert sein, die Steuereinrichtung von in Bereichen, z.B. des Gitters und/oder des Kopf- und/oder Fußendes und/oder mittleren Abschnitt angebrachten Messeinrichtungen Signale erhalten, die mit den von den Messeinrichtungen gemessenen Istwerten über Temperaturen der Zonen, vorzugsweise der mittigen Zone und Außenzone, der im Bereich der auf dem Gitter lastenden Schüttung und / oder des Luftvolumenstroms in denselben oder Temperaturen in einer mit dem Kopfende verbundenen Prozessgasleitung korrespondieren. Die Steuerungseinrichtung vergleicht die Istwerte mit den in der Steuereinrichtung festgelegten Sollwerten, stellt gegenüber den Sollwerten ggf. Regelabweichungen als Differenzen fest und leitet die mit den Regelabweichungen korrespondierenden Steuerungssignale an die Verteilervorrichtung mit der Schütteinrichtung und der Antriebseinrichtung deren Aggregat, die Zuführeinrichtung und deren Aggregat und/oder die Belüftungsdosiereinrichtung zu deren Ansteuerungen weiter.

Die herkömmlichen Messeinrichtungen können eine Vielzahl an Messwerten als Istwerte, z.B.
die Temperatur in der Schüttung in der mittigen Zone und/oder
die Temperatur in der Außenzone und/oder
die Temperatur im Bereich des Kopfendes des Schachtreaktors und/oder
die Temperatur im Bereich des Fußendes des Schachtreaktors und/oder
die Schüttungshöhen, wie die Schüttungshöhe in der mittigen Zone und /oder die Schüttungshöhe der Außenzone, und/oder
den Druck im Bereich des dicht verschlossenen Kopfendes und/oder
den Luftvolumenstrom im Bereich des Fußendes und/oder
die Temperatur, die Feuchtigkeit und/oder das Gewicht der Pflanzenkohle in der Auffangeinrichtung, wie in deren Auffangbecken, Rührbecken, und/oder im Bereich des Transportbandes oder der -schnecke
den Prozessgasvolumenstrom des Kopfendes, der aus der Schüttung ausströmt, und/oder
den Prozessgasvolumenstrom des Kopfendes, der durch die Prozessgasleitung desselben abgeleitet wird,
bestimmen
und die den Istwerten entsprechenden von den Messeinrichtungen erzeugten Signale an die Steuereinrichtung weiterleiten; die Istwerte z.B. werden mit deren jeweiligen Sollwerten in der Steuereinrichtung verglichen und die Regelabweichungen können als Steuerungssignale an die Einrichtungen der erfindungsgemäßen Anlage und Verfahren weitergeleitet werden, wie
die Verteilervorrichtung mit der Schütteinrichtung und Antriebseinrichtung,
die Prozessgaskontrolleinrichtung in der Prozessgasleitung und/oder
die Zuführungseinrichtung im Bereich des Kopfendes des Schachtreaktors und/oder
die Belüftungsdosiereinrichtung am Fußende des Schachtreaktors und/oder
die Auffangeinrichtung im Bereich des Fußendes des Schachtreaktors, wie in oder an der Austragsöffnung, und/oder
die Gitterlocheinrichtung zur Veränderung der Maschenweite des Gitters.

Das Fußende des Schachtreaktors kann die Belüftungsdosiereinrichtung aufweisen, die z.B. ein Luftleitungsrohr und ein Außenrohr aufweist, wobei das Außenrohr ein oberes Ende des Luftleitungsrohrs aufnimmt: Das Außenrohr kann mit dem Luftleitungsrohr beweglich verbunden sein, über welches Luft von außen zuführbar ist.

Die Zuführeinrichtung kann als eine Biomassezähleinrichtung, wie eine Zellradschleuse, zur kontrollierten Zuführung der Biomasse an die Verteilervorrichtung ausgestaltet sein. So können je nach Maßgaben
die Zuführeinrichtung ein vorbestimmtes Maß an Biomasse der Verteilervorrichtung zuleiten und/oder
die Verteilervorrichtung durch vorbestimmte Drehung und vorbestimmten Drehsinn der Schütteinrichtung und/oder durch vorbestimmte Neigung der Schütte derselben in einem vorbestimmten Ausmaß die Oberfläche der Schüttung mit Biomasse beschicken und/oder
die Belüftungsdosiereinrichtung ein vorbestimmtes Maß an Luft dem Schachtreaktor zuführen und/oder
die Prozessgaskontrolleinrichtung aus dem Kopfende des Schachtreaktors ein vorbestimmtes Maß an Prozessgasen abziehen und/oder
die mit der Austragsöffnung verbundene Auffangeinrichtung die aus der Austragsöffnung des Schachtreaktors bewegte Pflanzenkohle nach Maßgaben zu deren Weiterverarbeitung, wie Ablöschung, Klassierung, usw. weiterleiten.

Die erfindungsgemäße Anlage umfasst den Schachtreaktor mit dem mit einem ein Kopfende und ein Fußende umfassenden, vorzugsweise hohlzylindrisch ausgestalteten, Schachtreaktormantel, die mit dessen, vorzugsweise konisch ausgestalteten, Austragsöffnung verbundene Auffangeinrichtung, z.B. zur Ablöschung der aus der Austragsöffnung des Schachtreaktors bewegten Pflanzenkohle. Das Fußende des Schachtreaktormantels kann mit einer trichterförmigen Ringschürze ausgebildet sein.

Die Auffangeinrichtung kann die herkömmliche Ablöscheinrichtung umfassen; die ein Auffangbecken mit einer Berieselungseinrichtung zur Ablöschung der Pflanzenkohle, aufweisen kann, von welcher aus ein Transportband oder eine -schnecke die Pflanzenkohle in ein Rührbecken transportiert, in welcher die Pflanzenkohle mittels einer herkömmlichen Rühreinrichtung bewegt wird. Bereits durch das Rühren der Pflanzenkohle können ggf. noch verbliebene Glutnester oder noch glühende Pflanzenkohlenreste gelöscht und /oder zusätzlich mittels Hilfe einer weiteren Berieselungseinrichtung abgelöscht werden. Das Rührbecken ist an ein weiteres Transportband oder eine -schnecke angeschlossen, die die Pflanzenkohle in ein Sammellager überführt.

Die Auffangeinrichtung kann auch eine Pflanzenkohlenzähleinrichtung, wie eine Zellradschleuse, zur kontrollierten Abführung der Pflanzenkohle in z.B. das Sammellager aufweisen; vorzugsweise ist diese an das Transportband- oder -schnecke angeschlossen.

In dem Rührbecken, in dem Auffangbecken und/oder im Bereich des Transportbandes oder der -schnecke können Messeinrichtungen die Temperatur, die Anzahl und/oder das Volumen und/oder die Feuchtigkeit der Pflanzenkohle mit herkömmlichen Messeinrichtungen als Istwerte messen. Ebenso kann in dem Auffangbecken und/oder dem Rührbecken die Verwichtung der Pflanzenkohle stattfinden; zur Bestimmung des Gewichts der Pflanzenkohle in den Auffang- und Rührbecken eignen sich herkömmliche Messeinrichtungen.

Die den Istwerten entsprechenden von den Messeinrichtungen erzeugten Signale an die Steuereinrichtung weiterleiten; die Istwerte z.B. werden mit deren zugeordneten Sollwerten in der Steuereinrichtung verglichen und die Regelabweichungen können als Steuerungssignale an die Einrichtungen der erfindungsgemäßen Anlage und Verfahren weitergeleitet werden, wie an
die Berieselungseinrichtung von Auffangbecken und/oder Rührbecken,
die Rühreinrichtung des Rührbeckens und deren Antriebsaggregat,
die Antriebsaggregate von Transportband oder -schnecke, usw.
die Verteilervorrichtung mit der Schütteinrichtung und Antriebseinrichtung und deren Aggregate und/oder
die Prozessgaskontrolleinrichtung in der Prozessgasleitung und/oder
die Zuführungseinrichtung im Bereich des Kopfendes des Schachtreaktors und/oder
die Belüftungsdosiereinrichtung am Fußende des Schachtreaktors und/oder die Teilchenzähleinrichtung im Bereich des Fußendes des Schachtreaktors,
wie in oder an der Austragsöffnung, und/oder
die Gitterlocheinrichtung zur Veränderung der Maschenweite des Gitters.

Die Verteilervorrichtung als vollautomatische sensorgesteuerte zur Beschickung der Oberfläche der Schüttung mit der Biomasse über den gesamten Querschnitt des Meilers bzw. des Schachtreaktors zur Gewinnung von hochwertiger Biokohle unter Vermeidung von Fehlverkohlungen kann über die Zellradschleuse zentral die Biomasse auf die Verteilervorrichtung abgeben, die eine variable Verteilung der Biomasse mit einer Schüttung über die gesamte Meilerfläche bewirkt. Hierdurch wird mit einer wenig variierenden Dichte eine gleichmäßige Luftführung in der jeweiligen Querschnittszone des Meilers erzielt. Erfindungsgemäß wird dies durch eine Schütteinrichtung erreicht, die die Biomasse variabel in vorgegebenen Zonen verteilt, sowohl im Durchmesser wie auch punktuell nach Vorgabe des Temperaturverlaufes, welcher durch Sensoren in mehreren Querschnittenzonen erfasst wird. In Bereichen höherer Luftdurchlässigkeit erfolgt mit einer höheren Temperatur eine intensivere Verkohlung. Die Aufschüttung der Biomasse an Stellen der steigenden Temperatur bewirkt eine höhere Lagerungsdichte, die die Luftdurchlässigkeit verringert und die Kaminwirkung unterbindet bzw. reduziert. Erreicht wird dies durch eine bewegliche Schütte der Verteilanlage, die durch die einstellbare Neigung und einer Rundumbewegung den gesamten Oberflächenbereich des Meilers mit der Biomasse gezielt abdecken kann. Bei stillstehender Schütte erfolgt eine punktuelle Aufgabe der Biomasse. Die jeweilige Position der Schütte wird von den Temperatursensoren vorgegeben, sodass dieser Prozess selbsttätig geregelt erfolgt.

Der erfindungsgemäßen umweltfreundlichen selbstständig sich regelnden Anlage zur kontinuierlichen Erzeugung von Pflanzenkohle, wie Holzkohle, aus Biomasseteilchen, vorzugsweise Holzteilchen, und Verfahren liegen vorteilhafterweise auch zugrunde die selbstständige Regelung
der Radialverschiebbarkeit und/oder
der Axialverschiebbarkeit der Luftzuführung und/oder
der Luftmengenzuführungen in Verbindung
mit der Schüttungshöheneinstellbarkeit und/oder der
Radialverschiebbarkeit der Beschickung der Schüttung
mit Biomasseteilchen
zur gleichmäßigen radialen Temperaturführung in der Schüttung.

Der Erfindung betrifft zudem eine umweltfreundliche selbstständig sich regelnde Anlage zur kontinuierlichen Erzeugung von Pflanzenkohle, wie Holzkohle, aus Biomasseteilchen, vorzugsweise Holzteilchen, und gleichmäßigen radialen Temperaturführung in einer Schüttung mit einer mittels Messeinrichtungen ansteuerbaren Beschickung der Schüttung mit Biomasseteilchen in Menge und/oder Oberflächenverteilung und/oder einer mittels Messeinrichtungen ansteuerbaren Luftführung in Volumen und/oder Position. Die erfindungsgemäße umweltfreundliche selbstständig regelbare Anlage zur kontinuierlichen Erzeugung von Pflanzenkohle aus Biomasse, vorzugsweise Holz, umfasst den Schachtreaktor mit einem ein Kopfende und ein Fußende umfassenden Schachtreaktormantel, einer mit dessen Austragsöffnung verbundenen Auffangeinrichtung zur Ablöschung der aus der Austragsöffnung des Schachtreaktors bewegten Pflanzenkohle, wie Holzkohle. Die Auffangeinrichtung kann auch die Ablöscheinrichtung und/oder Teilchenzähleinrichtung umfassen; die Ablöscheinrichtung kann ein Auffangbecken, eine Berieselungseinrichtung, ein Transportband für abgelöschte Pflanzenkohle aufweisen.

Die Teilchenzähleinrichtung dient zur Sortierung oder Klassierung der Pflanzenkohle.

Die Belüftungsdosiereinrichtung kann ein, vorzugsweise parallel zu der Mitte-Längsachse A und/oder quer zu der Mitte-Längsachse A des Schachtreaktors bewegbares oder zur Mitte-Längsachse A sich erstreckendes, Luftleitungsrohr aufweisen, dessen oberes, der Eintragsöffnung zugewandtes Ende in dem unteren der Kammer, z.B. Auffangbecken, zugewandten Ende des Außenrohres beweglich, vorzugsweise parallel zu der Mitte-Längsachse des Außenrohrs, geführt ist.

Der Abstand des oberen Endes des Außenrohrs und/ oder der Abstand des Außenrohrs von dem Schachtreaktormantel sind veränderbar und festlegbar. So kann das Außenrohr oder dessen oberes Ende parallel zu der Mitte-Längsachse des Schachtreaktors bewegt werden. Das obere Ende des Außenrohrs kann aufgrund der Beweglichkeit desselben einen, nach Maßgabe z.B. der zonenbedingten Temperatur und /oder des Luftvolumenstroms und/oder Prozessgasvolumenstroms, festgelegten Abstand zu der der Ablöscheinrichtung zugewandten Unterseite des Gitters einnehmen. Die Bewegungen des Luftleitungsrohrs und/oder des Außenrohrs können mittels der Steuereinrichtung wie die sonstigen Einrichtungen der erfindungsgemäßen Anlage parameterkontrolliert angesteuert werden.

Das Verhältnis des Durchmessers des Gitters zu dem Abstand des oberen, dem Kopfende zugewandten Endes des Außenrohrs zu der Unterseite des Gitters kann betragen 5 bis 50, z.B. 10 bis 50, vorzugsweise 20 bis 35, noch mehr bevorzugt 27 bis 30. In einer weiteren Ausgestaltung kann der Durchmesser des Gitters zu dem Durchmesser des Außenrohrs ein Verhältnis von 5 bis 40, z.B. 5 bis 30, vorzugsweise 10 bis 30 oder 10 bis 20, noch mehr bevorzugt 12 bis 15, insbesondere 10 oder 20, aufweisen.

In einer weiteren Ausführungsform der erfindungsgemäßen umweltfreundlichen selbstständig regelbaren Anlage kann das obere Ende des Außenrohrs mit einer schwenkbaren mit Hilfe der Steuereinrichtung angesteuerten Venturi-Düse ausgebildet sein, um zonengerichtet Luft verstärkt örtlich engbegrenzt zuführen zu können. Die Venturi-Düse zur gerichteten Luftzuführung an dem oberen Ende des Außenrohrs ist beispielsweise um eine, vorzugsweise mit der Mitte-Längsachse des Außenrohrs übereinstimmende, Schwenkachse schwenkbar und deren Ausrichtung festlegbar.

Das untere Ende des Luftleitungsrohrs kann eine zusätzliche Öffnung aufweisen zur Vermeidung von Stau von Pflanzenkohleteilchen in dem unteren Ende. Die Luft wird von außen über ein mit dem Luftleitungsrohr verbundenen Luftaußenrohr hin zu diesem geführt. Messeinrichtungen zum Messen verschiedener Parameter können mit diesen korrespondierende Signale erzeugen, diese an die Steuereinrichtung weiterleiten, welche nach Vergleich mit Sollwerten Steuerungssignale erzeugen und an die Belüftungsdosiereinrichtung weiterleiten kann, so dass hierdurch die Zuführung einer vorbestimmten Luftmenge in einem vorbestimmten Abstand zum Gitter in einem vorbestimmten Abstand zur Mitte-Längsachse A erfolgen kann.

Es zeigt sich, dass in dem herkömmlichen Schacht die durch die Verkohlung zu verbrauchende Luft bzw. Sauerstoff derselben in Richtung Gitter anströmt und als Prozessgas aus der Schüttung ausströmt, jedoch der Anströmungsbereich aufgrund der Ansaugung oder Zuführung von dem Abströmungsbereich soweit sich unterscheidet, dass der Abströmungsbereich wegen der Außenzone mit weit höherer Temperatur von 350°C und weit höher, z.B. von 350° bis 700° C, verglichen mit der mittigen Zone mit einer niedrigeren Temperatur ab 280°C eine starke Prozessgasabströmung aus der Außenzone aufweist, hingegen der Anströmungsbereich eine eher gleichmäßige Luftanströmung, zumindest im Bereich des Gitters, z.B. im Fall der Beabstandung der Verkohlungszone von dem Gitter, hat.

Der Stand der Technik beachtet sonach nicht als weitere Nachteile die besonderen in dem Schacht bzw. dem Schachtreaktor sich während der Verkohlung einstellenden Temperaturbereiche, die unterschiedlichen Luftanströmungs- und die verschiedenen Prozessgasabströmungsbedingungen während der Verkohlung.

Daher ist es auch vorteilhaft, dass in einer Ausführungsform der erfindungsgemäßen umweltfreundlichen selbstständig regelbaren Anlage diese mit einem, beispielsweise in dem Bereich des Kopfendes des Schachtreaktors bestimmten Überdruck gefahren wird, zum Beispiel mit 0 bis 40 Pa, vorzugsweise, insbesondere vorübergehend, 10 Pa Überdruck. Das Einhalten des Überdrucks kann mit Hilfe der Prozessgaskontrolleinrichtung durch das Regeln der Durchgängigkeit der Prozessgasleitung gesteuert werden.

Die druckprozessgaskontrollierte Verkohlung in dem Schachtreaktor unterstützt die Bereitstellung einheitlicher Pflanzenkohleteilchen und die gleichmäßige Verschwelung und Temperaturkonstanthaltung in der Schüttung, wie in der Verkohlungszone, im Schachtreaktor und in der Nachverkohlungszone.

Eine Ausführungsform der erfindungsgemäßen umweltfreundlichen selbstständig regelbaren Anlage hat neben der Verkohlungszone, die im Bereich des Gitters, wie auf oder oberhalb des Gitters, sich in der Schüttung befinden kann, eine Nachverkohlungszone.

Das konisch ausgebildete Fußende des Schachtreaktors, zum Beispiel die trichterförmige Ringschürze, kann im Bereich der Konusspitze die Austragsöffnung aufweisen, welche mit einer Messeinrichtung versehen ist. Die Messeinrichtung, z.B. eine Teilchenzähleinrichtung, wie eine Zellradschleuse, bestimmt die Anzahl der Pflanzenkohleteilchen, die die Austragsöffnung passieren können, und kann je nach Erfordernis der Verkohlung die Austragsöffnung kontrolliert verschließen oder teilweise oder vollständig öffnen.

Z.B. befindet sich die Nachverkohlungszone in dem Bereich der Konusspitze des Fußendes, der an die Teilchenzähleinrichtung angrenzt, wie der Zellradschleuse, zum Beispiel kann die Nachverkohlungszone sich an das Gitter anschließen, also unter dem Gitter angeordnet sein, oder von dem Gitter beabstandet sein, also unterhalb des Gitters angeordnet sein. Die Pflanzenkohleteilchen passieren das Gitter und können sich im Bereich auf der Teilchenzähleinrichtung, wie eine Zellradschleuse, ansammeln. Vorteilhafterweise ist die Teilchenzähleinrichtung von dem Gitter beabstandet, zum Beispiel befindet sich unter oder unterhalb der Belüftungsdosiereinrichtung, da in einer erfindungsgemäßen Ausgestaltung die Belüftungsdosiereinrichtung unter dem Gitter angeordnet ist.

Unter Fußende des Schachtreaktors kann auch im Sinne der Erfindung verstanden werden, der Bereich, der unter dem Gitter sich befindet oder der unmittelbar an das Gitter angrenzt; das Fußende kann auch mit der Austragsöffnung desselben übereinstimmen.

Die Temperatur der Pflanzenkohleteilchen in der Nachverkohlungszone kann mittels einer herkömmlichen Messeinrichtung bestimmt werden; es ist möglich, in Abhängigkeit von der Temperatur in der Nachverkohlungszone die mengenmäßige Zuführung der Pflanzenkohleteilchen über die Teilchenzähleinrichtung in die Ablöschung und / oder die Menge an Ablöschwasser, die zur vollständigen Ablöschung derselben erforderlich ist, zu bestimmen. Die Messeinrichtung bestimmt die Temperatur, erzeugt ein mit der Temperatur korrespondierendes Signal, leitet dieses an die Steuereinrichtung weiter, welche nach Vergleich mit einem Sollwert ein Steuerungssignal erzeugt und an die Teilchenzähleinrichtung weiterleitet.

Auch kann vorteilhafterweise die Intensität der Nachverkohlungszone nach den Maßgaben der Füllstandshöhe der Nachverkohlungszone und/oder der Temperatur in derselben über die Steuereinrichtung angesteuert sein.

Die Zellradschleuse umfasst mindestens eine um eine Welle drehbare von oben befüllbare Zelle, die unter der Austragsöffnung des Schachtreaktors mit Pflanzenkohleteilchen im oberen Bereich der Zellradschleuse in Füllposition befüllt wird. In einer Ausführungsform der erfindungsgemäßen umweltfreundlichen selbstständig regelbaren Anlage kann die Zellradschleuse sich auch fortlaufend drehen.

In einer vorteilhaften Ausführungsform der erfindungsgemäßen umweltfreundlichen selbstständig regelbaren Anlage kann die Zelle der Zellradschleuse mit einer vorbestimmten oder z.B., von der Steuereinrichtung angesteuerten, Drehgeschwindigkeit um ihre Welle gedreht werden; die Zelle kann in dem unteren Bereich der Zellradschleuse in der Entleerungsposition sich entleeren und die Pflanzenkohleteilchen können z.B. der Nachverkohlung oder der Ablöschung zugeführt werden.

In der Zelle der Zellradschleuse und /oder zwischen der Austragsöffnung und der Zelle kann ebenso die Temperatur, z.B. in der Nachverkohlungszone und/oder der Pflanzenkohleteilchen, bestimmt und der Istwert an die Steuereinrichtung als Signal übermitübermittelt werden.

Auch kann die Füllstandshöhe der Nachverkohlungszone mittels herkömmlicher Messeinrichtungen bestimmt werden zur Festlegung des mengenmäßigen Passierens der Pflanzenkohleteilchen über die Teilchenzähleinrichtung und der Menge an Ablöschwasser. Messeinrichtungen zum Messen der Füllstandshöhe können mit dieser korrespondierende Signale erzeugen, diese an die Steuereinrichtung weiterleiten, welche nach Vergleich mit Sollwerten Steuerungssignale erzeugen und an die Teilchzähleinrichtung weiterleiten kann, so dass hierdurch die Abführung einer vorbestimmten Menge Pflanzenkohleteilchen und/oder die Bereitstellung von Ablöschwasser erfolgen können.

Die Drehgeschwindigkeit der Zellradschleuse kann gleichfalls kontinuierlich stattfinden oder, von der Steuereinrichtung in Abhängigkeit von den Werten der o.g. Parametern bzw. der o.g. Regelgrößen angesteuert , kann diese zur Füllung der Zelle in der Füllposition eine vorbestimmte Zeitdauer verbleiben; in Abhängigkeit von der Mengen an Pflanzenkohleteilchen können
die Drehgeschwindigkeit der Zelle und/oder
das Verbleiben der Zelle in der Füllposition und Entleerungsposition angesteuert und/oder
die Menge an Ablöschwasser, welches zum Beispiel als Sprühnebel und/oder Schwallwasser zugegeben wird,
bestimmt werden.

In einer vorteilhaften Ausführungsform der erfindungsgemäßen umweltfreundlichen selbstständig regelbaren Anlage kann sich die Nachverkohlungszone im Bereich der Austragsöffnung des Schachtreaktors oder unterhalb derselben, zum Beispiel auf oder oberhalb der Messeinrichtung oder der Teilchenzähleinrichtung, befinden. Durch die Nachverkohlung wird die besondere Güte der Pflanzenkohle, wie verkohlten Holzteilchen, wie einheitliche Verkohlung, gleichmäßige Verkohlung derselben vorteilhafterweise mögmöglich gemacht.

In einer anderen Ausführungsform der erfindungsgemäßen umweltfreundlichen selbstständig regelbaren Anlage kann zwischen der unter der Austragsöffnung angeordneten Teilchenzähleinrichtung und einer zweiten, wie die erstgenannte auch angesteuerte, Teilchenzähleinrichtung die Nachverkohlungszone sich befinden, an die sich die Ablöscheinrichtung anschließt. Auch kann in einer anderen bevorzugten Ausführungsform der erfindungsgemäßen umweltfreundlichen selbstständig regelbaren Anlage sich an der an der Austragsöffnung angeordneten Teilchenzähleinrichtung die Ablöscheinrichtung anschließen.

In einer anderen Ausführungsform der erfindungsgemäßen umweltfreundlichen selbstständig regelbaren Anlage kann in der Austragsöffnung des konisch ausgebildeten Fußendes des Schachtreaktors, zum Beispiel in der Austragsöffnung der trichterförmigen Ringschürze, eine herkömmliche Messeinrichtung zur Bestimmung der Temperatur der Pflanzenkohleteilchen und / oder eine Teilchenzähleinrichtung angeordnet sein.

In Abhängigkeit von der Temperatur der Pflanzenkohleteilchen und/oder der Füllstandshöhe der Nachverkohlungszone können -kontrolliert- z.B.
das Abführen der Pflanzenkohleteilchen aus der Austragsöffnung an dem Fußende über die Teilchenzähleinrichtung bestimmt, wie erhöht oder erniedrigt,
und/oder
das Zuführen der Pflanzenkohleteilchen aus dem Fußende über die Teilchenzähleinrichtung zu der Nachverkohlungszone bestimmt, wie erhöht oder erniedrigt,
und/oder
das Zuführen der Pflanzenkohleteilchen aus dem Fußende über die Teilchenzähleinrichtung unmittelbar zu der Ablöscheinrichtungen bestimmt, wie erhöht oder erniedrigt,
und/oder
das Zuführen von Ablöschwasser über die Ablöscheinrichtung zum Ablöschen der die Austragsöffnung passierenden oder die Teilchenzähleinrichtung verlassenden Pflanzenkohleteilchen bestimmt, wie erhöht oder erniedrigt, werden.

Für die Menge des Ablöschwassers kann zusätzlich die Temperatur der die Austragsöffnung passierenden verkohlten Pflanzenkohleteilchen mit Hilfe einer im Bereich des Fußendes des Schachtreaktors angeordneten Messeinrichtung zur Temperaturbestimmung oder von der an der Austragsöffnung angeordneten eine Temperaturmesseinrichtung aufweisende Teilchenzähleinrichtung bestimmt werden. Die Messeinrichtung kann über die im Folgenden beschriebene Steuereinrichtung die Auffangeinrichtung zum Auffangen der Pflanzenkohleteilchen ansteuern und die Menge des Ablöschwassers und / oder dessen Sprühnebel zur Ablöschung der Pflanzenkohleteilchen genau dosieren.

In Ausführungsformen der erfindungsgemäßen umweltfreundlichen selbstständig regelbaren Anlage kann die Menge des Ablöschwassers zusätzlich oder alternativ von einer im Bereich der Austragsöffnung befindlichen Zellradschleuse als Messeinrichtung, deren Zelle oder Zellen sich vorzugsweise fortlaufend gedreht werden, bestimmt werden, die die Anzahl der die Austragsöffnung passierenden Pflanzenkohleteilchen bestimmt und in Abhängigkeit deren Anzahl die Menge des Ablöschwassers zum Beispiel über eine mit der Messeinrichtung verbundene Steuereinrichtung festlegt.

Die Ausgestaltung der erfindungsgemäßen umweltfreundlichen selbstständig regelbaren Anlage nutzt auf besondere umweltfreundliche Weise nur die gerade erforderliche Wassermenge bevorzugterweise aus, so dass
die erhitzte Pflanzenkohle hinreichend abgelöscht wird,
ohne dass die Gefahr des Nachbrennens
und
ohne dass die Gefahr der Vergeudung überschüssigen Wassers bestehen,
um der Forderung von umweltgerechter Nutzung der Energiereserven Folge zu leisten.

Aufgrund des Zusammenwirkens der Neigung der Ebene des Verteilerbleches mit der Längenfestlegbarkeit dessen Ebene können mengenkontrolliert und zonenkontrolliert Biomasseteilchen an jedem Ort der Oberfläche der Schüttung, je nach Status der Verkohlung, abgeladen werden.

In einer anderen Ausführungsform der erfindungsgemäßen Anlage kann die Auffangeinrichtung ein Auffangbecken mit einer Berieselungseinrichtung aufweisen oder als Wasserbecken ausgebildet sein zum Ablöschen der erhitzten Holzteilchen aus dem Schachtreaktor. Auch kann die Auffangeinrichtung eine oder mehrere voneinander beabstandete Teilchenzähleinrichtungen, wie Zellradschleusen, umfassen, zwischen welchen die Nachverkohlungszone angeordnet sein kann.

Die Zellradschleuse umfasst mindestens eine um eine Welle drehbare von oben befüllbare Zelle, die unter der Austragsöffnung des Schachtreaktors mit Pflanzenkohleteilchen im oberen Bereich der Zellradschleuse in Füllposition befüllt wird. In einer Ausführungsform der erfindungsgemäßen umweltfreundlichen selbstständig regelbaren Anlage können die Zellradschleuse oder deren Zellen sich auch fortlaufend drehen.

Durch die kontrollierte Beladung der Oberfläche der Schüttung in Bezug auf Menge und/oder Ort und/oder auf die Höhe der Schüttung in dem Schachtreaktor können der Widerstand für die Strömung der gasförmigen Stoffe, auch Gase genannt, und der Luft bzw. Gas in der Schüttung und damit auch deren Bewegung im Gegenstrom zur Pflanzenkohle wirkungsvoll erhöht oder verringert werden, so dass die Bewegung der gasförmigen Stoffe und Luft im Gegenstrom zu der Schüttung, wie Pflanzenkohle, in der Schüttung fein abgestimmt auf die Verfahrensbedingungen im Schachtreaktor vorteilhafterweise gesteuert wird, zumal strömende Medien den Weg des geringsten Widerstands regelmäßig beschreiten. Durch die zonenkontrollierte Beschickung der Schüttung mit Biomasseteilchen kann die Temperatursteuerung in der Schüttung mittels der zonenkontrollierten Luftzugabe unterstützt oder sogar je nach Erfordernis der Verkohlung beeinflusst werden.

Auch wird vorteilhafterweise das Ausmaß der Verkohlung der Biomasseteilchen in der Verkohlungszone, vorzugsweise zusätzlich in der Nachverkohlungszone, gesteuert in der erfindungsgemäßen Anlage durch die in der Prozessgasleitung angeordneten Prozessgaskontrolleinrichtung, die sowohl das Ausmaß der anzusaugenden Luft als auch das Ausmaß der abzuziehenden Prozessgase, z.B. deren Volumenstrom oder Geschwindigkeit in der Prozessgasleitung, je nach Verkohlungszustand bestimmt.

Durch das geschickte Zusammenwirken
der zonenkontrollierten Schüttung mit
der zonenkontrollierten Luftzugabe und
dem kontrollierten Prozessgasabzug und
der kontrollierten Schüttungshöhe,
ggf. der kontrollierten Nachverkohlung,
z.B. in deren teilweisen oder vollständigen Kombination, kann im Gegensatz zu der herkömmlichen Lehre Pflanzenkohle wirtschaftlich kostengünstig, frei von Bestandteilen, wie schwerflüchtigen Bestandteilen, und Pflanzenkohle mit einem einheitlichen Kohlegehalt und mit einem weitgehend übereinstimmenden Kohlenstoffgehalt erzeugt werden.

Auch werden die Betriebssicherheit durch weniger manuelle Eingriffe von außen in die Verkohlung beträchtlich gesteigert und die Erzeugung elektrischer Energie durch gleichbleibende quantitative Bildung gasförmiger Stoffe vorausblickend stabilisiert.

In einer zusätzlichen Ausgestaltung der erfindungsgemäßen Anlage sind die Teilchenfördereinrichtung, wie Holzfördereinrichtung, und die Belüftungsdosiereinrichtung an eine Messeinrichtung zur Temperaturbestimmung in radialen Zonen des Gitters steuerungsmäßig angeschlossene Steuereinrichtung auf herkömmliche Weise steuerungsmästeuerungsmäßig angeschlossen. Die herkömmlichen Messeinrichtungen bestimmen die Temperatur z.B. in der mittigen Zone und in der Außenzone der auf dem Gitter lastenden Schüttung. Als herkömmliche Messeinrichtungen können auch solche zur Luftvolumenstrombestimmung Anwendung finden.

In Abhängigkeit von den festgestellten Parametern, wie
der Temperaturen in der erfindungsgemäßen Anlage, wie in den vorgenannten und nachfolgend aufgeführten Bereichen, Abschnitten und/oder Zonen des Schachtreaktors und/oder der Schüttung und / oder
des Luftvolumenstroms und / oder
des Prozessgasvolumenstroms und/oder
der Schüttungshöhe und / oder
der Füllstandshöhe der Nachverkohlungszone und/oder
der Temperatur in der Nachverkohlungszone und/oder
des Drucks im Kopfende des Schachtreaktors und / oder
der Geschwindigkeit der in die Schüttung angesaugten Luft und/ oder
der Geschwindigkeit der abgezogenen Prozessgase und/oder
dem Verkohlungsgrad
erzeugen die Messeinrichtungen Signale, die den Istwerten der o.g. Parameter oder Messwerte während der Verkohlung entsprechen können, und senden diese an die Steuerungseinrichtung.

Die Steuerungseinrichtung kann die empfangenen Signale mit den in der Steuereinrichtung vorgegebenen Werten, wie Sollwerten, vergleichen und, je nach den Maßgaben der Sollwerte, die Steuerungssignale erzeugen und senden z.B. an
die Teilchenfördereinrichtung zur zonenkontrollierten Beschickung der Oberfläche der Schüttung mit Holzteilchen und/ oder
die Belüftungsdosiereinrichtung zur zonenkontrollierten Luftabgabe und/oder
die Prozessgaskontrolleinrichtung zum kontrollierten Prozessgasabzug und zur kontrollierten Lufteinleitung oder -abgabe und/oder
die im Bereich der Austragsöffnung befindliche Teilchenzähleinrichtung zur kontrollierten Nachverkohlung und/oder zur Ablöscheinrichtung und/oder
die Prozessgaskontrolleinrichtung zur kontrollierten Abführung von Prozessgasen und/oder
die Ablöscheinrichtung zur kontrollierten Ablöschung der Pflanzenkohle, usw..

Darüber hinaus kann die Steuerungseinrichtung die Steuerungssignale zur Ansteuerung der Stellglieder aufgrund der Signale einer Messeinrichtung oder mehrerer Messeinrichtungen erzeugen. Überdies kann die Steuerungseinrichtung die Steuerungssignale -je nach Maßgaben des Benutzers oder sonstiger Vor- oder Maßgaben, zur Ansteuerung der Stellglieder aufgrund der Signale einer Messeinrichtung oder mehrerer Messeinrichtungen erzeugen.

Die fortlaufende Steuerung der Einrichtungen der erfindungsgemäßen umweltfreundlichen selbstständig regelbaren Anlage erhöht die Ausbeute an Pflanzenkohle, z.B. unabhängig von
dem Feuchtigkeitsgehalt und
der Güte der Holzes, wie Grob- oder Feinschnitt, und
der Holzeigenschaft, wie Weich- oder Hartholz, und
Baumgattung, wie Birke, Eiche, Tanne, usw.,
beträchtlich, da erstmals im Gegensatz zu herkömmlichen Meilern
angepasst an dessen Zusammensetzung individuell abgestimmt
die Aufschüttung der Oberfläche der Schüttung mit Holzteilchen nach Ort und/oder Geschwindigkeit und/oder Dauer durch die angesteuerte Teilchenfördereinrichtung
und/oder
die Bestimmung der Luftzufuhr nach Dauer, Geschwindigkeit und Abstand des oberen Endes des Luftleitungsrohres von der Unterseite des Gitters durch die Belüftungsdosiereinrichtung
erfolgen.

Durch die mit Hilfe der erfindungsgemäßen umweltfreundlichen selbstständig regelbaren Anlage zonenbedingten, wie temperatur-, abhängigen Steuerung der Teilchenfördereinrichtung, wie Holzfördereinrichtung, und der Belüftungsdosiereinrichtung kann man hochwertige Pflanzenkohle hoher Güte, wie solche mit hoher Festigkeit und hohem Kohlenstoffgehalt, und einheitlicher Qualität, wie solche ohne Auftreten nicht verkohlter Holzteilchen, erzeugen.

Zudem lassen sich die Vergleichmäßigung des Kohlenstoff-Gehaltes in der Pflanzenkohle erzeugen, was die Verwertbarkeit der Pflanzenkohle erhöht,
sowie
darüber hinaus konstante Mengen an infolge Verkohlung anfallender gasförmiger Stoffe erzeugen, die vorteilhafterweise im Dauerbetrieb energetisch sinnvoll verwertet werden können.

Ein zusätzlicher Vorteil der erfindungsgemäßen umweltfreundlichen selbstständig regelbaren Anlage ist die Klassierung der erzeugten Pflanzenkohle mittels einer Sortierungs- und Zerkleinerungseinrichtung, z.B. einer Kugelmühle, so dass je nach Verwendungszweck unmittelbar nach dem Ablöschen derselben diese der Sortierung oder Vorsortierung, je nach Erfordernis oder Wunsch des Benutzers kostengünstig unterzogen werden, so dass deren Weiterverarbeitung erleichtert und dem Benutzer ein wirtschaftlicher Vorteil gegenüber Mitbewerbern Verfahrensvereinfachung verschafft werden.

In einer weiteren Ausführungsform der erfindungsgemäßen Anlage können die in einer Kammer, z.B. einem Auffangbecken, einem Bunker oder einem Silo, angesammelten Pflanzenkohleteilchen an eine Sortierungs- und Zerkleinerungseinrichtung zur weiteren Aufarbeitung weitergeleitet werden, durch welche die Pflanzenkohleteilchen zum Beispiel nach
der Größe,
der Form,
dem Feuchtigkeitsgrad,
und/oder
dem Verkohlungsgrad
klassiert werden können.

Unter Sortierung werden im Sinne der Erfindung auch die Klassierung und das Aussortieren und das Zählen verstanden.

Als Sortierungs- und Zerkleinerungseinrichtung kann eine Kugelmühle, wie eine Rührwerkskugelmühle, Trommeltrockenmühlen, Anwendung finden. Auch sortiert die Kugelmühle Fremdstoffe, wie Steinchen, metallene Teilchen aus, so dass vorteilhafterweise lediglich verkohlte Holzteilchen der gewünschten Güte und Eigenschaften klassiert verbleiben. Die Kugelmühle kann nicht nur klassieren und aussortieren, sondern auch verkohlte Holzteilchen nach Maßgabe der Erfordernisse zu deren Weiterverarbeitung zerkleinern.

Die Kugelmühle kann mit einer Vielzahl um einen Kreismittelpunkt und zusätzlich schraubenförmig beweglich geführten, Kugeln, vorzugsweise mit einem magnetisch wirkenden Werkstoff hergestellt, die Holzteilchen je nach Maßgabe zur Sortierung und / oder Pulverisierung weiterverarbeiten. Die Kugeln können je nach Einstellung zu Taumelbewegungen, z.B. geschwindigkeitsansteigend und/oder radialen und/oder kreisförmigen unterliegen. Ebenso kann die Kugelmühle als Vibrationsmühle alternativ oder zusätzlich mit den o.g.. Kugeln und Kugelverfahren ausgebildet sein. Die Klassierung und Sortierung in der herkömmlichen Kugelmühle können hinzukommend im Batch- oder im Durchlaufverfahren Anwendung finden.

Die bereits bez. der erfindungsgemäßen Anlage und für den Betrieb derselben offenbarten oder mit dieser in Zusammenhang stehenden Verfahrensschritte können auch Teil des erfindungsgemäßen Verfahren sein. Das erfindungsgemäße kostengünstige Verfahren zur Erzeugung von Pflanzenkohle aus Biomasse, insbesondere Holz, in einem Wanderbett in einem in einem Gegenstrom zur Pflanzenkohle von Luft durchströmten Schachtreaktor, welcher mit Biomasse, wie Holz, insbesondere Biomasseteilchen, vorzugsweise Holzteilchen, fortlaufend beschickt und von dem die Pflanzenkohleteilchen abgeführt werden, ist dadurch gekennzeichnet, dass
die Biomasseteilchen in dem Schachtreaktor durch
das luftmengenkontrollierte und/oder das zonenkontrollierte Zuleiten von Luft in die Schüttung,
das schüttungszonenkontrollierte und/oder das schnellbeladungskontrollierte Beladen der Schüttung mit den Biomasseteilchen in dem Schachtreaktor,
und/oder
das prozessgasmengenkontrollierte und /oder das prozessgasgeschwindigkeitskontrollierte Ableiten der Prozessgase aus dem Schachtreaktor
verkohlt werden.

Die Erfindung betrifft ein umweltfreundliches selbstständig regelbares kostengünstiges Verfahren zur kontinuierlichen Erzeugung von Pflanzenkohle, wie Holzkohle, aus einer Biomasse, vorzugsweise Holz, zur gleichmäßigen radialen Temperaturführung in der Schüttung, wobei die Beschickung der Schüttung mit Biomasseteilchen in Menge und/oder Oberflächenverteilung und/oder die Luftzuführung in Volumen und/oder Position mittels Messeinrichtungen oder mittels einer mit Messeinrichtungen verbundenen Steuereinrichtung angesteuert werden.

Das erfindungsgemäße kostengünstige Verfahren zur Erzeugung von Pflanzenkohle aus Biomasse, insbesondere Holz, in einem Wanderbett in einem in einem Gegenstrom zur Pflanzenkohle von Luft durchströmten Schachtreaktor, welcher mit Biomasse, wie Holz, insbesondere Biomasseteilchen, vorzugsweise Holzteilchen, fortlaufend oben beschickt und von dem unten die Pflanzenkohle abgeführt werden, macht auch möglich, dass
die Temperaturen in der Schüttung, vorzugsweise zumindest in der mittigen Zone und/ oder in der Außenzone derselben, fortlaufend überwacht werden,
die Luft über die Belüftungsdosiereinrichtung der Schüttung volumenkontrolliert und/oder geschwindigkeitskontrolliert und/oder zonenkontrolliert nach Maßgabe der Temperatur und /oder des Luftvolumenstroms der Schüttung zur Erzeugung einer gleichmäßigen Temperatur in der Schüttung aufwärts im Gegenstrom zur Pflanzenkohle zugeführt wird,
vorzugsweise Prozessgase über die Eintragsöffnung, z.B. druck- und /oder und/oder geschwindigkeitskontrolliert temperaturkontrolliert, abgezogen werden,
und/oder
die Biomasseteilchen über die Belüftungsdosiereinrichtung der Schüttung mengenkontrolliert und/ oder zonenkontrolliert und/oder schüttungshöhenkontrolliert nach Maßgabe der Temperatur und /oder Luftvolumenstrom und/oder der Schüttungshöhe in der Schüttung zur Erzeugung einer gleichmäßigen Temperatur in der Schüttung zugeführt werden.

Vorzugsweise können die Holzteilchen der Schüttung über das Schüttelgitter nach Maßgabe der Temperatur in der Schüttung zugeführt werden. Auch können die Holzteilchen der Schüttung über das Verteilerblech nach Maßgabe der Temperatur in der Schüttung zugeführt werden. Das Einstellen oder Festlegen der Neigung und /oder der Länge der Ebene, Schüttebene auch genannt, des Verteilerbleches nach Maßgabe der Temperatur in der Schüttung ermöglicht das feine Dosieren und jederzeitige Reagieren auf Werte mit Ansteuern der erfindungsgemäßen Anlage, so dass beispielsweise Schwerteer in Holzteilchen verbleibt und langsam verkokt werden kann, was für die Festigkeit der Pflanzenkohle wichtig ist.

Zudem kann das aus dem Schachtreaktor über die Prozessgasleitung abgezogene Prozessgas einem Wärmetauscher, einer Einrichtung zur Verstromung, z.B. einem herkömmlichen gasbetriebenen Aggregat zur Herstellung elektrischer Energie, und / oder einer Brennkammer zugeführt werden.

Das erfindungsgemäße kostengünstige Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor einer umweltfreundlichen selbstständig regelbaren Anlage zur kontinuierlichen Erzeugung von Pflanzenkohle aus Biomasse, vorzugsweise aus Biomasseteilchen, wie Holz, ist gekennzeichnet, dass fortlaufend die Temperaturen in der Schüttung, vorzugsweise zumindest in einer mittigen Zone und/oder in einer Außenzone derselben, der Volumenstrom der aus der Schüttung entweichenden Prozessgase in der Prozessgasleitung, die Höhe der Schüttung in dem Schachtreaktor gemessen werden und nach Maßgaben der Temperaturen und / oder des Volumenstroms und/oder der Höhe der Schüttung die Luft über die Belüftungsdosiereinrichtung der Schüttung sowie die Biomasseteilchen über die Teilchenfördereinrichtung der Schüttung zugeführt, die Prozessgase über die Prozessgaskontrolleinrichtung abgezogen, die Pflanzenkohleteilchen über die Teilchenzähleinrichtung abgeführt und die Ablöschwasser über die Ablöscheinrichtung zugegeben werden zur Erzeugung einer gleichmäßigen Temperatur in der Schüttung und Bereitstellung einheitlicher Pflanzenkohle.

Vorzugsweise werden die Biomasseteilchen der mittigen Zone und/oder der Außenzone der Schüttung über das Schüttelgitter oder das Verteilerblech der Teilchenfördereinrichtung zugeführt; auch ist es möglich, dass die Neigung und /oder das Längenausfahren des Verteilerbleches nach Maßgaben der Temperaturen und / oder Volumenstroms und/oder der Höhe der Schüttung durchgeführt werden. Bevorzugterweise werden die aus dem Schachtreaktor abgezogenen Prozessgase einer Brennkammer, einem Wärmetauscher und/oder einer Einrichtung zur Verstromung zugeführt. Ganz von Vorteil ist, wenn die Prozessgaskontrolleinrichtung in der Prozessgasleitung und/oder die Teilchenfördereinrichtung im Bereich des Kopfendes des Schachtreaktors und/oder die Belüftungsdosiereinrichtung am Fußende des Schachtreaktors und/oder die Teilchenzähleinrichtung im Bereich des Fußendes des Schachtreaktors und/oder die Ablöscheinrichtung im Bereich des Fußendes des Schachtreaktors von einer Steuereinrichtung angesteuert werden. Auch können die Temperaturen in der Schüttung, vorzugsweise zumindest in einer mittigen Zone und/oder in einer Außenzone derselben und der Volumenstrom der aus der Schüttung entweichenden Prozessgase in der Prozessgasleitung, die Höhe der Schüttung in dem Schachtreaktor von Messeinrichtungen als Istwerte gemessen werden, die mit den Istwerten korrespondierenden von den Messeinrichtungen erzeugten Signale an die mit den Messeinrichtungen verbundene Steuereinrichtung weitergeleitet werden, von der Steuereinrichtung Differenzen der Istwerte gegenüber den Sollwerten als Regelabweichungen festgestellt, die mit den Regelabweichungen korrespondierenden Steuerungssignale erzeugt und an die Prozessgaskontrolleinrichtung und/oder die Teilchenfördereinrichtung und/oder die Belüftungsdosiereinrichtung und/oder die Teilchenzähleinrichtung und/oder die Ablöscheinrichtung zur Ansteuerung derselben weitergeleitet werden; bevorzugterweise werden die Prozessgase über die Eintragsöffnung nach Maßgabe von Druck in dem Kopfende des Schachtreaktors und /oder von Temperatur in der mittigen Zone und/ oder Außenzonen abgezogen werden. Auch kann die Pflanzenkohle mittels einer Sortierungs- und Zerkleinerungseinrichtung, z.B. einer Kugelmühle, sortiert und aus dieser Fremdstoffe entfernt werden. So sind Pflanzenkohle und/oder sonstige Bestandteile aus Biomasse in kontrollierter Menge, großer Ausbeute und hoher Güte und einheitlicher Qualität herstellbar mit dem erfindungsgemäßen kostengünstigen Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor von Vorteil.

Die erfindungsgemäße Anlage und das erfindungsgemäße Verfahren stellen bereit Pflanzenkohle in kontrollierter Menge, großer Ausbeute, hoher Güte und einheitlicher Qualität. Die erfindungsgemäße Anlage und das erfindungsgemäße Verfahren erzeugen ebenso sonstige Bestandteile aus Holz in kontrollierter Menge, großer Ausbeute und hoher Güte.

Besonders vorteilhaft sind Pflanzenkohle in kontrollierter Menge und sonstige Bestandteile aus Biomasse in kontrollierter Menge großer Ausbeute und hoher Güte und einheitlicher Qualität, die mit der umweltfreundlichen selbstständig regelbaren Anlage und/oder dem erfindungsgemäßen Verfahren zur kontinuierlichen Erzeugung von Pflanzenzkohle aus Biomasse, vorzugsweise Holz, herstellbar bzw. hergestellt sind.

### Ausführungsbeispiele

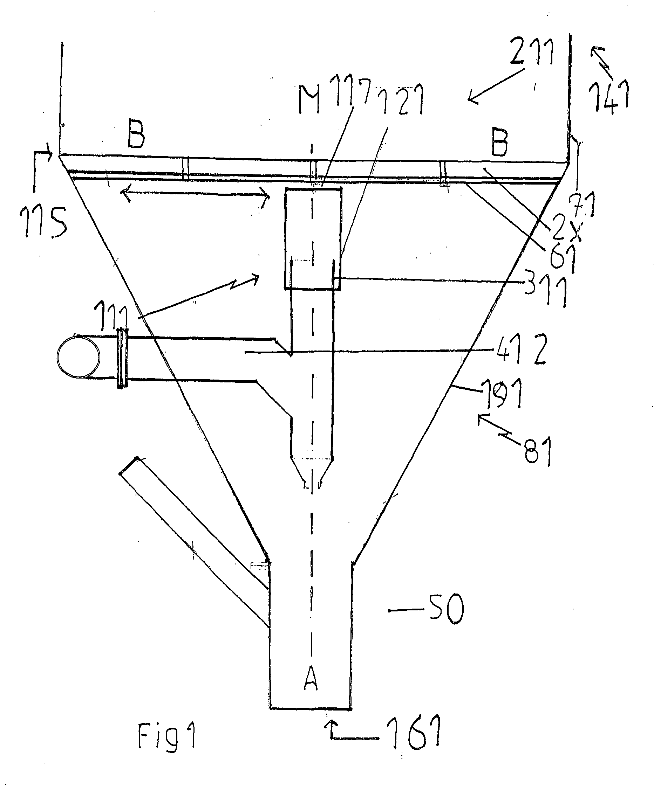

Die Zeichnungen zeigen aufgrund einer zeichnerischen Vereinfachung in schematischer, stark vergrößerter Weise, ohne Anspruch auf eine maßstabsgetreue Wiedergabe in
Fig. 1 die erfindungsgemäße umweltfreundliche selbstständig regelbare Anlage mit der Belüftungsdosiereinrichtung
Fig. 2 den Längsschnitt durch die erfindungsgemäße Anlage mit der Verteilervorrichtung, der Zellradschleuse, Zuführschacht,
Fig. 3 den Längsschnitt durch das Kopfende der erfindungsgemäßen Anlage mit der im Bereich des Kopfendes angeordneten Verteilervorrichtung
   sowie
Fig. 4 Sperr-Rad mit Speerklinke.

Die erfindungsgemäße umweltfreundliche selbstständig regelbare Anlage zur kontinuierlichen Erzeugung von Pflanzenkohle aus Biomasse, vorzugsweise Holz, hat einen Schachtreaktor 211. Der hohlzylindrische Schachtreaktor 211 umfasst einen Schachtreaktormantel 71 mit einem Kopfende und ein Fußende 81, dessen Kopfende eine Eintragsöffnung und dessen Fußende 81 eine Austragsöffnung 161 aufweisen. Das Fußende 81 des Schachtreaktormantels 71 schließt sich an einen mittigen zwischen dem Kopfende und dem Fußende befindlichen Abschnitt an. Das Fußende 81 ist als eine trichterförmige Ringschürze 191 ausgebildet und nimmt die Belüftungsdosiereinrichtung 111 auf. Der Schachtreaktor 211 hat einen Durchmesser von 270 cm und eine Höhe von 6 m. Der Schachtreaktor 211 wird mit Holzteilchen von oben bis zu einer Höhe von ca. 3 bis 4 m aufgefüllt. Die Biomasseteilchen wandern während der Verkohlung als Wanderbett in dem Schachtreaktor 211 von oben nach unten, hingegen strömt die über die Belüftungsdosiereinrichtung zugeführte Luft von unten nach oben im Gegenstrom oder - richtung zu der Richtung des Wanderbettes durch den Schachtreaktor 211.

Die auf dem Gitter 2x lastende Schüttung, die auch die Verkohlungszone aufweist, kann in einem Ausführungsbeispiel unterschiedliche Temperaturen aufweisen, so dass die Temperatur der mittigen Zone M der auf dem Gitter befindlichen Schüttung oder der Verkohlungszone, die im Bereich der Mitte-Längsachse A des Schachtreaktors 211 angeordnet ist, niedriger ist als die Temperatur der Außenzone B, die sich an die mittige Zone M anschließt. Dieser radiale Temperaturunterschied, auch radialer Temperaturgradient genannt, der quer zur Mitte-Längsachse A des Schachtreaktors verläuft, wird beseitigt durch die parameterkontrollierte, oder auch messwertkontrollierte genannt, Ansteuerung zum Beispiel der mindestens einen Teilchenfördereinrichtung zur Beförderung der Biomasseteilchen in den Schachtreaktor 211 und /oder die Belüftungsdosiereinrichtung 111. So kann die Oberfläche der Schüttung oberhalb der mittigen Zone M im Fall deren höheren Temperatur mit mehr Biomasseteilchen beschickt werden als die Oberfläche der Schüttung oberhalb der Außenzone B mit niedrigerer Temperatur. Ebenso kann dem Bereich des Gitters 2x unterhalb der Außenzone B mit niedrigerer Temperatur mit der Belüftungsdosiereinrichtung 111 mit mehr Luft bzw. Luftsauerstoff zonenkontrolliert zur Temperaturerhöhung zugeleitet werden.

Die Belüftungsdosiereinrichtung 111 umfasst ein Luftleitungsrohr 311, dessen Mitte-Längsachse mit der Mitte-Längsachse A des Schachtreaktormantels 71 in zentrierter Stellung übereinstimmt. Ein Außenrohr 121 nimmt das obere Ende des Luftleitungsrohrs 311 bewegbeweglich auf, so dass das Außenrohr 121 längs der Mitte-Längsachse A des Schachtreaktormantels 71 auf und ab bewegt wird. Das Luftleitungsrohr 311 kann in radialer Richtung (siehe Pfeil), z.B. von der mittigen Zone M in Richtung hin zu der Außenzone B bewegt werden; das Außenrohr 121 und / oder das Luftleitungsrohr 311 können längs der Mitte-Längsachse A des Schachtreaktors 211 bewegt werden.

In einem anderen Ausführungsbeispiel umfasst die Belüftungsdosiereinrichtung 111 nur das mit dem Luftaußenrohr 412 verbundene radial und axial bewegliche und festlegbare Luftleitungsrohr 311 mit dem oberen Ende 117 als Luftaustrittsöffnung.

Die Höhenverstellbarkeit des Außenrohrs 121 ermöglicht die Festlegbarkeit des Abstandes des oberen Endes 117 -als Luftaustrittsöffnung- des Außenrohrs 121 von der Unterseite 61 des Gitters 2x, welches in dem von Schachtreaktormantel 71 begrenzten Raum, hier im Übergangsbereich 115 von dem mittigen Abschnitt 141 zu dem Fußende 81 des Schachtreaktormantels 71, an der Innenseite des Schachtreaktormantels 71 mit diesem verbunden ist. Über das mit dem Luftleitungsrohr 311 verbundene Luftaußenrohr 412 wird Luft in den Schachtreaktor 211 aufgrund des Sauerstoffverbrauchs in der Verkohlungszone oder Hitzeentwicklung eingeleitet, das untere Ende des Luftleitungsrohrs 311 ist mit einer für Holzteilchen durchgängigen Öffnung versehen.

In einem weiteren Ausführungsbeispiel ist das Verhältnis des Abstandes des oberen, dem Kopfteil zugewandten Endes des Luftleitungsrohrs zu der Unterseite des Gitters zu dem Durchmesser des Gitterrotes variabel, z.B. 30 bis 10, und weist das Verhältnis des Durchmessers des Gitters zu dem Durchmesser des Luftleitungsrohrs einen Wert von 10 auf.

Die Holzfördereinrichtung mit dem Verteilerblech und die Belüftungsdosiereinrichtung 111 werden über eine Steuereinrichtung angesteuert, so dass die im Bereich des Gitters 2x angebrachten Messeinrichtungen zur Bestimmung der Temperaturen diese in den Zonen der im Bereich der auf dem Gitter lastenden Schüttung messen und die mit den Messwerten korkorrespondierende Signale erzeugen und an die Steuereinrichtung weiterleiten, Die Steuerungseinrichtung sendet in Abhängigkeit von den Signalen Steuerungssignale an die Holzfördereinrichtung zur Bestimmung der Aufschüttung der Oberfläche der Schüttung mit Holzteilchen nach Ort, Geschwindigkeit und/oder Dauer und an die Belüftungsdosiereinrichtung 111 zur Bestimmung der Dauer und der Geschwindigkeit der Luftzuführung und/oder des Abstandes des oberen Endes 117 des Luftleitungsrohres oder Außenrohrs 121 von der Unterseite des Gitters 2x als Axialverschiebung des Luftleitungsrohres 311 oder Außenrohrs 121 und/oder des Ortes der Luftzuführung als Radialverschiebung des Luftleitungsrohres 3 oder Außenrohrs 12.

Der Bereich des Kopfendes des Schachtreaktors 211, der begrenzt wird von der Oberfläche der Schüttung und einem Teil des Schachtreaktormantels 71, ist mit der Prozessgasleitung verbunden, über welche das Prozessgas abgezogen und der Brennkammer zugeleitet wird. In der Prozessgasleitung ist die Stellklappe als Prozessgaskontrolleinrichtung angeordnet zum kontrollierten Abzug des Prozessgases. Dieser Bereich des Kopfendes weist die Eintragsöffnung auf, in welcher die Holzfördereinrichtung mit dem Verteilerblech angeordnet ist, und kann bei Bedarf dicht verschlossen sein, z.B. zur Bestimmung des Drucks in demselben (nicht gezeigt).

In einem weiteren Ausführungsbeispiel ist eine Nachverkohlungszone auf der in der Austragsöffnung 161 des Schachtreaktors 211 befindlichen Teilchenzähleinrichtung als Messeinrichtung, vorzugsweise eine Zellradschleuse, zur Bestimmung der Dauer der Nachverkohlung, der Anzahl der die Austragsöffnung 161 passierenden Pflanzenkohleteilchen und /oder zur Bestimmung der Menge an Ablöschwasser angeordnet. Die Intensität der Nachverkohlungszone ist nach Maßgaben der Füllstandshöhe und/oder der Temperatur derselben oder in derselben steuerbar.

In einem Ausführungsbeispiel der umweltfreundlichen selbstständig regelbaren Anlage umfasst der Schachtreaktor 211 einen ein Kopfende und ein Fußende 81 umfassenden Schachtreaktormantel 71 zur Aufnahme der Pflanzenkohle, mindestens eine Teilchenfördereinrichtung zur Beförderung der Biomasseteilchen in den Schachtreaktor 211, mindestens eine Belüftungsdosiereinrichtung 111 zur Zuführung der Luft in den Schachtreaktor 211, das Kopfende des Schachtreaktors 211 eine Eintragsöffnung und das Fußende 81 des Schachtreaktors 211 eine Austragsöffnung 161 aufweisen, ein mittiger Abschnitt 14 zwischen dem Kopfende und dem Fußende 81 sich befindet, einer mit der Austragsöffnung verbundenen Auffangeinrichtung 50 zur Ablöschung der aus der Austragsöffnung des Schachtreaktors bewegten Pflanzenkohle, wobei das Gitter 2x in einem Inneren des Schachtreaktors 211 in einem Übergangsbereich 115 zwischen dem mittigen Abschnitt 141 des Schachtreaktors 211 und dem Fußende 8 zur Abstützung der Schüttung angeordnet ist: Das Fußende 81 des Schachtreaktors 211 weist die Belüftungsdosiereinrichtung 111 auf, die Belüftungsdosiereinrichtung 111 ein Luftleitungsrohr 311 und ein Außenrohr 121 aufweist, das Außenrohr 121 ein oberes Ende des Luftleitungsrohrs 311 aufnimmt, das Außenrohr 121 mit dem Luftleitungsrohr 311 beweglich verbunden ist, das Luftleitungsrohr 311 mit einem Luftaußenrohr 412 , über welches Luft von außen zuführbar ist, verbunden ist, und/oder die Teilchenfördereinrichtung im Bereich des Kopfendes angeordnet ist, welche eine Schütteinrichtung umfasst, die Schütteinrichtung ein Schüttelgitter zur gleichmäßigen Verteilung und Beschickung der Schüttung mit Biomasseteilchen, wie Holzteilchen, und / oder ein Verteilerblech oder eine Rutsche zur kontrollierten Beschickung der Oberfläche der Schüttung mit Biomasseteilchen aufweist, vorzugsweise das Fußende 81 des Schachtreaktormantels 71 konisch, vorzugsweise mit einer trichterförmigen Ringschürze 191 , ausgebildet ist. Zur gleichmäßigen radialen Temperaturführung in der Schüttung sind die Beschickung der Schüttung mit Biomasseteilchen in Menge und Oberflächenverteilung und/oder die Luftzuführung in Volumen und Position mittels Messeinrichtungen gesteuert. Die Länge und /oder die Neigung des, vorzugsweise um eine Achse drehbaren, Verteilerblechs sind einstellbar und steuerbar. In der Austragsöffnung 161 des Fußendes des Schachtreaktors 211 ist die Teilchenzähleinrichtung als Messeinrichtung, vorzugsweivorzugsweise eine Zellradschleuse, zur Bestimmung der Anzahl der die Austragsöffnung passierenden Pflanzenkohleteilchen und der Menge des Ablöschwassers zum Ablöschen derselben angeordnet. Der Abstand eines oberen Endes 117 des Außenrohrs 121 von der Unterseite 61 des Gitters 2x sind festlegbar und/oder das Außenrohr 121 und/oder das Luftleitungsrohr 311 quer und/oder längs zu einer Mitte-Längsachse A des Schachtreaktors 1 verschiebbar. Eine Nachverkohlungszone ist auf der in der Austragsöffnung 161 des Schachtreaktors 211 befindlichen Teilchenzähleinrichtung als Messeinrichtung, vorzugsweise eine Zellradschleuse, zur Bestimmung der Dauer der Nachverkohlung, der Anzahl der die Austragsöffnung 161 passierenden Pflanzenkohleteilchen und /oder zur Bestimmung der Menge an Ablöschwasser angeordnet. Die Prozessgaskontrolleinrichtung, vorzugsweise eine Stellklappe oder Ventilator, ist in einer von dem Kopfende abgehenden Prozessgasleitung zur Weiterleitung der Gase angeordnet zum Verschließen und Öffnen derselben. Über die Prozessgasleitung sind Prozessgase einer Brennkammer zum Abfackeln und/oder zur Gewinnung zusätzlicher thermischer Energie leitbar. Der Druck in dem Kopfende des Schachtreaktors und/ oder die Geschwindigkeit der angesaugten Luft in der Belüftungsdosiereinrichtung 11 und/ oder die Geschwindigkeit der aus der Schüttung abgezogenen Prozessgase sind mittels Messeinrichtungen bestimmt. Messeinrichtungen zur Bestimmung der Höhe der mittigen Zone und der Außerzone der Schüttung sind im Kopfende des Schachtreaktors 211 angeordnet; die Auffangeinrichtung 50 umfasst eine Sortierungs- und Zerkleinerungseinrichtung zur Klassierung der Pflanzenkohleteilchen nach Größe, Form und/oder Verkohlungsgrad derselben und zur Aussortierung von Fremdstoffen. Die Teilchenfördereinrichtung mit dem Verteilerblech und/oder die Belüftungsdosiereinrichtung 111 sind über eine Steuereinrichtung angesteuert. wobei die im Bereich des Gitters 2x und/oder Kopfendes angebrachten Messeinrichtungen Temperaturen der Zonen, vorzugsweise der mittigen Zone und Außenzone, der im Bereich der auf dem Gitter lastenden Schüttung und / oder des Luftvolumenstroms in denselben oder in einer mit dem Kopfende verbundenen Prozessgasleitung bestimmen und die mit den Temperaturen als Istwerte korrespondierenden Signale an die Steuerungseinrichtung weiterleiten. Die Steuerungseinrichtung vergleicht die Istwerte mit Sollwerten, stellt gegengegenüber den Sollwerten ggf. Regelabweichungen fest und die mit den Regelabweichungen korrespondierenden Steuerungssignale werden von ihr an die Teilchenfördereinrichtung zur Bestimmung der Aufschüttung der Oberfläche der Schüttung mit Biomasseteilchen nach Ort, Geschwindigkeit und/oder Dauer und/oder an die Belüftungsdosiereinrichtung 111 zur Bestimmung der Dauer, der Geschwindigkeit der Luftzuführung und/oder des Abstandes des oberen Endes 117 des Außenrohrs 121 von der Unterseite 6 des Gitters 2x weitergeleitet. Unterhalb des Gitters 2x ist eine Nachverkohlungszone angeordnet; die Intensität der Nachverkohlungszone ist nach Maßgaben der Füllstandshöhe und/oder der Temperatur derselben oder in derselben steuerbar.

In einem Ausführungsbeispiel werden mittels des erfindungsgemäßen kostengünstigen Verfahrens zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor 211 einer umweltfreundlichen selbstständig regelbaren Anlage zur kontinuierlichen Erzeugung von Pflanzenkohle aus Biomasse, vorzugsweise aus Biomasseteilchen, wie Holz, fortlaufend die Temperaturen in der Schüttung, vorzugsweise zumindest in einer mittigen Zone und/oder in einer Außenzone derselben, der Volumenstrom der aus der Schüttung entweichenden Prozessgase in der Prozessgasleitung, die Höhe der Schüttung in dem Schachtreaktor 211 gemessen werden und nach Maßgaben der Temperaturen und / oder des Volumenstroms und/oder der Höhe der Schüttung die Luft über die Belüftungsdosiereinrichtung 111 der Schüttung sowie die Biomasseteilchen über die Teilchenfördereinrichtung der Schüttung zugeführt, die Prozessgase über die Prozessgaskontrolleinrichtung abgezogen,die Pflanzenkohleteilchen über die Teilchenzähleinrichtung abgeführt und die Ablöschwasser über die Ablöscheinrichtung zugegeben zur Erzeugung einer gleichmäßigen Temperatur in der Schüttung und Bereitstellung einheitlicher Pflanzenkohle. Die Biomasseteilchen werden der mittigen Zone und/oder der Außenzone der Schüttung über das Schüttelgitter oder das Verteilerblech der Teilchenfördereinrichtung zugeführt. Die Neigung und /oder das Längenausfahren des Verteilerbleches werden nach Maßgaben der Temperaturen und / oder Volumenstroms und/oder der Höhe der Schüttung durchgeführt. Das aus dem Schachtreaktor 211 abgezogene Prozessgas wird einer Brennkammer, einem Wärmetauscher und/oder einer Einrichtung zur Verstromung zugeführt. Die Prozessgaskontrolleinrichtung in der Prozessgasleitung und/oder die Teilchenfördereinrichtung im Bereich des Kopfendes des Schachtreaktors und/oder die Belüftungsdosiereinrichtung 111 am Fußende des Schachtreaktors 211 und/oder die Teilchenzähleinrichtung im Bereich des Fußendes des Schachtreaktors 211 und/oder die Ablöscheinrichtung im Bereich des FußOendes des Schachtreaktors 211 von einer Steuereinrichtung angesteuert. Die Temperaturen in der Schüttung, vorzugsweise zumindest in einer mittigen Zone und/oder in einer Außenzone derselben und der Volumenstrom der aus der Schüttung entweichenden Prozessgase in der Prozessgasleitung, die Höhe der Schüttung in dem Schachtreaktor 211 werden von Messeinrichtungen als Istwerte gemessen, die mit den Istwerten korrespondierenden von den Messeinrichtungen erzeugten Signale werden an die mit den Messeinrichtungen verbundene Steuereinrichtung weitergeleitet, von der Steuereinrichtung werden Differenzen der Istwerte gegenüber den Sollwerten als Regelabweichungen festgestellt, die mit den Regelabweichungen korrespondierenden Steuerungssignale werden erzeugt und an die Prozessgaskontrolleinrichtung und/oder die Teilchenfördereinrichtung und/oder die Belüftungsdosiereinrichtung 111 und/oder die Teilchenzähleinrichtung und/oder die Ablöscheinrichtung zur Ansteuerung derselben weitergeleitet. Die Prozessgase werden über die Eintragsöffnung nach Maßgabe von Druck in dem Kopfende des Schachtreaktors und /oder von Temperatur in der mittigen Zone und/ oder Außenzonen abgezogen. Die Pflanzenkohle wird mittels einer Sortierungs- und Zerkleinerungseinrichtung, z.B. einer Kugelmühle, sortiert und aus diesen Fremdstoffe entfernt.

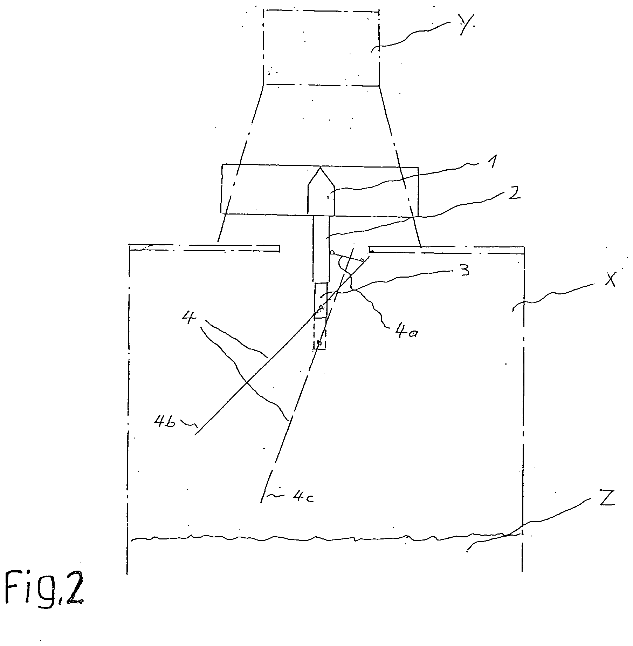

In einem anderen Ausführungsbeispiel ist das Antriebsgehäuse 1 in einem Zuführschacht montiert (Fig. 2). Die Hauptantriebseinrichtung 2 mit dem Rohr als Teleskopeinrichtung 3 ragt in das Zentrum der als Meiler ausgestalteten Anlage. Die Schütte 4 ist am unteren Ende des mit der Hauptantriebseinrichtung 2 drehfesten Teleskops 3 beweglich gelagert und mit der Koppel 4a an der Hauptantriebseinrichtung 2 schwingend befestigt. Die Gewindestange 5 oder Welle lagert mit dem Sperr-Rad 7 auf der Hauptantriebseinrichtung 2 und dreht sich unter Kraftschluss mit der Hauptantriebseinrichtung 2. Damit bleibt die Schütte 4 in der jeweiligen Neigung fixiert. Der Umlauf erfolgt durch die Antriebseinrichtung 8 sowie Antriebsritzel 8a über eine Gliederkette. Die Verstellung des Teleskops 3 erfolgt bei umlaufender Schütte 4 und ändert deren Neigung stufenlos zwischen der oberen Endlage 4b der unteren Endlage 4c, indem über den Sperrzylinder 10 die Sperrklinke 9 das Sperr-Rad 7, welches am Umfang mit Sperrnuten versehen ist, blockiert, so dass über die Gewindemutter 6 das Teleskop 3 entsprechend der Drehrichtung der Hauptantriebseinrichtung 2 verlängert oder verkürzt wird. Die Neigung der umlaufenden Schütte 4 wird nach Vorgabe von als Sensoren ausgebildeten Messeinrichtungen eingestellt. Die jeweilige Neigung der Schütte 4, wird durch Registrierung der Umdrehungsanzahl der Hauptantriebseinrichtung 2 über nicht dargestellte Drehsensoren erfasst. Für die punktuelle Schüttung der Biomasse wird über den gleichen Drehsensor der Antrieb ausgeschaltet. Bei Erreichung der Endlagen der Schütte 4 rastet die Klinke 9 gegen die Kraft des Zylinders 10 aus der Sperrnut, so dass hierdurch ein Überlastschutz gewährt ist.

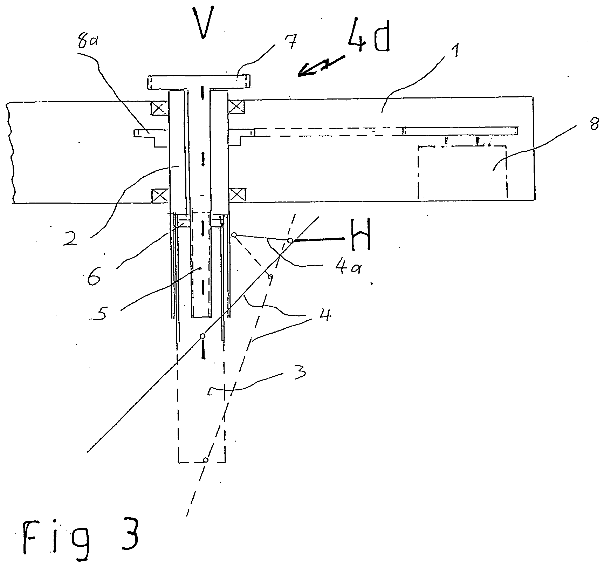

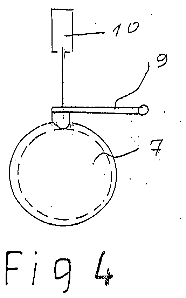

Das Maß der Drehung der Welle um die Vertikaldrehachse V und der Drehsinn bestimmen das Ausmaß der Neigung der Schütte, so dass genau positioniert die Schüttungsoberfläche im Meiler mit Biomasse versehen wird (Fig. 3). Die Verteilervorrichtung für die Biomasse zur temperaturgesteuerten selbsttätigen Beschickung von Meilern zur Gewinnung hochwertiger und gleichmäßiger Biokohle zeichnet unter Anderem sich aus, dass
1 die Aufschüttung umlaufend erfolgt,
2 die Aufschüttung variabel in vorgegebenen Zonen erfolgt,
3 die Aufschüttung auch punktuell erfolgen kann,
4 die Zonen der Aufschüttung durch Sensoren bestimmt werden
5 die Neigung der Schütte stufenlos verstellbar ist,
6 die Veränderung der Neigung der Schütte durch ein Teleskop und ein Koppelglied variabel zwischen den Endlagen erfolgt,
7 die Verstellung des Teleskops über ein Gewinde erfolgt,
8 zur Bewegung des Teleskops der Antrieb der Verteilanlage genutzt wird,
9 die Endlagen der Schütte durch eine Überlastsicherung nicht überschritten werden,
10 das Teleskop durch einen beliebigen pneumatischen, hydraulischen, elektrischen Linearantrieb ausgeführt werden kann (Fig. 4).

Die Verteilervorrichtung zur Gewinnung von hochwertiger einheitlicher Pflanzenkohle aus einer Biomasse eignet sich besonders zum Einsatz in der erfindungsgemäßen betriebssicheren selbstständig regelbaren Anlage zur kontinuierlichen Erzeugung von homogener Pflanzenkohle aus einer Biomasse durch:
die Vermeidung des radialen Temperaturverlaufs in der Schüttung des Schachtreaktors,
die Vermeidung von "hot spots" in der Schüttung des Schachtreaktors,
die Vermeidung des axialen Temperaturverlaufs in der Schüttung des Schachtreaktors,
die Bereitstellung von Pflanzenkohle homogener Güte,
die kontrollierte Steuerung und das kontinuierliche Betreiben der erfindungsgemäßen Anlage

Die erfindungsgemäße Anlage und das erfindungsgemäße Verfahren zum Betreiben derselben zeichnen sich vorteilhafterweise aus durch
die Bereitstellung von Pflanzenkohle übereinstimmender Güte,
die Bereitstellung von Pflanzenkohle ohne Fehlverkohlungen,
das kontinuierliche Fahren,
das Fehlen von radialem ungleichmäßigem Temperaturverlauf in der Schüttung des Schachtreaktors,
das Fehlen von "hot spots", also punktuell auftretende beträchtliche Temperaturspitzen an oder in einzelnen Bereichen der Schüttung des Schachtreaktors,
die hohe Leistung an bereitgestellter Pflanzenkohle gleichbleibender Zusammensetzung,
die Erhöhung des Durchsatzes an verarbeiteter Biomasse,
die Kontrolle der Messwerte und rasche Regelung deren Istwerte durch die Einrichtungen der Anlage,
die Verwertbarkeit von Prozessgas, usw.

Die als Teilchenfördereinrichtung ausgestaltete Verteilervorrichtung zur Gewinnung von hochwertiger einheitlicher Pflanzenkohle aus einer Biomasse in einem Meiler umfasst eine um eine Vertikaldrehachse V drehbare Schütteinrichtung 4d und eine Antriebseinrichtung 8 zur kontrollierten Beschickung einer Schüttung des Meilers mit der Biomasse, die eine stufenlos neigbare Schütte 4 zur stufenlosen radialen Beschickung derselben aufweist. Die eine Hauptantriebseinrichtung 2 aufweisende Schütteinrichtung 4d ist von der Antriebseinrichtung 8 um die Vertikaldrehachse V drehbar angetrieben zur Beschickung der Oberfläche der Schüttung im Bereich um die Vertikaldrehachse V derselben. Die Schütteinrichtung 4d weist eine Schütte 4 auf, welche um eine, vorzugsweise quer zu der Vertikaldrehachse V ausgerichtete, Horizontalschwenkachse H neig- oder schwenkbar ausgebildet ist. Die Schütte 4 ist mit ihrem oberen Ende mit der Hauptantriebseinrichtung 2 gelenkig verbunden und mit ihrem von ihrem oberen Ende beabstandeten unteren Abschnitt an einem entlang einer, vorzugsweise parallel zu der Vertikaldrehachse V ausgerichteten, Achse verschiebbaren Rohr 3 beweglich angelenkt zur stufenlosen Neigbarkeit der Schütte 4 um die, vorzugsweise quer zu der Vertikaldrehachse V ausgerichteten, Horizontalschwenkachse H zur stufenlosen Radialbeschickung der Oberfläche der Schüttung. Die Hauptantriebseinrichtung 2 weist ein Antriebsaggregat und eine von demselben drehbar angetriebene Gewindestange oder Welle 5 auf. Die Gewindestange 5 ist in dem Rohr 3 zur Verschiebung desselben drehbar geführt und/oder die Gewindestange 5 mit ihrem Außengewinde in einem Innengewinde des Rohrs 3 drehbar geführt. Die Schütteinrichtung 4d ist von einem Antriebsaggregat der Antriebseinrichtung 8 um die Vertikaldrehachse V drehbar angetrieben. Die Schütteinrichtung 4d weist in ihrem Rahmen die Hauptantriebseinrichtung 2 und die von der Hauptantriebseinrichtung 2 angetriebene Gewindestange 5 auf, das Rohr 3 ist aus dem Rahmen bewegbar, so dass die Schütteinrich-Schütteinrichtung über ein Getriebe, vorzugsweise ein Antriebsritzel 8a und Gliederkette, von dem Antriebsaggregat der Antriebseinrichtung 8 angetrieben ist, wobei die Schütte 4 mit ihrem oberen Ende über eine Koppel 4a als Stange mit dem Rahmen gelenkig verbunden ist.

In einem Ausführungsbeispiel sind die Belüftungsdosiereinrichtung 111 unter dem Gitter 2x, die Teilchenzähleinrichtung unterhalb des Gitters 2x angeordnet.

In einem Ausführungsbeispiel umfasst die betriebssichere selbstständig regelbare Anlage zur kontinuierlichen Erzeugung von homogener Pflanzenkohle aus einer Biomasse in einer Schüttung als Wanderbett mit einem, vorzugsweise hohlzylindrisch ausgebildeten, Schachtreaktor mindestens eine Verteilervorrichtung zur kontrollierten Beschickung der Biomasse auf die Schüttung in dem Schachtreaktor,
einen ein Kopfende und ein Fußende umfassenden Schachtreaktormantel zur Aufnahme der Pflanzenkohle,
einer Zuführeinrichtung, mindestens einer Belüftungsdosiereinrichtung zur Zuführung von Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, eine mit der Austragsöffnung verbundene Auffangeinrichtung zur Ablöschung und -leitung der aus der Austragsöffnung des Schachtreaktors bewegten Pflanzenkohle, ein Gitter in einem Inneren des Schachtreaktors in einem Übergangsbereich zwischen dem mittigen Abschnitt des Schachtreaktors und dem Fußende zur Abstützung der Schüttung angeordnet ist, wobei die Zuführeinrichtung in der Eintragsöffnung, vorzugsweise mit dieser luftdicht verbindbar ist, angeordnet ist zur Abgabe der Biomasse an die Verteilervorrichtung, die Verteilervorrichtung im Bereich des Kopfendes des Schachtreaktors angeordnet ist, die Verteilervorrichtung eine Schütteinrichtung mit einer neigbaren Schütte 4 und eine die Schütteinrichtung zur Drehung antreibende Antriebseinrichtung umfasst. Die Neigung der Schütte 4 und/oder die Drehbarkeit der Schütteinrichtung 4d sind einstellbar und steuerbar. Durch die Schütteinrichtung ist die Beschickung der Schüttung mit der Biomasse in Bezug auf deren Menge und Oberflächen-Oberflächenverteilung mittels Messeinrichtungen angesteuert. Zur gleichmäßigen radialen und / oder vertikalen Temperaturführung in der Schüttung sind das Ausmaß der Neigung der Schütte und der Drehbarkeit der Schütteinrichtung und/oder das Ausmaß der Beschickung der Schüttung mit der Biomasse in Bezug auf deren Menge und Oberflächenverteilung mittels Messeinrichtungen angesteuert. Die Auffangeinrichtung weist ein Auffangbecken mit einer Berieselungseinrichtung, eine an das Auffangbecken angeschlossene mit einem Rührbecken verbundene von einem Antriebsaggregat angetriebene Transportschnecke, welche Pflanzenkohle von dem Auffangbecken in das Rührbecken weiterleitet, vorzugsweise eine Zellradschleuse mit der Transportschnecke verbunden ist, auf.

In Bereichen des Gitters und/oder des Kopfendes angebrachte Messeinrichtungen bestimmen Temperaturen der Zonen, vorzugsweise der mittigen Zone und Außenzone, der im Bereich der auf dem Gitter lastenden Schüttung und / oder des Luftvolumenstroms in Belüftungsdosiereinrichtung und/oder in denselben oder in einer mit dem Kopfende verbundenen Prozessgasleitung als Istwerte und leiten die mit den Istwerten korrespondierenden Signale an die Steuerungseinrichtung weiter; in einem anderen Ausführungsbeispiel bestimmen Messeinrichtungen zusätzlich oder statt der vorgenannten Istwerte die Temperatur, die Feuchtigkeit, das Gewicht, Volumen der Pflanzenkohle und/oder Anzahl der Teile derselben in dem Auffangbecken, dem Rührbecken und/oder in einem Bereich der Transportschnecke als Istwerte und leiten die mit den Istwerten korrespondierenden Signale an die Steuerungseinrichtung weiter. Die Schütteinrichtung, die Zuführeinrichtung, die Antriebseinrichtung 8 und/oder die Belüftungsdosiereinrichtung und/oder Auffangeinrichtung sind über die Steuereinrichtung angesteuert. Die Zuführeinrichtung weist eine Biomassezähleinrichtung, wie eine Zellradschleuse, zur kontrollierten Zuführung der Biomasse an die Verteilervorrichtung auf. Die Steuerungseinrichtung vergleicht die Istwerte mit Sollwerten, stellt gegenüber den Sollwerten ggf. Regelabweichungen fest und leitet die mit den Regelabweichungen korrespondierenden Steuerungssignale an die Schütteinrichtung der Verteilervorrichtung und deren Antriebseinrichtung 8, die Zuführeinrichtung und/oder die Belüftungsdosiereinrichtung und/oder die Auffangeinrichtung weiter.

Die erfindungsgemäße Anlage und das erfindungsgemäße Verfahren zeichnen sich aus durch
- die Erzeugung von Pflanzenkohle von hoher Güte, hinreichender Festigkeit, gleichbleibendem Kohlenstoffgehalt und Kohlegehalt, genügender Festigkeit und Porosität, einheitlicher Qualität,
- die wirtschaftlich kostengünstige Betriebsweise und den störungsfreien Dauerbetrieb,
- den ausgezeichneten Wirkungsgrad mit Bereitstellung von sowohl hochwertiger Pflanzenkohle als auch ausreichendem Maß an energetisch verwertbaren Gasen,
- die konstanten Verfahrensbedingungen ohne Auftreten von nennenswerten Störfaktoren,
- in der Pflanzenkohle derselben Holzcharge der Kohlegehalt und der Kohlenstoffgehalt variieren können.
- das steuerbare Ausmaß an zu vermeidenden gesundheitsschädlichen Dämpfen,
- die Verarbeitbarkeit von Hölzern minderer Qualität, unterschiedlichen Feuchtigkeitsgehaltes,
- die Eignung für zu verkohlende sonstige Biomassen, wie Holzderivaten, Holzabfallprodukten, Holznebenprodukten, Formkörpern aus Biomasse, usw.,
- die geringe Anforderungen an die Geschicklichkeit des Bedienungspersonals wegen selbstätiger Steuerung,
- die Vermeidung radialer Temperaturunterschiede in der Verkohlungszone,
- die berechenbare energetische Nutzung von Mengen bei der Verkohlung anfallender gasförmiger Stoffe,
- die Zerkleinerung von Pflanzenkohle zwecks Erleichterung deren Weiterverarbeitung und
- die Klassierung von Pflanzenkohle als Sortierung oder Vorsortierung zwecks Erleichterung deren Weiterverarbeitung sowie
- die Aussortierung von Fremdstoffen aus der Pflanzenkohle.

### Bezugszeichenliste

- X: Meiler
- Y: Zuführeinrichtung mit Zuführschacht
- Z: Biomasse im Meiler
- H: Horizontalschwenk- drehachse
- V: Vertikaldrehachse
- 1: Antriebsgehäuse
- 2: Hauptantrieb
- 3: Teleskop
- 4: Schütte
- 4a: Koppel
- 4b: obere Endlage
- 4c: untere Endlage
- 4d: Schütteinrichtung
- 5: Gewindestange
- 6: Gewindemutter
- 7: Sperr-Rad
- 8: Antriebseinheit
- 8a: Antriebritzel
- 9: Sperrklinke
- 10: Sperrzylinder
- 2x: Gitter
- 50: Auffangeinrichtung
- 61: Unterseite von Gitter
- 71: Schachtreaktormantel
- 81: Fußende
- 111: Belüftungsdosiereinrichtung
- 115: Übergangsbereich
- 117: oberes Ende als Luftaustrittsöffnung
- 121: Außenrohr
- 141: mittiger Abschnitt
- 161: Austragsöffnung
- 191: Ringschürze
- 211: Schachtreaktor
- 311: Luftleitungsrohr
- 412: Luftaußenrohr
- A: Mitte-Längsachse
- M: mittige Zone
- B: Außenzone

## Patentansprüche

1. Umweltfreundliche selbstständig regelbare Anlage zur kontinuierlichen Erzeugung von Pflanzenkohle aus Biomasseteilchen in einer Schüttung als Wanderbett mit einem Schachtreaktor (211) mit
einem ein Kopfende und ein Fußende (81) umfassenden Schachtreaktormantel (71) zur Aufnahme der Pflanzenkohle,
mindestens einer Teilchenfördereinrichtung zur Beförderung der Biomasseteilchen in den Schachtreaktor (211),
mindestens einer Belüftungsdosiereinrichtung (111) zur Zuführung der Luft in den Schachtreaktor (211),
das Kopfende des Schachtreaktors (211) eine Eintragsöffnung und das Fußende (81) des Schachtreaktors (211) eine Austragsöffnung (161) aufweisen, ein mittiger Abschnitt (141) zwischen dem Kopfende und dem Fußende (81) sich befindet,
ein Gitter (2x) in einem Inneren des Schachtreaktors (211) in einem Übergangsbereich (115) zwischen dem mittigen Abschnitt (141) des Schachtreaktors (211) und dem Fußende (81) zur Abstützung der Schüttung angeordnet ist,
das Fußende (81) des Schachtreaktors (211) die Belüftungsdosiereinrichtung (111) aufweist, die Belüftungsdosiereinrichtung (111) ein Luftleitungsrohr (311) und ein Außenrohr (121) aufweist, das Außenrohr (121) ein oberes Ende des Luftleitungsrohrs (311) aufnimmt, das Außenrohr (121) mit dem Luftleitungsrohr (311) beweglich verbunden ist, das
Luftleitungsrohr (311) mit einem Luftaußenrohr (412), über welches Luft von außen zuführbar ist, verbunden ist,
die Teilchenfördereinrichtung im Bereich des Kopfendes angeordnet ist, welche eine Schütteinrichtung (4d) umfasst, die Schütteinrichtung (4d) eine stufenlos neigbare Schütte (4) zur gleichmäßigen, kontrollierten, stufenlos radialen Verteilung und Beschickung der Schüttung mit Biomasseteilchen aufweist,
die Schütte (4) um eine quer zu der Vertikaldrehachse (V) ausgerichtete Horizontalschwenkachse (H) neigbar ausgebildet ist,
**dadurch gekennzeichnet, dass**
die eine Hauptantriebseinrichtung (2) aufweisende Schütteinrichtung (4d) von der Antriebseinrichtung (8) um die Vertikaldrehachse (V) drehbar angetrieben ist zur Beschickung der Oberfläche der Schüttung im Bereich um die Vertikaldrehachse (V) derselben,
die Zuführung der Luft in die Schüttung durch die Belüftungsdosiereinrichtung luftmengen- und zonenkontrolliert ist, wobei
der Abstand eines oberen Endes (117) des Außenrohrs (121) von der Unterseite (61) des Gitters (2x) festlegbar und das Außenrohr (121) quer zu einer Mitte-Längsachse A des Schachtreaktors (211) verschiebbar sind.

2. Umweltfreundliche selbstständig regelbare Anlage zur kontinuierlichen Erzeugung von Pflanzenkohle aus Biomasseteilchen in einer Schüttung als Wanderbett nach Anspruch 1, **dadurch gekennzeichnet, dass** zur gleichmäßigen radialen Temperaturführung und Vermeidung von heißen Stellen (hot spots) in der Schüttung während der Verkohlung die Beschickung der Schüttung mit Biomasseteilchen durch die Teilchenfördereinrichtung mengen-, zonen- und höhenkontrolliert und das Abführen von Prozessgasen durch eine in einer von dem Kopfende abgehenden Prozessgasleitung angeordneten Prozessgaskontrolleinrichtung zur Weiterleitung der Gase druckgaskontrolliert angesteuert sind.

3. Umweltfreundliche selbstständig regelbare Anlage zur kontinuierlichen Erzeugung von Pflanzenkohle aus Biomasseteilchen in einer Schüttung als Wanderbett nach Anspruch 1 oder 2, **dadurch gekennzeichnet, dass** die Belüftungsdosiereinrichtung (111) unter dem Gitter (2x) und eine Teilchenzähleinrichtung zur Bestimmung der Anzahl und/oder Größe der Pflanzenkohle unterhalb des Gitters (2x) angeordnet sind.

4. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** eine von dem Gitter beabstandet angeordnete Auffangeinrichtung (50) unter oder unterhalb der Belüftungsdosiereinrichtung (!11) zur Ablöschung der aus der Austragsöffnung des Schachtreaktors bewegten Pflanzenkohle angeordnet ist.

5. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** zur Temperaturführung in der Schüttung das Ausmaß der Neigung der Schütte und der Drehbarkeit der Schütteinrichtung und/oder das Ausmaß der Beschickung der Schüttung mit der Biomasse in Bezug auf deren Menge und Oberflächenverteilung mittels Messeinrichtungen angesteuert sind.

6. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** das Außenrohr (121) längs zu einer Mitte-Längsachse (A) des Schachtreaktors (211) verschiebbar ist.

7. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** das Luftleitungsrohr (311) quer und /oder längs zu einer Mitte-Längsachse (A) des Schachtreaktors (211) verschiebbar ist.

8. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** eine Nachverkohlungszone auf der in der Austragsöffnung (161) des Schachtreaktors (211) befindlichen Teilchenzähleinrichtung als Messeinrichtung, vorzugsweise eine Zellradschleuse, zur Bestimmung der Dauer der Nachverkohlung, der Anzahl der die Austragsöffnung (161) passierenden Pflanzenkohle, vorzugsweise Pflanzenkohleteilchen, und /oder zur Bestimmung der Menge an Ablöschwasser angeordnet ist.

9. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** die Auffangeinrichtung (50) mit der Teilchenzähleinrichtung derart verbunden ist, dass sie unter oder unterhalb der Teilchenzähleinrichtung sich befindet.

10. Umweltfreundliche selbstständig regelbare Anlage zur kontinuierlichen Erzeugung von Pflanzenkohle aus Biomasseteilchen in einer Schüttung als Wanderbett nach mindestens einem der vorgehenden Ansprüche, **dadurch gekennzeichnet, dass** die Auffangeinrichtung (50) eine Sortierungs- und Zerkleinerungseinrichtung zur Klassierung der Pflanzenkohle, vorzugsweise Pflanzenkohleteilchen, nach Größe, Form und/oder Verkohlungsgrad derselben und zur Aussortierung von Fremdstoffen umfasst.

11. Kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor (1) einer umweltfreundlichen selbstständig regelbaren Anlage zur kontinuierlichen Erzeugung von Pflanzenkohle aus Biomasse, vorzugsweise aus Biomasseteilchen, wie Holz, nach mindestens einem der vorhergehenden Ansprüche, wobei fortlaufend
die Temperaturen in der Schüttung, vorzugsweise zumindest in einer mittigen Zone und/oder in einer Außenzone derselben,
der Volumenstrom der aus der Schüttung entweichenden Prozessgase in der mit dem Kopfende des Schachtreaktors verbundenen Prozessgasleitung,
die Höhe der Schüttung in dem Schachtreaktor (1) gemessen werden und
nach Maßgaben der Temperaturen und / oder des Volumenstroms und/oder der Höhe der Schüttung
die Luft über die Belüftungsdosiereinrichtung (11) der Schüttung sowie
die Biomasseteilchen über die Teilchenfördereinrichtung der Schüttung zugeführt,
die Prozessgase über die Prozessgaskontrolleinrichtung abgezogen werden.

12. Kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor (1) einer umweltfreundlichen selbstständig regelbaren Anlage zur kontinuierlichen Erzeugung von Pflanzenkohle aus Biomasse nach Anspruch 11, **dadurch gekennzeichnet, dass** die Luft in die Schüttung durch die Belüftungsdosiereinrichtung luftmengen-, und zonenkontrolliert, zugeführt, die Biomasseteilchen durch die Teilchenfördereinrichtung mengen-, zonen- und höhenkontrolliert der Schüttung zugegeben und die Prozessgase durch eine in einer von dem Kopfende abgehenden Prozessgasleitung angeordneten Prozessgaskontrolleinrichtung zur Weiterleitung der Gase druckgaskontrolliert abgeführt werden.

13. Kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor (1) einer umweltfreundlichen selbstständig regelbaren Anlage zur kontinuierlichen Erzeugung von Pflanzenkohle aus Biomasse nach Anspruch 11 oder 12, **dadurch gekennzeichnet, dass** nach Maßgaben von Temperaturen und / oder Volumenstrom und/oder Höhe der Schüttung die Neigbarkeit einer Schütte (4) und/oder die Drehbarkeit der Schütteinrichtung (4d) angesteuert werden.

14. Kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor (1) einer umweltfreundlichen selbstständig regelbaren Anlage zur kontinuierlichen Erzeugung von Pflanzenkohle aus Biomasse nach einem der Ansprüche 11 bis 13, **dadurch gekennzeichnet, dass** die Pflanzenkohle in einer Kammer an eine Sortierungs- und Zerkleinerungseinrichtung zur weiteren Aufarbeitung weitergeleitet wird und die Pflanzenkohleteilchen **nach** der Größe, der Form, dem Feuchtigkeitsgrad und/oder dem Verkohlungsgrad klassiert wird.

15. Kostengünstiges Verfahren zur Erzeugung von Pflanzenkohle aus Biomasse, insbesondere aus Biomasseteilchen, wie Holz, in einem Wanderbett in einem im Gegenstrom zur Pflanzenkohle von Luft durchströmten Schachtreaktor (1) einer umweltfreundlichen selbstständig regelbaren Anlage zur kontinuierlichen Erzeugung von Pflanzenkohle aus Biomasse nach Anspruch 14, **dadurch gekennzeichnet, dass** als Sortierungs- und Zerkleinerungseinrichtung eine Kugelmühle verwendet wird zur Aussortierung von Fremdstoffen und Zerkleinerung.

## Claims

1. An environmentally friendly independently adjustable system for continuously producing biochar from biomass particles in a bulk material as a moving bed with a shaft reactor (211) comprising
a shaft reactor shell (71) for receiving the biochar, comprising a head end and a foot end (81),
at least one particle-conveying device for conveying the biomass particles into the shaft reactor (211),
at least one aeration dosing device (111) for feeding the air into the shaft reactor (211), wherein
the head end of the shaft reactor (211) has a charging opening and the foot end (81) of the shaft reactor (211) has a discharging opening (161), a central section (141) is located between the head end and the foot end (81),
a mesh (2x) is disposed in an interior of the shaft reactor (211) in a transition region (115) between the central section (141) of the shaft reactor (211) and the foot end (81) to support the bulk material,
the foot end (81) of the shaft reactor (211) has the aeration dosing device (111), the aeration dosing device (111) has an air conduit pipe (311) and an outer pipe (121), the outer pipe (121) receives an upper end of the air conduit pipe (311), the outer pipe (121) is movably connected to the air conduit pipe (311),
the air conduit pipe (311) is connected to an air outer pipe (412) via which air can be supplied from outside,
the particle-conveying device is disposed in the region of the head end, said particle-conveying device comprising a chute device (4d), the chute device (4d) has a steplessly inclinable chute (4) for distributing the bulk material in a uniform, controlled, steplessly radial manner and charging the bulk material with biomass particles,
the chute (4) is formed inclinably around a horizontal pivot axis (H) oriented transverse to the vertical rotation axis (V),
**characterised in that**
the chute device (4d) which has a main drive device (2) is rotatably driven by the drive device (8) around the vertical rotation axis (V) for charging the surface of the bulk material in the region around the vertical rotation axis (V),
the supply of the air into the bulk material is controlled, in terms of the amount of air and the zone, by the aeration dosing device, wherein
the spacing of an upper end (117) of the outer pipe (121) from the underside (61) of the mesh (2x) can be set and the outer pipe (121) can be displaced transverse to a central longitudinal axis A of the shaft reactor (211).

2. The environmentally friendly independently adjustable system for continuously producing biochar from biomass particles in a bulk material as a moving bed according to claim 1, **characterised in that**, for uniform radial temperature control and avoidance of hot spots in the bulk material during the carbonisation, the charging of the bulk material with biomass particles by the particle-conveying device can be triggered in a controlled manner in terms of amount, zone and height, and the dissipation of process gases can be triggered, in a compressed-gas controlled manner, by a process-gas control device which starts from the head end and which is for conducting the gases.

3. The environmentally friendly independently adjustable system for continuously producing biochar from biomass particles in a bulk material as a moving bed according to claim 1 or 2, **characterised in that** the aeration dosing device (111) is disposed underneath the mesh (2x) and a particle-counting device for determining the number and/or size of the biochar underneath the mesh (2x).

4. The environmentally friendly independently adjustable system for continuously producing biochar from biomass particles in a bulk material as a moving bed according to at least one of the preceding claims, **characterised in that** a collecting device (50) disposed spaced away from the mesh is disposed under or underneath the aeration dosing device (111) for quenching the biochar moved out of the discharging opening of the shaft reactor.

5. The environmentally friendly independently adjustable system for continuously producing biochar from biomass particles in a bulk material as a moving bed according to at least one of the preceding claims, **characterised in that**, to control the temperature in the bulk material, the level of incline of the chute and of the rotatability of the chute device and/or the level of charging of the bulk material with the biomass, with regard to the amount and surface distribution thereof, are triggered by means of measuring devices.

6. The environmentally friendly independently adjustable system for continuously producing biochar from biomass particles in a bulk material as a moving bed according to at least one of the preceding claims, **characterised in that** the outer pipe (121) can be displaced longitudinally relative to a central longitudinal axis (A) of the shaft reactor (211).

7. The environmentally friendly independently adjustable system for continuously producing biochar from biomass particles in a bulk material as a moving bed according to at least one of the preceding claims, **characterised in that** the air conduit pipe (311) can be displaced transversely and/or longitudinally relative to a central longitudinal axis (A) of the shaft reactor (211).

8. The environmentally friendly independently adjustable system for continuously producing biochar from biomass particles in a bulk material as a moving bed according to at least one of the preceding claims, **characterised in that** a post-carbonisation zone is disposed on the particle-counting device, which is located in the discharging opening (161) of the shaft reactor (211), as a measuring device, preferably a rotary star valve, for determining the duration of the post-carbonisation, the number of the biochars, preferably biochar particles, passing the discharging opening (161), and/or for determining the amount of quenching water.

9. The environmentally friendly independently adjustable system for continuously producing biochar from biomass particles in a bulk material as a moving bed according to at least one of the preceding claims, **characterised in that** the collecting device (50) is connected to the particle-counting device such that it is located under or underneath the particle-counting device.

10. The environmentally friendly independently adjustable system for continuously producing biochar from biomass particles in a bulk material as a moving bed according to at least one of the preceding claims, **characterised in that** the collecting device (50) comprises a sorting and comminuting device for classifying the biochars, preferably biochar particles, according to size, shape and/or degree of carbonisation thereof and for separating out foreign substances.

11. A cost-effective method for producing biochar from biomass, in particular from biomass particles, such as wood, in a moving bed in a shaft reactor (1), perfused with air countercurrent to the biochar, of an environmentally friendly independently adjustable system for continuously producing biochar from biomass, preferably from biomass particles, such as wood, according to at least one of the preceding claims, wherein consecutively
the temperatures in the bulk material, preferably at least in a central zone and/or in an outer zone thereof,
the volume flow of the process gases, escaping from the bulk material, in the process-gas conduit connected to the head end of the shaft reactor,
the height of the bulk material in the shaft reactor (1) are measured and,
depending on the temperatures and / or on the volume flow and/or on the height of the bulk material,
the air is supplied to the bulk material via the aeration dosing device (11) and
the biomass particles are supplied to the bulk material via the particle-conveying device, the process gases are removed via the process-gas control device.

12. A cost-effective method for producing biochar from biomass, in particular from biomass particles, such as wood, in a moving bed in a shaft reactor (1), perfused with air countercurrent to the biochar, of an environmentally friendly independently adjustable system for continuously producing biochar from biomass according to claim 11, **characterised in that** the air is fed into the bulk material by the aeration dosing device in a controlled manner in terms of the air amount and zone, the biomass particles are added to the bulk material by the particle-conveying device in a controlled manner in terms of amount, zone and height and the process gases are dissipated, in a compressed-gas controlled manner, by a process-gas control device disposed in a process-gas conduit which starts from the head end and which is for conducting the gases.

13. A cost-effective method for producing biochar from biomass, in particular from biomass particles, such as wood, in a moving bed in a shaft reactor (1), perfused with air countercurrent to the biochar, of an environmentally friendly independently adjustable system for continuously producing biochar from biomass according to claim 11 or 12, **characterised in that** the ability of a chute (4) to be inclined and/or the ability of the chute device (4d) to be rotated can be triggered depending on temperatures and / or volume flow and/or height of the bulk material.

14. A cost-effective method for producing biochar from biomass, in particular from biomass particles, such as wood, in a moving bed in a shaft reactor (1), perfused with air countercurrent to the biochar, of an environmentally friendly independently adjustable system for continuously producing biochar from biomass according to any one of claims 11 to 13, **characterised in that** the biochar in a chamber is conducted to a sorting and comminution device for further processing and the biochar particles are classified according to size, shape, degree of moisture and/or degree of carbonisation.

15. A cost-effective method for producing biochar from biomass, in particular from biomass particles, such as wood, in a moving bed in a shaft reactor (1), perfused with air countercurrent to the biochar, of an environmentally friendly independently adjustable system for continuously producing biochar from biomass according to claim 14, **characterised in that** a ball mill is used as a sorting and comminution device for the purposes of separating out foreign substances and comminuting.

## Revendications

1. Installation écologique réglable de manière autonome pour la production en continu de charbon végétal à partir de particules de biomasse stockées en vrac en lit mobile avec un réacteur en puits (211) avec
une enveloppe de réacteur en puits (71) comprenant une extrémité de tête et une extrémité de pied (81), pour le logement du charbon végétal,
au moins un dispositif de convoyage de particules pour le convoyage des particules de biomasse vers le réacteur en puits (211),
au moins un dispositif de dosage par ventilation (111) pour l'introduction d'air dans le réacteur en puits (211),
l'extrémité de tête du réacteur en puits (211) comprenant une ouverture d'entrée et l'extrémité de pied (81) du réacteur en puits (211) comprenant une ouverture de sortie (161), une portion centrale (141) se trouvant entre l'extrémité de tête et l'extrémité de pied (81),
une grille (2x) étant disposé à l'intérieur du réacteur en puits (211) dans une zone de transition (115) entre la portion centrale (141) du réacteur en puits (211) et l'extrémité de pied (81) pour le soutien du stockage en vrac,
l'extrémité de pied (81) du réacteur en puits (211) comprenant le dispositif de dosage par ventilation (111), le dispositif de dosage par ventilation (111) comprenant un tube de guidage d'air (311) et un tube externe (121), le tube externe (121) logeant une extrémité supérieure du tube de guidage d'air (311), le tube externe (121) étant relié de manière mobile avec le tube de guidage d'air (311),
le tube de guidage d'air (311) étant relié avec un tube externe d'air (412) par l'intermédiaire duquel de l'air peut être introduit de l'extérieur,
le dispositif de convoyage de particules étant disposé au niveau de l'extrémité de tête, qui comprend un dispositif à goulotte (4d), le dispositif à goulotte (4d) comprenant une goulotte (4) inclinable en continu pour une répartition uniforme, contrôlée et en continu et pour l'alimentation du stockage en vrac en particules de biomasse,
la goulotte (4) étant conçue de façon à pouvoir être inclinée autour d'un axe de pivotement horizontal (H) transversalement par rapport à l'axe de rotation vertical (V),
**caractérisé en ce que**
le dispositif à goulotte (4d), comprenant un dispositif d'entraînement principal (2), est entraîné en rotation par le dispositif d'entraînement (8) autour de l'axe de rotation vertical (V) pour l'alimentation de la surface du stockage en vrac dans la zone autour de l'axe de rotation vertical (V) de celle-ci,
l'introduction de l'air dans le stockage en vrac est contrôlée, en ce qui concerne les quantités d'air et les zones, par le dispositif de dosage par ventilation,
la distance d'une extrémité supérieure (117) du tube externe (121) par rapport au côté inférieur (61) de la grille (2x) pouvant être fixée et le tube externe (121) coulissant transversalement par rapport à un axe longitudinal central A du réacteur en puits (211).

2. Installation écologique réglable de manière autonome pour la production en continu de charbon végétal à partir de particules de biomasse stockées en vrac en lit mobile selon la revendication 1, **caractérisée en ce que**, pour un contrôle de la température radial uniforme et afin d'éviter des points chauds (hot spots) dans le stockage en vrac pendant la carbonisation, l'alimentation du stockage vrac en particules de biomasse est contrôlée en termes de quantité, de zones et de hauteur par le dispositif de convoyage de particules et l'évacuation des gaz de process est contrôlée par un dispositif de contrôle des gaz de process disposé dans une conduite de gaz de process sortant de l'extrémité de tête, pour le réacheminement des gaz, avec un contrôle des gaz sous pression.

3. Installation écologique réglable de manière autonome pour la production en continu de charbon végétal à partir de particules de biomasse stockées en vrac en lit mobile selon la revendication 1 ou 2, **caractérisée en ce que** le dispositif de dosage par ventilation (111) est disposée sous la grille (2x) et un dispositif de comptage de particules pour la détermination du nombre et/ou de la taille du charbon végétal est disposé en dessous de la grille (2x).

4. Installation écologique réglable de manière autonome pour la production en continu de charbon végétal à partir de particules de biomasse stockées en vrac en lit mobile selon au moins l'une des revendications précédentes, **caractérisée en ce qu'**un dispositif de capture (50), distante de la grille, est disposée sous ou en dessous du dispositif de dosage par ventilation (111) pour l'extinction du charbon végétal déplacé hors de l'ouverture de sortie du réacteur en puits.

5. Installation écologique réglable de manière autonome pour la production en continu de charbon végétal à partir de particules de biomasse stockées en vrac en lit mobile selon au moins l'une des revendications précédentes, **caractérisée en ce que**, pour le contrôle de la température dans le stockage en vrac, le degré d'inclinaison de la goulotte et de rotation du dispositif à goulotte et/ou l'étendue de l'alimentation du stockage en vrac en biomasse sont contrôlés en ce qui concerne les quantités et la répartition sur la surface, au moyen de dispositifs de mesure.

6. Installation écologique réglable de manière autonome pour la production en continu de charbon végétal à partir de particules de biomasse stockées en vrac en lit mobile selon au moins l'une des revendications précédentes, **caractérisée en ce que** le tube externe (121) coulisse le long d'un axe longitudinal central (A) du réacteur en puits (211).

7. Installation écologique réglable de manière autonome pour la production en continu de charbon végétal à partir de particules de biomasse stockées en vrac en lit mobile selon au moins l'une des revendications précédentes, **caractérisée en ce que** le tube de conduite d'air (311) coulisse transversalement et/ou le long d'un axe longitudinal central (A) du réacteur en puits (211).

8. Installation écologique réglable de manière autonome pour la production en continu de charbon végétal à partir de particules de biomasse stockées en vrac en lit mobile selon au moins l'une des revendications précédentes, **caractérisée en ce qu'**une zone de post-carbonisation est disposé sur le dispositif de comptage de particules se trouvant dans l'ouverture de sortie (161) du réacteur en puits (211), en tant que dispositif de mesure, de préférence un sans rotatif, pour la détermination de la durée de la post-carbonisation, de la quantité de charbon végétal traversant l'ouverture de sortie (161), de préférence des particules de charbon végétal et/ou pour la détermination de la quantité d'eau d'extinction.

9. Installation écologique réglable de manière autonome pour la production en continu de charbon végétal à partir de particules de biomasse stockées en vrac en lit mobile selon au moins l'une des revendications précédentes, **caractérisée en ce que** le dispositif de capture (50) est relié avec le dispositif de comptage de particules de façon à ce qu'il se trouve sous ou en dessus du dispositif de comptage de particules.

10. Installation écologique réglable de manière autonome pour la production en continu de charbon végétal à partir de particules de biomasse stockées en vrac en lit mobile selon au moins l'une des revendications précédentes, **caractérisée en ce que** le dispositif de capture (50) comprend un dispositif de tri et de broyage pour la classification du charbon végétal, de préférence des particules de charbon végétal, selon la taille, la forme et/ou le degré de carbonisation de celles-ci et pour l'élimination des impuretés.

11. Procédé économique de production de charbon végétal à partir de biomasse, plus particulièrement de particules de biomasse, comme du bois, en lit mobile dans un réacteur en puits (1), traversé par de l'air à contre-courant du charbon végétal, d'une installation écologique réglable de manière autonome pour la production en continu de charbon végétal à partir de biomasse, de préférence à partir de particules de biomasse, comme du bois, selon au moins l'une des revendications précédentes, moyennant quoi, de manière continue,
les températures dans le stockage en vrac, de préférence au moins dans une zone centrale et/ou dans une zone externe de celui-ci,
le débit volumique des gaz de process s'échappant du stockage en vrac dans la conduite de gaz de process reliée avec l'extrémité de tête du réacteur en puits,
la hauteur du stockage en vrac dans le réacteur en puits (1) sont mesurés et
en fonction des températures et/ou du débit volumique et/ou de la hauteur du stockage en vrac,
l'air est introduit par l'intermédiaire du dispositif de dosage par ventilation (11) dans le stockage en vrac et
les particules de biomasse sont introduites par l'intermédiaire du dispositif de convoyage de particules dans le stockage en vrac,
les gaz de process sont évacués par l'intermédiaire du dispositif de contrôle des gaz de process.

12. Procédé économique de production de charbon végétal à partir de biomasse, plus particulièrement de particules de biomasse, comme du bois, en lit mobile dans un réacteur en puits (1), traversé par de l'air à contre-courant du charbon végétal, d'une installation écologique réglable de manière autonome pour la production en continu de charbon végétal à partir de biomasse selon la revendication 11, **caractérisé en ce que** l'air est introduit, de manière contrôlée en en termes de quantité et de zones, dans le stockage en vrac par le dispositif de dosage par ventilation, les particules de biomasse sont ajoutées par le dispositif de convoyage de particules, de manière contrôlée en termes de quantité, de zones et de hauteur, au stockage en vrac et les gaz de process sont évacués par un dispositif de contrôle des gaz de process disposé dans une conduite de gaz de process sortant de l'extrémité de tête, pour le réacheminement des gaz avec un contrôle des gaz sous pression.

13. Procédé économique de production de charbon végétal à partir de biomasse, plus particulièrement de particules de biomasse, comme du bois, en lit mobile dans un réacteur en puits (1), traversé par de l'air à contre-courant du charbon végétal, d'une installation écologique réglable de manière autonome pour la production en continu de charbon végétal à partir de biomasse selon la revendication 11 ou 12, **caractérisé en ce que**, en fonction des températures et/ou du débit volumique et/ou de la hauteur du stockage en vrac, le degré d'inclinaison d'une goulotte (4) ou la capacité de rotation du dispositif à goulotte (4d) sont contrôlés.

14. Procédé économique de production de charbon végétal à partir de biomasse, plus particulièrement de particules de biomasse, comme du bois, en lit mobile dans un réacteur en puits (1), traversé par de l'air à contre-courant du charbon végétal, d'une installation écologique réglable de manière autonome pour la production en continu de charbon végétal à partir de biomasse selon l'une des revendications 11 à 13, **caractérisé en ce que** le charbon végétal est réacheminé, dans une chambre, vers un dispositif de tri et de broyage pour un traitement ultérieur et les particules de charbon végétal sont classifiées en fonction de leur taille, de leur forme, du degré d'humidité et/ou du degré de carbonisation.

15. Procédé économique de production de charbon végétal à partir de biomasse, plus particulièrement de particules de biomasse, comme du bois, en lit mobile dans un réacteur en puits (1), traversé par de l'air à contre-courant du charbon végétal, d'une installation écologique réglable de manière autonome pour la production en continu de charbon végétal à partir de biomasse selon la revendication 14, **caractérisé en ce que**, en tant que dispositif de tri et de broyage, un broyeur à billes est utilisé pour l'élimination des impuretés et le broyage.
